(19) **Europäisches Patentamt**
**European Patent Office**
**Office européen des brevets**

(11) **EP 1 244 077 B1**

(12) **EUROPEAN PATENT SPECIFICATION**

(45) Date of publication and mention
of the grant of the patent:
**31.12.2008 Bulletin 2009/01**

(51) Int Cl.:
*G07F 7/10* (2006.01)          *G06K 19/073* (2006.01)

(21) Application number: **01120625.7**

(22) Date of filing: **29.08.2001**

(54) **Tamper resistant device**

Betrugssichere Vorrichtung

Dispositif résistant à la fraude

(84) Designated Contracting States:
**DE FR GB**

(30) Priority: **22.02.2001 JP 2001046250**

(43) Date of publication of application:
**25.09.2002 Bulletin 2002/39**

(73) Proprietor: **Hitachi, Ltd.**
**Tokyo 100-8280 (JP)**

(72) Inventors:
• **Endo, Takashi,**
**c/o Hitachi, Ltd.,**
**Intellectual Property Group**
**Chiyoda-ku,**
**Tokyo 100-8280 (JP)**
• **Kaminaga, Masahiro,**
**c/o Hitachi, Ltd.,**
**Intellectual Property Group**
**Chiyoda-ku,**
**Tokyo 100-8280 (JP)**

• **Watanabe, Takashi,**
**c/o Hitachi, Ltd.,**
**Intellectual Property Group**
**Chiyoda-ku,**
**Tokyo 100-8280 (JP)**
• **Ohki, Masaru,**
**c/o Hitachi, Ltd.,**
**Intellectual Property Group**
**Chiyoda-ku,**
**Tokyo 100-8280 (JP)**

(74) Representative: **Beetz & Partner**
**Patentanwälte**
**Steinsdorfstrasse 10**
**80538 München (DE)**

(56) References cited:
**EP-A1- 1 011 081          EP-A2- 0 981 223**
**WO-A2-01/61916          WO-A2-99/67919**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Background of the Invention

The present invention relates to an information-processing apparatus and, more particularly, a tamper resistant device for highly confidential IC cards.

An IC card is a device for holding personal information that must not be rewritten as one pleases, for encryption of data using a secret key treated as secret information and for decoding an encrypted text using the secret key. The IC card itself does not have a power supply. When the IC card is inserted into a reader and writer for the IC card, however, the IC card receives power from a power supply and becomes capable of carrying out operations. If the IC card is put in a state of being capable of carrying out operations, the IC card receives a command issued by the reader and writer and carries processing such as a transfer of data.

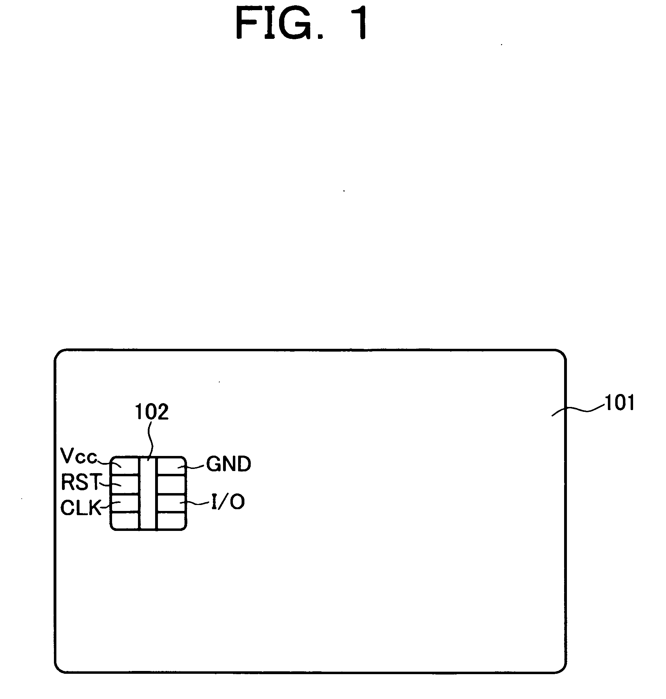

The basic concept of the IC card 101 is shown in Fig. 1. As shown in the figure, a IC-card chip 102 is mounted on the IC card 101. In general, the IC card 101 has a power-supply terminal Vcc, a ground terminal GND, a reset terminal RST, an input/output terminal I/O and a clock terminal CLK, which are each placed at a predetermined location as shown in the figure. The locations of these terminals are prescribed in ISO7816 specifications. Power is supplied by the power supply of the reader and writer and data is communicated with the reader and writer by way of these terminals. Communication using such an IC card is described in, among other documents, a reference authored by W. Rankl and W. Effing with a title of "Smart Card Handbook," published by John Wiley and Sons, 1997, pp. 41.

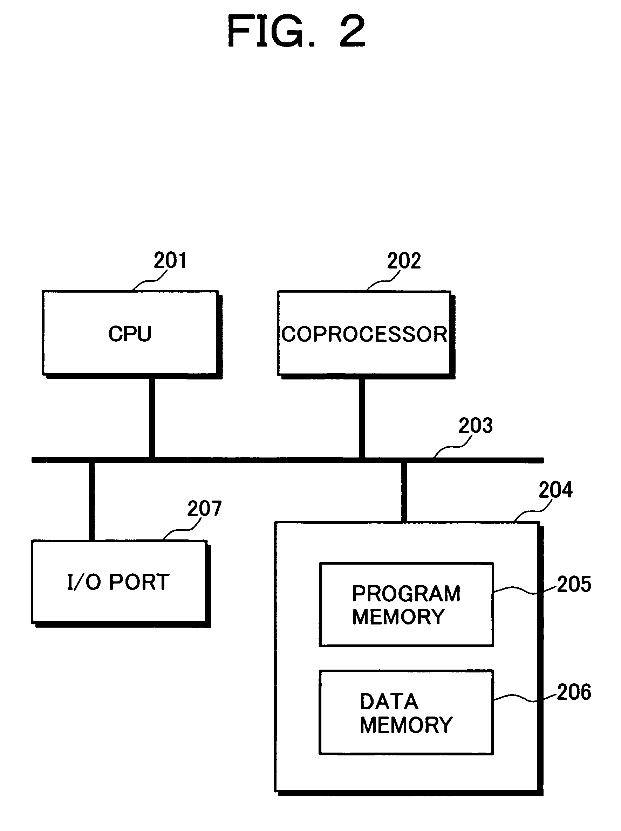

The configuration of the IC-card chip 102 mounted on the IC card 101 is basically same as that of an ordinary microcomputer. Fig. 2 is a block diagram showing the basic configuration of the IC-card chip 102 mounted on the IC card 101. As shown in Fig. 2, the IC-card chip 102 for the IC card 101 comprises a central processing unit (CPU) 201, a storage device 204, an input/output (I/O) port 207 and a coprocessor 202. The coprocessor 202 may or may not be included in the IC-card chip 102 in dependence on the system. The CPU 201 is a device for carrying out, among other operations, logic and arithmetic processing. The storage device 204 is a device used for storing programs and data. The I/O port 207 is device for carrying out communications with the reader and writer. The coprocessor 202 is a device for speeding up encryption itself or processing required for the encryption. In order to implement the functions of the coprocessor 202, the coprocessor 202 is provided with a special processing device for carrying out modulo operations of RSA encryption (RSA ciphering) and round processing of DES (Data Encryption Standard) encryption. There are many IC cards 101 including no coprocessor 201. A data bus 203 is used for connecting the CPU 201, the storage device 204, the I/O port 207 and the coprocessor 202, if any, to each other.

The storage device 204 includes a ROM (Read-Only Memory), a RAM (Random-Access Memory) and an EEPROM (Electric Erasable Programmable Read-Only Memory). The ROM is a memory not allowing information stored therein to be altered. The ROM is used mainly for storing a program. On the other hand, the RAM is a memory allowing data stored therein to be rewritten with a high degree of freedom. If power supplied by a power supply to the RAM is turned off, however, data stored in the RAM is lost. Thus, when the IC card 101 is removed from the reader and writer, data stored in the RAM is lost since power supplied by the power supply of the reader and writer to the RAM is cut off. The EEPROM is a memory for storing information that needs to be updated but must be retained even if the IC card 101 is pulled out from the reader and writer. In the case of a prepaid IC card 101, for example, information stored in the EEPROM includes the number of times the IC card 101 have been used so far. Such information needs to be updated each time the IC card 101 is used and needs to be retained in the EEPROM even if the IC card 101 is pulled out from the reader and writer.

The IC card 101 is used for storing programs and important information and carrying out encryption on the card. In the past, the difficulty of decoding data encrypted by the IC card 101 used to be considered to be the same as the difficulty of decoding an encryption algorithm. By observing a current consumed during an encryption process carried out by the IC card 101 and analyzing the waveform of the current, however, there is revealed a possibility to infer the encryption process' substance as well as secret key more easily than decoding an encryption algorithm. The consumed current can be observed by monitoring the waveform of a current supplied by the reader and writer. Details of this attack are described in, among other documents, the reference authored by W. Rankl and W. Effing with a title of "Smart Card Handbook," published by John Wiley and Sons. In this reference's section entitled '8.5.1.1 Passive Protective Mechanisms' on page 263, such a risk is described in particular. The consumed current can be used to decode an encryption algorithm more easily and infer the encryption process' substance as well as secret key for a reason described as follows. A CMOS composing the IC card 101 consumes a current when the output state changes from 1 to 0 or 0 to 1. In particular, when the value of data on the data bus 203 changes from 1 to 0 or 0 to 1, a large current generated by a bus driver flows through the data bus 203. Such a large current is caused by static capacitance values of wires and transistors connected to the wires. Thus, observation of the current consumed by the IC card 101 reveals the possibility to infer operations carried out by the IC card 101.

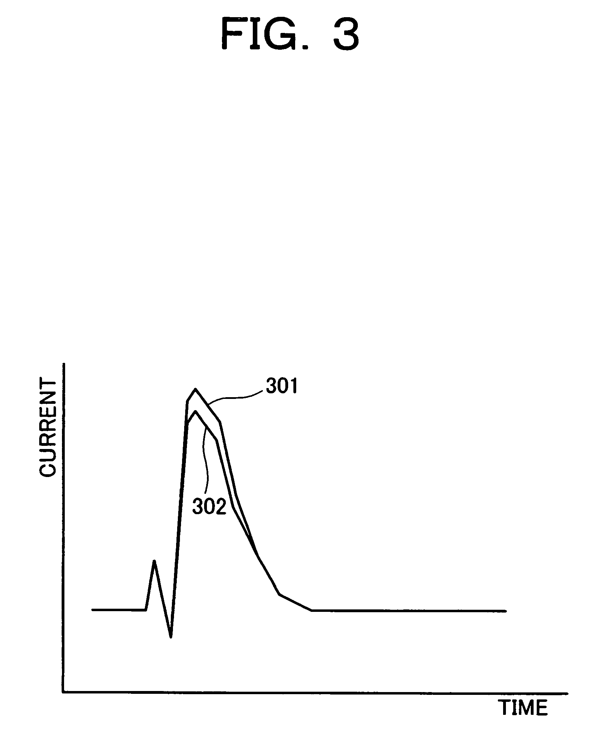

Fig. 3 is a diagram showing waveforms 301 and 302 of a current consumed by the IC-card chip 102 in 1 cycle.

The waveform 301 is different from the waveform 302 due to differences between pieces of data processed by the IC-card chip 102. The pieces of data include data flowing through the data bus 203 and data being processed by the CPU 201.

Consider a transfer of data through a 16-bit pre-charge bus. A pre-charge bus is a bus with all bits thereof set at 0 prior to a transfer of data. As an example, consider 2 pieces of hexadecimal data, namely, 88 and 11, appearing on the data bus 203. Even though these pieces of hexadecimal data have different values, they have the same number of bits each having the logic value of 1. That is to say, the number of bits each having the logic value of 1 in the hexadecimal data 88 is 2 and so is the number of bits each having the logic value of 1 in the hexadecimal data 11. The waveform of the current for transferring the hexadecimal data 88 is all but identical with the waveform of the current for transferring the hexadecimal data 11. This is because the number of bits changing from 0 to 1 for transferring the hexadecimal data 88 is equal to that for transferring the hexadecimal data 11. Thus, currents are consumed in the same way, resulting in all but identical current waveforms. All but identical waveforms are observed for pieces of data having the same number of bits each having the logic value of 1. Examples of pieces of data having the same number of bits each having the logic value of 1 are hexadecimal data 89 and hexadecimal data 19, which both have a 1-bit count of 3. However, even though the waveform of current consumption for the hexadecimal data 89 is all but identical with that for the hexadecimal data 19, the waveforms of current consumption for the hexadecimal data 89 and the hexadecimal data 19 are different from the waveforms of current consumption for the hexadecimal data 88 and the hexadecimal data 18, which both have a 1-bit count of 2. This is because, since 3 bits change from 0 to 1 in the transfer of the hexadecimal data 89 or the hexadecimal data 19, the magnitude of the current consumed during the transfer increases by an amount corresponding to 1 bit in comparison with the aforementioned transfer of the data having a 1-bit count of 2 as described above. There is observed a law stating that, the greater the 1-bit count of transferred data, the higher the waveform of current consumption for transferring the data. Thus, transferred data can be inferred from this law.

The following description explains how a difference is detected in the case of an actual instruction by giving the following left-shift instruction as an example.

```
logical_shift l R1        (Exp. 1)
```

The above instruction shifts the contents of a register R1 to the left, storing the most significant bit of the contents in a carry flag of a condition-code register. Since the most significant bit of the register R1 is transferred to the condition-code register through the internal bus 203, by comparing the waveform magnitudes of the current, it is quite within the bounds of possibility that the most significant bit can be determined to be 0 or 1. That is to say, if the register R1 contains important data, it is quite within the bounds of possibility that one bit of the data can be determined to be 0 or 1. In the case of the DES encryption processing, in particular, an operation to shift the secret key is carried out frequently. This shift operation results in a waveform that can be used for inferring the secret key, giving rise to the risk of having the secret key inferred.

The value of a bit of data being transferred can possibly be determined from the waveform of current consumption in processing carried out by the coprocessor 202. If imbalance caused by dependence of processing on a secret key exists, the imbalance can be found from the waveform of current consumption. It is thus quite within the bounds of possibility that the secret key can be inferred.

As disclosed in Japanese Patent Laid-open No. 2000-182012 (or USP application number 09/458018), as a technique to solve this problem, input data is first transformed by using data for disturbance. The transformed data is then processed. Finally, a result of the processing is subjected to inverse transformation using the data for disturbance in order to give an improvement wherein the degree of relationship between current consumption and data under processing is lowered.

A problem of the disclosed technique is explained by using the following array of instructions as an example:

```
logical_rotate l R1  (Exp. 2)
```

```
XOR R1 and R2        (Exp. 3)
```

The instruction of Exp. 2 logically rotates the contents of the register R1 to the left and stores a result of the logical rotation in the register R1. The instruction of Exp. 3 computes an exclusive logical sum of the register R1 and a register R2, storing the exclusive logical sum in the register R2. Since the instructions of Exps. 2 and 3 each manipulate processed data as it is, the magnitude of the waveform of current consumption changes in accordance with the value of the data, making it possible to infer the value of the data by observation of the waveform of current consumption.

In accordance with the technique disclosed in Japanese Patent Laid-open No. 2000-182012, in order to solve the problem described above, X1 and X2 selected at random are each used as data for disturbance. To be more specific, X1 and X2 are used to transform the contents of the registers R1 and R2 by execution of instructions of Exps. 4 and 5 respectively. The transformed contents are then processed by execution of instructions of Exps. 6 and 7, and a result of the processing is stored in the register R2. Instructions of Exps. 8 and 9 are adopted by in preparation for inverse transformation. The result of processing of the transformed contents which is stored in the register R2 is subjected to inverse transformation by execution of an instruction of Exp. 10, and a result of the inverse transformation is stored in the register R2. The result of the inverse transformation is the same as the result obtained by execution of the instructions of Exps. 2 and 3 described above.

```
XOR              X1  R1       (Exp. 4)


XOR              X2  R2       (Exp. 5)


logical_rotate   R1           (Exp. 6)


XOR              R1  R2       (Exp. 7)


logical_rotate   X1           (Exp. 8)

XOR              X1  X2       (Exp. 9)


XOR              X2  R2       (Exp. 10)
```

The problem of the technique disclosed in Japanese Patent Laid-open No. 2000-182012 is that data for disturbance is used in such a way that the hamming weight of processed data cannot be observed directly. The hamming weight of data is the number of bits each having the logic value of 1 in the data with the data expressed in a binary format. At a certain probability, however, the hamming weight of data for disturbance has a special value of 0 or 8. If the hamming weight of data for disturbance has such a special value, the hamming weight of processed data can be observed directly. The present invention prevents the hamming weight of data for disturbance from becoming equal to 0 or 8.

To put it concretely, in the execution of instructions of Exps. 4 and 5, differences in current consumption which are dependent on the values of the disturbance data X1 and X2 can be observed, making it possible to infer the hamming weights of X1 and X2. In the case of a processor wherein the current consumption is proportional to the hamming weight of the disturbance data X1 or X2, for example, it is possible to detect a case in which the hamming weight is 0. By the same token, also in the case of current consumption proportional to the number of bits inverted in XOR (exclusive logical or) processing, the number of inverted bits is equal to the hamming weight of the disturbance data X1 or X2. Since a hamming weight of 0 is the hamming weight of only 0 data, by observation of current consumption, processed data including 0 data for disturbance, that is measured data only, can be identified. To put it concretely, in the transforming technique described above, the waveform of current consumption observed during the execution of the instruction of Exp. 6 or 7 is the same as the waveform of current consumption observed during the execution of the instruction of Exp. 2 or 3 respectively.

EP 1 011 081 A1 discloses an information processing equipment in which the relation between data processing contents in an IC card chip and the current consumption of the IC card chip is reduced. Prior to executing an input data process of the IC card chip, the input data is transformed to thereby reduce the relation between the processed data and the current consumption. After the transforming process, the transformed data is untransformed to obtain a correct process result.

WO 99/67919 discloses methods and apparatuses for improving data encryption standards and other cryptographic protocols against external monitoring attacks by reducing the amount of useful information leaked during processing. Two 56-bit keys and two 64-bit plaintext messages are used, each associated with a permutation such that data derived therefrom equal the standard key and the standard message. During operation of the device, the tables are preferably periodically updated by introducing fresh entropy into the tables faster than information leaks out, so that attackers will not be able to obtain the table contents by analysis of measurements. The technique is implementable in cryptographic smartcards, tamper resistant chips, and secure processing systems of all kinds.

EP 0 981 223 A2 discloses an encryption and decryption apparatus in which a pair of a pattern of a mask and a mask pattern obtained by bit inversion of the mask is prepared for each round function in a data scrambler. Every time encryption is to be performed, one mask pattern of the pair is randomly selected by a switch, and an exclusive OR of an input to an S-box and the selected mask pattern is calculated. In addition, an exclusive OR of an output from the S-box and bits of inverse permutation of the mask is calculated. The exclusive ORs are calculated in advance and stored as a table in the S-box. Furthermore, an exclusive OR of the output from each round function and a mask is calculated and concealed. The influence of the mask is removed by calculating the exclusive OR with the mask again on the next round.

Summary of the Invention

It is an object of the present invention to provide a tamper-resistant information-processing apparatus as defined in independent claim 1 for assuring high security of devices such as a card member.

A technical problem to be solved by the present invention is how to lower the degree of relationship between data under processing and current consumption in a card member such as a chip for an IC card. If the degree of relationship between data under processing and current consumption in a chip for an IC card can be lowered, it will be difficult to infer the data under processing and a secret key in such a chip by observation of the waveform of current consumption. That is to say, the present invention provides high security to devices such as a card member.

The present invention is focused on a technique to lower the degree of relationship between data under processing and current consumption in a card member such as a chip for an IC card. In accordance with this technique, data to be transformed is first transformed by using data for disturbance. The transformed data is then processed. Finally, a result of the processing is subjected to inverse transformation using the data for disturbance to obtain a correct processing result. In addition, the disturbance data used in transformation of data to be processed in order to lower the degree of relationship between data under processing and current consumption is generated in such a way that the probability of the hamming weight's always becoming a constant value, an all but constant value and a value indicating 0s or 1s in all bits of the data for disturbance in the binary expression of the data for disturbance is 0.5 or a value close to 0.5. Furthermore, the disturbance data used in inverse transformation of a result of processing in order to lower the degree of relationship between data under processing and current consumption is generated in such a way that the probability of the hamming weight's always becoming a constant value, an all but constant value and a value indicating 0s or 1s in all bits of the data for disturbance in the binary expression of the data for disturbance is 0.5 or a value close to 0.5. In this way, the degree of relationship between current consumption of processing using the data for disturbance and the data for disturbance is lowered. As a result, it is difficult to launch an attack to infer the data for disturbance from current consumption, infer transformed data from the current consumption and infer original data from the inferred data for disturbance and the inferred transformed data. It should be noted that, in this case, the hamming weight of data is the number of bits each having the logic value of 1 in the binary expression of the data as described earlier.

In addition, as a technique of generating data for disturbance, a plurality of values usable as the data for disturbance is generated and stored in a memory in advance. In this way, it is possible to lower the degree of relationship between current consumption of processing to generate the data for disturbance and the data for disturbance at the time the values are read out from the memory. As a result, it is difficult to infer the data for disturbance.

Brief Description of the Drawings

Fig. 1 is a diagram showing a typical hardware configuration of an IC card;
Fig. 2 is a diagram showing a typical hardware configuration of a chip for the IC card;
Fig. 3 is a diagram showing a typical waveform of current consumption;
Fig. 4 is a diagram showing a data flow in a typical procedure of original-data transformation using a piece of data for disturbance;

Fig. 5 is a diagram showing a data flow in a typical procedure for generating pieces of disturbance data and selecting one of the generated pieces of disturbance data to be used in transformation of original data;

Fig. 6 is a diagram showing a data flow in a technique to generate random numbers having constant uniform hamming weights;

Fig. 7 is a flowchart representing a typical technique to generate random numbers having constant uniform hamming weights;

Fig. 8 is a flowchart representing a technique to create a table of values having constant uniform hamming weights;

Fig. 9 is a flowchart representing a technique to create a table of values which have constant uniform hamming weights even after processing of data for disturbance;

Fig. 10 is a flowchart representing a typical technique to generate random numbers each having a constant hamming weight;

Fig. 11 is a diagram showing a data flow in a typical technique to generate data for disturbance and processed data for disturbance;

Fig. 12 is a diagram showing a data flow in another typical technique to generate data for disturbance and processed data for disturbance;

Fig. 13 is a diagram showing a data flow in a typical technique to process input data in accordance with a transformed table by transformation using 2 different pieces of disturbance data;

Fig. 14 is a diagram showing a data flow in a typical technique to generate data for disturbance and a transformed table;

Fig. 15 is a diagram showing a data flow in another typical technique to generate data for disturbance and a transformed table;

Fig. 16 is a diagram showing a data flow in a further typical technique to generate data for disturbance and a transformed table;

Fig. 17 is a diagram showing a data flow in a typical technique to process input data in accordance with a transformed table by transformation using 2 different pieces of disturbance data and by adoption of a method to process transformed data;

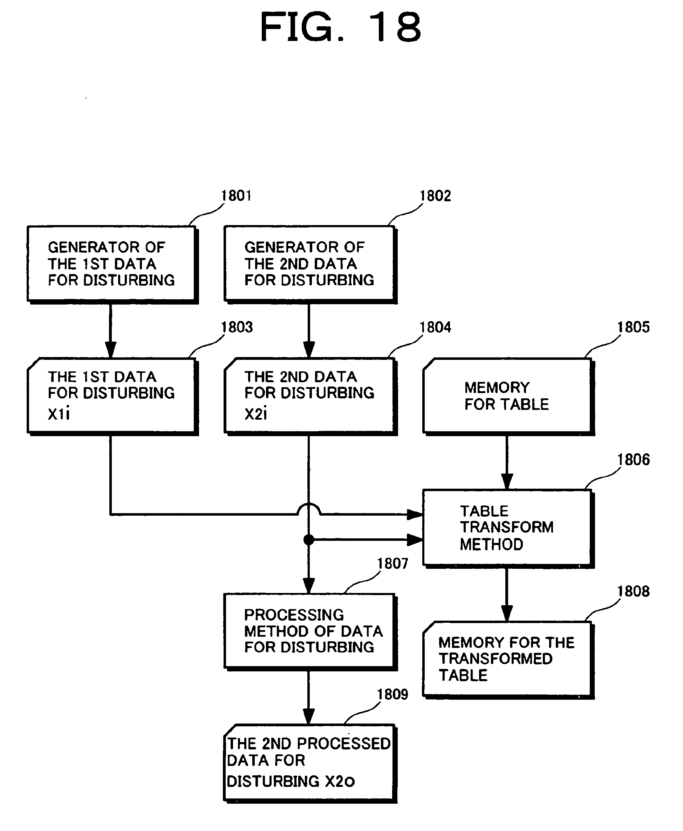

Fig. 18 is a diagram showing a data flow in a typical technique to generate data for disturbance and a transformed table;

Fig. 19 is a diagram showing a data flow in another typical technique to generate data for disturbance and a transformed table;

Fig. 20 is a diagram showing a data flow in a further typical technique to generate data for disturbance and a transformed table;

Fig. 21 is a diagram showing a data flow in a still further typical technique to generate data for disturbance and a transformed table;

Fig. 22 is a diagram showing a data flow in a still further typical technique to generate data for disturbance and a transformed table;

Fig. 23 is a diagram showing an input-data process comprising data transformation, data inverse transformation, data processing and a table-lookup operation which are each carried out twice by using 2 pieces of disturbance data;

Fig. 24 is a diagram showing a data flow in a typical technique to process input data in accordance with a transformed table by transformations using 4 different pieces of disturbance data and by adoption of a method to process transformed data;

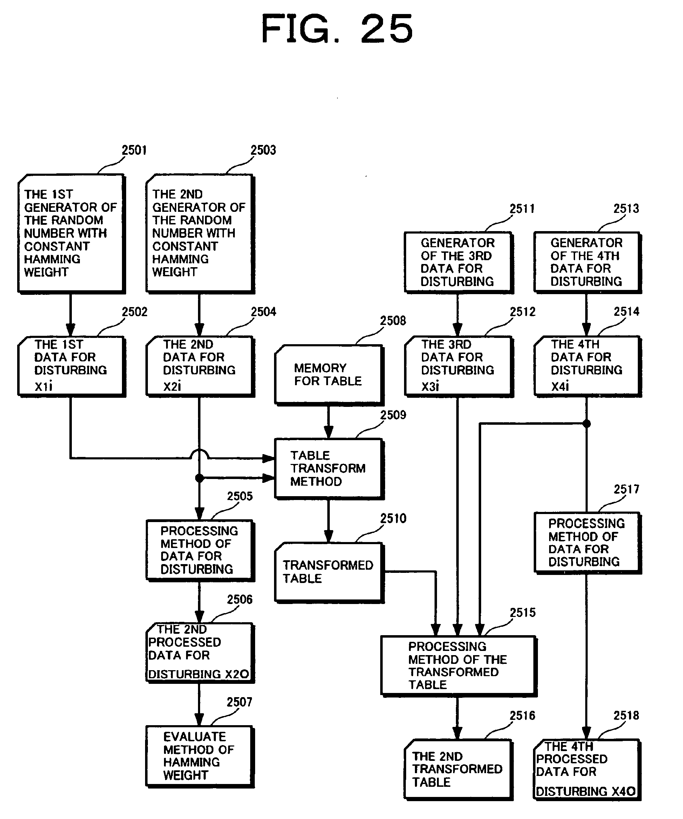

Fig. 25 is a diagram showing a data flow in a typical technique to generate data for disturbance and a transformed table;

Fig. 26 is a diagram showing a data flow in another typical technique to generate data for disturbance and a transformed table;

Fig. 27 is a diagram showing a data flow in a further typical technique to generate data for disturbance and a transformed table;

Fig. 28 is a diagram showing a data flow in a still further typical technique to generate data for disturbance and a transformed table;

Fig. 29 is a diagram showing a data flow in a typical technique to generate DES-processing SBOX disturbance data and generate a transformed SBOX;

Fig. 30 is a diagram showing a data flow in a typical technique to generate DES-processing plain-text disturbance data;

Fig. 31 is a diagram showing a data flow in another typical technique to generate DES-processing plain-text disturbance data;

Fig. 32 is a diagram showing a data flow in a typical technique to transform a plain text;

Fig. 33 is a diagram showing a data flow in a typical technique to process a secret key;

Fig. 34 is a diagram showing a data flow in a typical DES 1st, 5th, 9th or 13th-round processing technique;

Fig. 35 is a diagram showing a data flow in a typical DES 2nd, 6th, 10th or 14th-round processing technique;

Fig. 36 is a diagram showing a data flow in a typical DES 3rd, 7th, 11th and 15th-round processing technique;

Fig. 37 is a diagram showing a data flow in a typical DES 4th, 8th or 12th-round processing technique;

Fig. 38 is a diagram showing a data flow in a typical DES 16th-round processing technique;

Fig. 39 is a diagram showing a data flow in a DES final inverse transformation technique;

Fig. 40 is a diagram showing a data flow in a typical DES 1st, 5th, 9th or 13th-round processing technique;

Fig. 41 is a diagram showing a data flow in a typical DES 2nd, 6th, 10th or 14th-round processing technique;

Fig. 42 is a diagram showing a data flow in a typical DES 3rd, 7th, 11th and 15th-round processing technique;

Fig. 43 is a diagram showing a data flow in a typical DES 4th, 8th or 12th-round processing technique;

Fig. 44 is a diagram showing a data flow in a typical DES 16th-round processing technique;

Fig. 45 is a flowchart representing a typical SBOX access technique;

Fig. 46 is a diagram showing a typical SBOX table;

Fig. 47 is a flowchart representing an SBOX-table transform method;

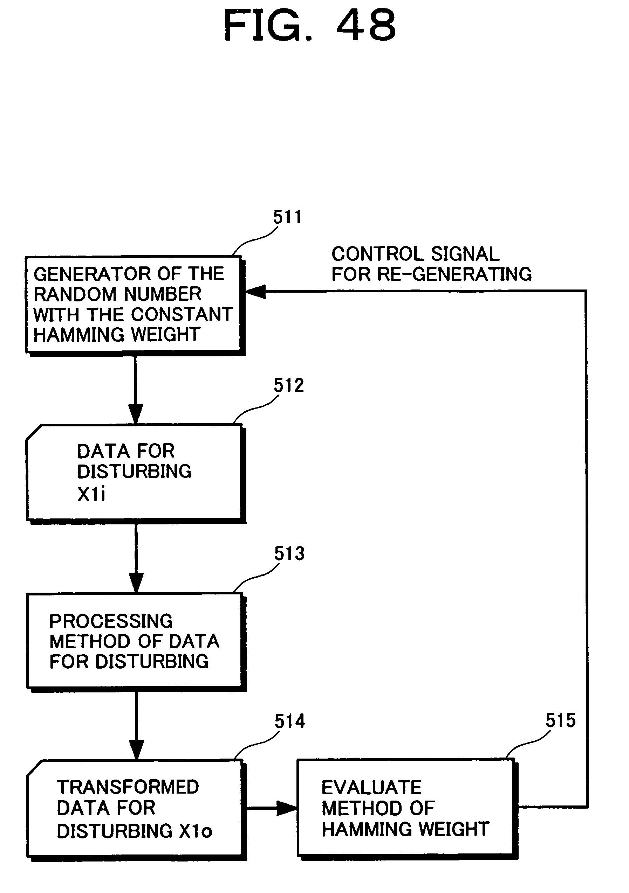

Fig. 48 is a diagram showing a data flow in a typical technique of generating disturbance data with a constant hamming weight and generating processed disturbance data also with a constant hamming weight;

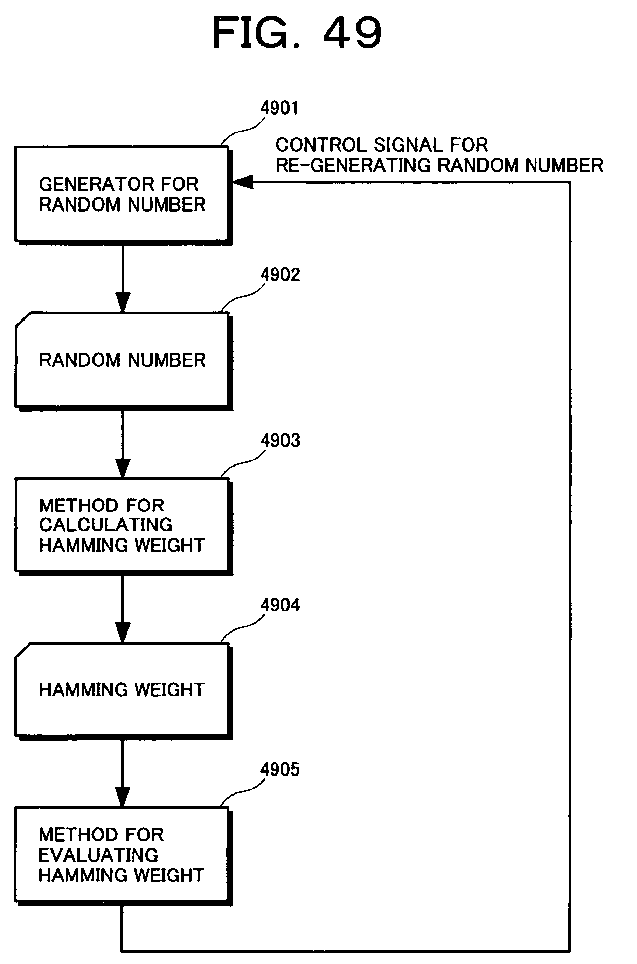

Fig. 49 is a diagram showing a data flow in a typical technique of generating random numbers each having a uniform constant hamming weight;

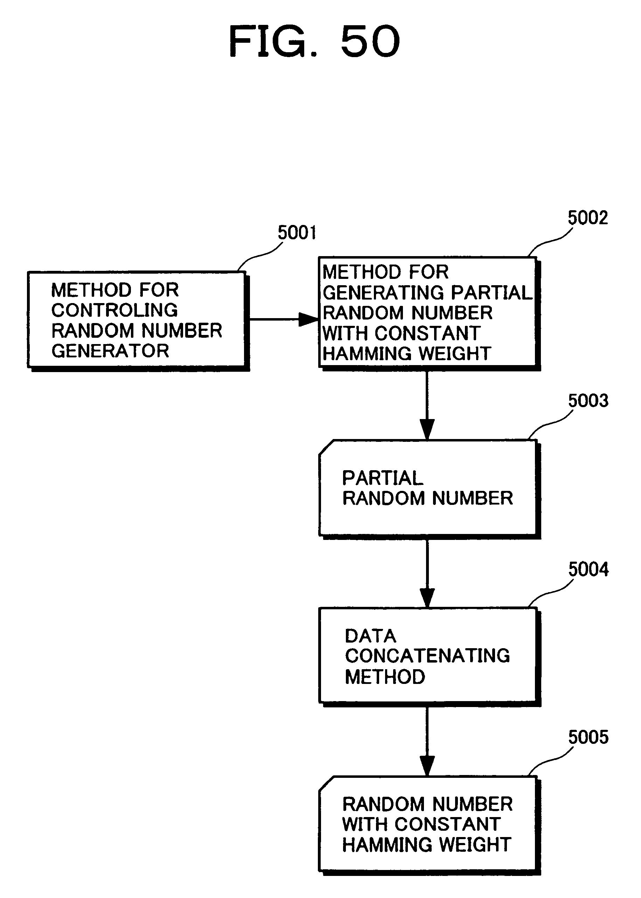

Fig. 50 is a diagram showing a data flow in another typical technique of generating random numbers each having a uniform constant hamming weight;

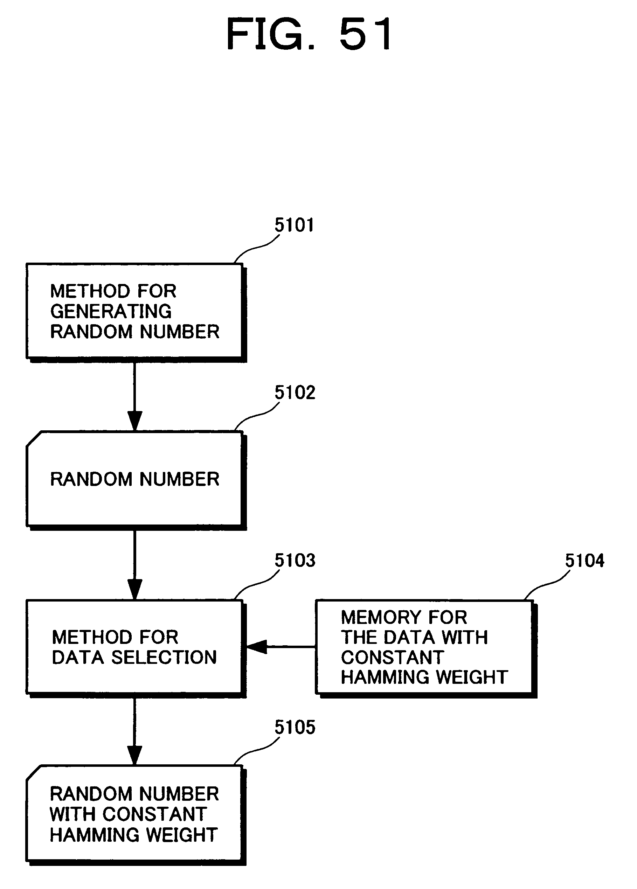

Fig. 51 is a diagram showing a data flow in a further typical technique of generating random numbers each having a uniform constant hamming weight;

Fig. 52 is a diagram showing a data flow in a typical technique to generate DES-processing SBOX disturbance data and generate a transformed SBOX;

Fig. 53 is a diagram showing a data flow in a typical technique to generate DES-processing disturbance data;

Fig. 54 is a diagram showing a data flow in a typical technique to transform DES-processing intermediate data;

Fig. 55 is a diagram showing a typical table for the technique represented by the data flow shown in Fig. 12;

Fig. 56 is a diagram showing typical first disturbance data stored in a first-disturbance-data storage memory (1501) and typical second disturbance data stored in a second-disturbance-data storage memory (1502);

Fig. 57 is a diagram showing a typical table stored in a table storage memory (1507); and

Fig. 58 is a diagram showing a table containing first data for disturbance, second data for disturbance and a transformed table.

## 5. Preferred Embodiments

Next, some preferred embodiments are explained by referring to diagrams.

Fig. 1 is a diagram showing an external view of an IC card 101 in a simple and plain manner. ISO7816 specifications prescribe, among others, the size of the IC card 101, the location of a IC-card chip 102 on the IC card 101, the number of contacts on the IC-card chip 102 and the assignment of the contacts.

Fig. 2 is a diagram showing the internal configuration of the IC-card chip 102. The configuration of the IC-card chip 102 has been described before. In the present invention, transformation is added to data processed by a program 205. It is thus difficult to infer the data from the waveform of a current consumed by the hardware of the IC-card chip 102 mounted on the IC card 101 during the processing.

As has been explained in the paragraph with a title of "Background of the Invention," if data is processed as it is, the data can be inferred by measuring current consumption. In accordance with a prior technology, data to be processed is first transformed by using data for disturbance. The transformed data is then processed. Finally, a result of the processing is subjected to inverse transformation by using the data for disturbance or by using a result of processing the data for disturbance to produce a value equal to data which will also be obtained as a result of processing the original data. In this way, the degree of correlation between the magnitude of a current consumed during the processing and the original data is lowered, making it difficult to infer the original data by measuring the current consumption. In the prior technology, however, there is no limitation imposed on the data for disturbance. Thus, by monitoring a current consumed during processing of the data for disturbance, the data for disturbance can be inferred. Then, by classifying the inferred data, the attack cited before can be launched.

As an example, assume that an XOR operation is used as a function for transformation. In this case, if the data for disturbance has a specific pattern such as all bits having the logic value of 0 or 1, observation of power consumption allows the original data to be identified. In addition, even if the identification rate is not 100%, by computing an average of many measured samples, an identification error can be prevented from affecting the inference of the original data.

It should be noted that, the typical processing described above can be exemplified by operations such as a rotate, a shift, a bit permutation and bit permutation with expansion.

For such processing, data for disturbance is generated in such a way that the hamming weight of the data for disturbance is equal to half the bit count of the data for disturbance, and the appearance probability of the logic value 0 or 1 at each bit position of the data for disturbance is set at 0.5. As a result, it is no longer easy to identify the data for disturbance from the waveform of a current consumed during processing of the data for disturbance. It should be noted that the probability of appearance does not to be strictly 0.5. That is to say, the probability may be smaller or greater than 0.5. However, an appearance probability of 0.5 is desirable. The closer the probability of appearance to 0.5, the more desirable the probability.

Let notations D1, f and D2 denote input data, a processing function and output data respectively. In this case, the following equation holds true.

$$D2 = f(D1) \qquad (Eq.\ 11)$$

By measuring the waveform of a current consumed during the processing function f, the input data D1 can be inferred. In order to solve this problem, disturbance data X1i is introduced. Let notation h denote a transformation function for transforming the input data D1 and notation g denote an inverse-transformation function serving as a reversed function of the transformation function h. If Eq. 12 or 13 holds true, then the value of the expression on the right-side of Eq. 12 or 13 can be computed to find the output data D2 represented by Eq. 11 instead of computing D2 in accordance with Eq. 11.

Determination of whether to use Eq. 12 or 13 depends on the properties of the processing function f and the transform function h. A typical case in which the processing function f, the transform function h and the inverse-transformation function g satisfy Eq. 12 is shown by Eqs. 14, 15 and 16. As shown in Eq. 15, the processing function f is a rotate operation. It should be noted that, besides a rotate operation, the processing function f can be other processing such as a shift operation or a bit-permutation operation. On the other hand, the transform function h is an XOR operation as shown by Eq. 14. In this case, the inverse-transformation function g is also an XOR operation as shown by Eq. 16.

In a typical case where the processing function f and the transform function h satisfy Eq. 13, the processing function f is an addition or subtraction operation and the transform function h is also an addition or subtraction operation. In another typical case where the processing function f and the transform function h satisfy Eq. 13, the processing function f is a multiplication or division operation and the transform function h is also a multiplication or division operation.

Also in the processing represented by Eq. 12 or 13, by measuring the waveform of a current for the processing function f, the value of h (D1, X1i) can be inferred. If the value of the disturbance data X1i cannot be inferred, however, the value of the input data D1 cannot be restored either.

$$F(D1) = g(f(h(D1, X1i)), f(X1i)) \qquad (12)$$

$$F(D1) = g(f(h(D1, X1i)), X1i) \qquad (13)$$

$$h(x, y) = x\ XOR\ y \qquad (14)$$

$$f(x) = rotate\_right(x) \qquad (15)$$

$$g(x, y) = x\ XOR\ y \qquad (16)$$

If the disturbance data X1i is generated to be a specific value C which can be recognized by external observation and the transform function h is known, however, the input data D1 can be restored by computation of the value of the inverse-transformation function g of the transform function h from the value of h (D1, C). A typical specific value C which can be recognized by external observation is a value consisting of all bits of 0 or all bits of 1. This is because data with a hamming weight of 0 is none other than 0 and, likewise, a value providing a hamming weight equal to the hamming weight for all bits of 1 is nothing but all bits of 1. If the disturbance data X1i is recognized to be 0 and the transform function is an XOR operation, the value of h (D1, 0) is equal to the input data D1. In the case of data's hamming weight equal to half the bit count of the data, the data can have a greatest variety of values.

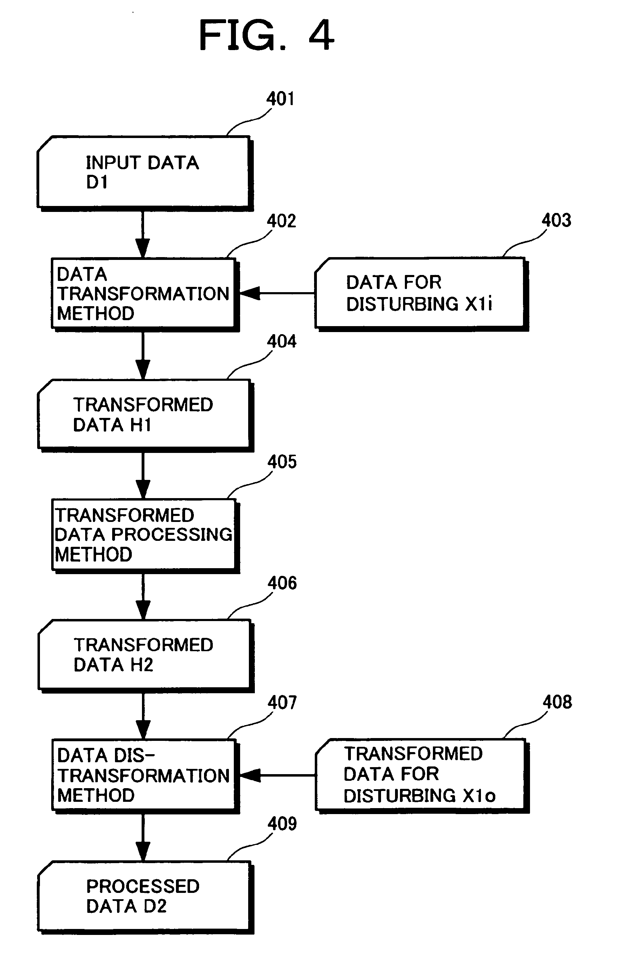

Fig. 4 is a diagram showing an embodiment implementing a data flow using a piece of data for disturbance.

The embodiment is characterized in that, by determining the hamming weight of the data for disturbance, that is, by imposing a restriction on the hamming weight of the data for disturbance, the data for disturbance can be prevented from being inferred due to the fact that the data for disturbance is generated to be all bits of 0 or 1. A data transform method 402 is used to transform D1 input data 401 by using X1i disturbance data 403 to generate H1 transformed data 404. A transformed-data-processing method 405 is used to process the H1 transformed data 404 to produce H2 processed transformed data 406. A data inverse-transformation method 407 is used to carry out inverse transformation on the H2 processed transformed data 406 by using X1o processed disturbance data 408 to produce D2 processed data 409. The X1i disturbance data 403 and the X1o processed disturbance data 408 each have a constant hamming weight.

There are several techniques for generating the X1i disturbance data 403 and the X1o processed disturbance data 408.

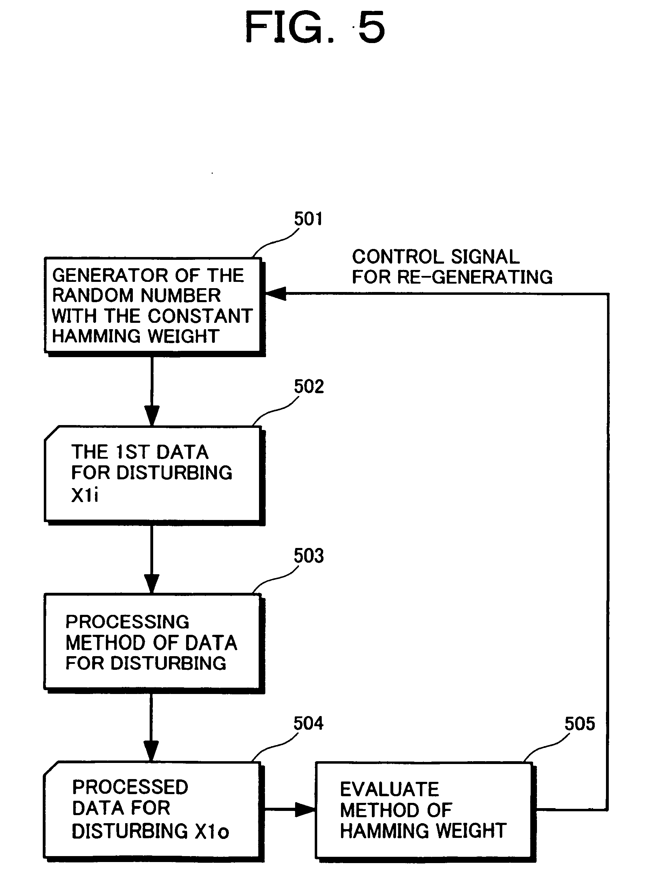

Fig. 5 is a diagram showing a data flow in a typical procedure for generating X1i disturbance data 502 and X1o processed disturbance data 504 which each have a constant hamming weight. A constant-hamming-weight-random-number generator 501 generates random numbers having uniform and constant hamming weights. A generated random number used as the first X1i disturbance data 502 is processed by using a disturbance-data-processing method 503 to produce the X1o processed disturbance data 504. A hamming-weight evaluation method 505 is used for evaluating the hamming weight of the X1o processed disturbance data 504. If the hamming weight is found different from a predetermined value, a reproduction control signal is supplied to the constant-hamming-weight-random-number generator 501 to regenerate another random number to be used as the X1i disturbance data 502. In many cases, the hamming weight is evaluated by a CPU. The role of the constant-hamming-weight-random-number generator 501 is also played by a CPU or a generator.

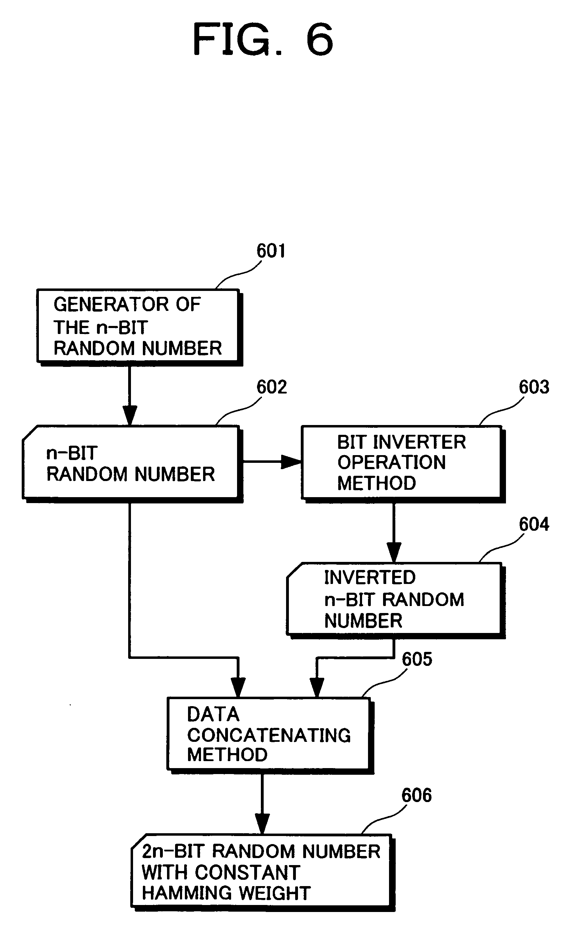

There are several techniques for generating random numbers having uniform and constant hamming weights. Fig. 6 is a diagram showing a data flow of a first embodiment implementing a technique to generate random numbers having constant uniform hamming weights. In this embodiment, the number of bits in a random number to be generated is 2n. As shown in the figure, first of all, an n-bit-random-number generator 601 generates an n-bit random number 602. The n-bit-random-number generator 601 may generate a pseudo random number or a true random number which is selected from results of measurement of a physical phenomenon. Then, a bit-inverting operation method 603 is used for inverting the generated n-bit random number 602 to produce an inverted n-bit random number 604. Subsequently, a data concatenation method 605 is used for concatenating the n-bit random number 602 and the inverted n-bit random number 604 to generate a constant-hamming-weight 2n-bit random number 606. This is because, if the number of bits each having the logic value 1 in the n-bit random number 602 is n1 and the number of bits each having the logic value 0 in the n-bit random number 602 is n2, then the following equation holds true:

$$n1 + n2 = n \qquad (Eq. \ 17)$$

Since the inverted n-bit random number 604 is obtained as a result of bit inversion of the n-bit random number 602, the number of bits each having the logic value 1 in the inverted n-bit random number 604 is n2 and the number of bits each having the logic value 0 in the inverted n-bit random number 604 is n1. Thus, the hamming weight of the constant-hamming-weight 2n-bit random number 606 obtained as a result of concatenation of the n-bit random number 602 and the inverted n-bit random number 604 is (nl + n2) which is always equal to the constant value n as obvious from Eq. 17.

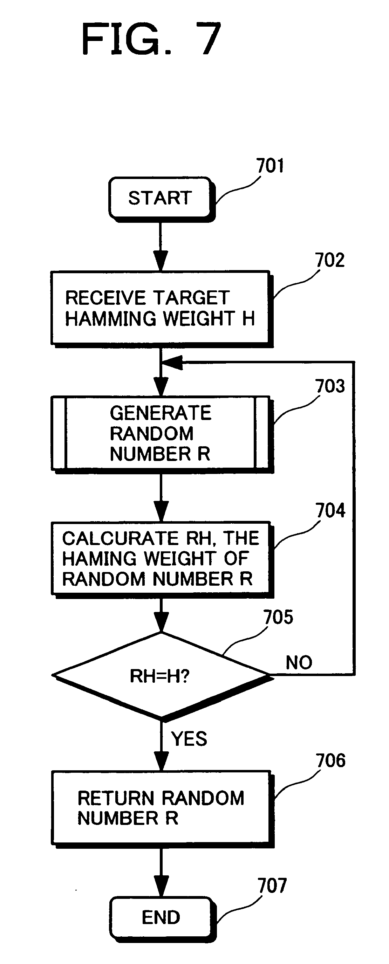

Fig. 7 is a flowchart representing a second embodiment implementing a technique to generate random numbers having constant uniform hamming weights. As shown in the figure, the random-number generation represented by the flowchart begins with a step 702 at which a target hamming weight H is input. Then, at the next step 703, a random number R is generated. Subsequently, at the next step 704, the hamming weight RH of the generated random number R is computed. The flow of the random-number generation then goes on to a step 705 to form a judgment as to whether or not the hamming weight RH of the generated random number R is equal to the target hamming weight H. If the hamming weight RH of the generated random number R is not equal to the target hamming weight H, the flow of the random-number generation goes back to the step 703 at which another random number R is generated. If the hamming weight RH of the generated random number R is equal to the target hamming weight H, on the other hand, the flow of the random-number generation goes on to a step 706 at which the random number R is passed to a calling routine as a return value. Then, at the next step 707, the generation of random numbers is ended.

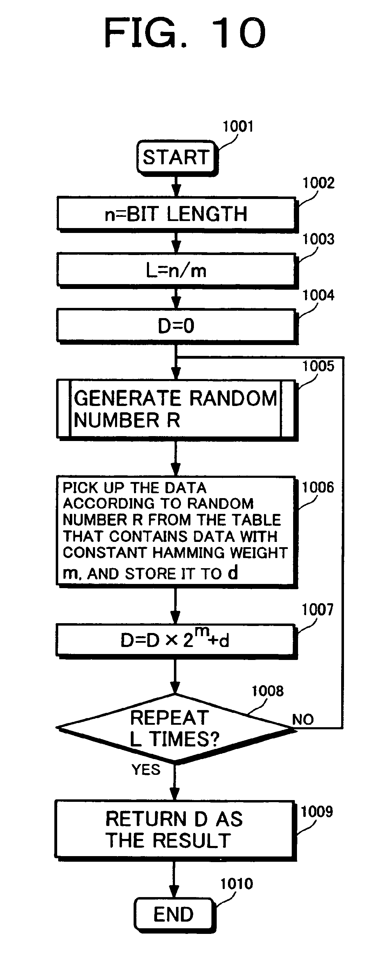

Fig. 10 is a flowchart representing a third embodiment implementing a technique to generate random numbers having constant uniform hamming weights. First of all, pieces of m-bit data having uniform constant hamming weights are collected in a table. The embodiment generates only random numbers that have uniform constant hamming weights and each have a bit count equal to a multiple of m. As shown in the figure, the random-number generation represented by the flowchart begins with a step 1002 at which the bit count of a random number to be generated is set at n. Then, at the next step 1003, a result of division of n by m is substituted for L. In the basic flow of the random-number generation, L m-bit random numbers having uniform constant hamming weights are generated and concatenated to generate an n-bit random number having a constant hamming weight. Subsequently, at the next step 1004, a variable D for accommodating the n-bit random number being generated to have a constant hamming weight is initialized at 0. Then, at the next step 1005, a random number R is generated. Subsequently, at the next step 1006, a piece of m-bit data having a constant hamming weight is fetched from the table cited above. The piece of m-bit data fetched from the table is indicated by an index having a value equal to the random number R. The piece of m-bit data fetched from the table is stored in a variable d. Subsequently, at the next step 1007, the variable D is shifted to the left by m bits and then the variable d is added to the variable D. The pieces of processing from the step 1005 to generate a random number R to the step 1007 to add the variable d to the variable D shifted to the left by m bits are carried out repeatedly L times. A step 1008 is adopted to form a judgment as to whether or not the pieces of processing have been carried out repeatedly L times. If the pieces of processing have been carried out repeatedly L times, the flow of the random-number generation goes on to a step 1009 at which the variable D is passed to a calling routine as a return value.

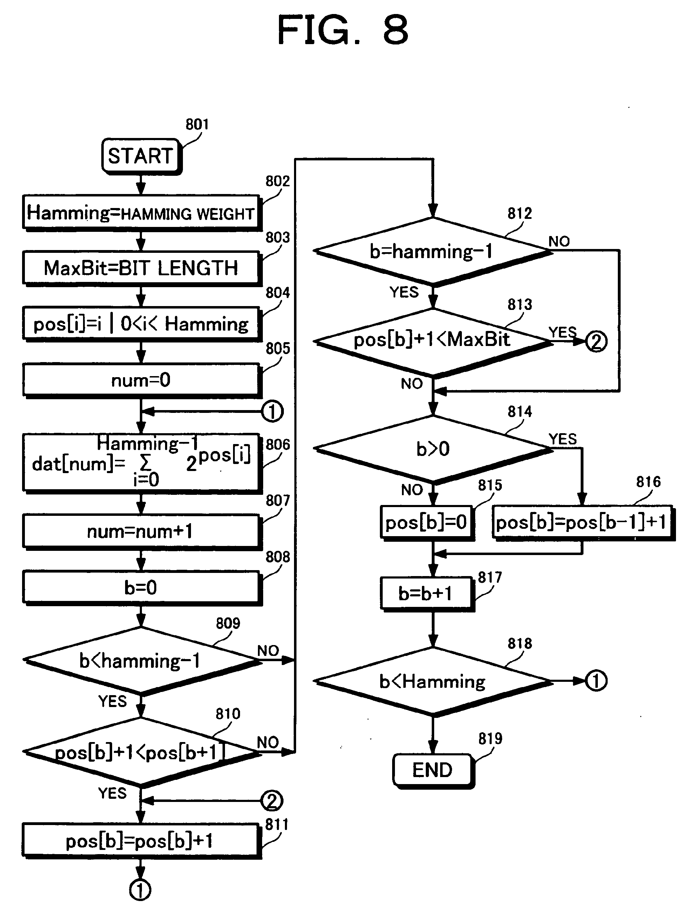

Fig. 8 is a flowchart representing an embodiment implementing a technique to create a list of bit arrays having constant uniform hamming weights. In the figure, notation MaxBit denotes a predetermined bit count of each of the values and notation Hamming denotes the constant uniform hamming weight. Notation dat denotes a list of bit arrays which is being created. The size of the bit-array list dat, that is, the number of bit arrays on the list, is (the factorial of MaxBit)/{(the factorial of Hamming) ^2}. It should be noted that each of bit arrays on the bit-array list dat is a piece of data with a constant hamming weight. In the case of a bit count MaxBit of 8 and a hamming weight Hamming of 4, for example, the size of the bit-array list dat is (8!)/{(4!) ^2} = 70. In accordance with a concept underlying this technique, first of all, a first bit array with a bit count of MaxBit and a hamming weight (the number of bits each having the logic value of 1) of Hamming is prepared. Then, new bit arrays are prepared by moving each bit with the logic value of 1 in the first bit array to a position occupied by a bit with the logic value of 0 in the first bit array. In this way, all possible bit arrays each with a bit count of MaxBit and a hamming weight of Hamming can be found.

As shown in Fig. 8, the creation of a list begins with a step 802 at which the hamming weight is stored in a variable Hamming. Then, at the next step 803, the bit count is stored in a variable MaxBit. Subsequently, at the next step 804, an array pos [j] where j = 0 to (Hamming -1) is initialized at values indicating the positions of bits in a bit array which each have a logic value of 1. A bit position can be any value in the range 0 to (MaxBit -1). Then, at the next step 805, an index num pointing to a slot in the bit-array list dat is initialized at 0. The dat bit-array list's slot pointed to by the index num will be used for storing a computed bit array at the next step 806. In addition, an index b used as the subscript of the array pos [b] in the following processing is initialized at -1. Subsequently, at the step 806, the bit array is computed and stored in the dat bit-array list' slot pointed to by the index num. Then, at the next step 807, the index num is incremented by 1. Subsequently, at the next step 808, the index b used as the subscript of the array pos [b] is incremented by 1. The flow of the list creation then goes on to a step 809 to form a judgment as to whether or not the subscript b has not reached (Hamming -1), which is a subscript value corresponding to the bit array's highest-order bit having the logic value of 1. That is to say, the judgment is formed to determine whether or not pos [b] does not have the value indicating the position of the highest-order bit having the logic value of 1 in the bit array. If the subscript b has reached (Hamming -1), the flow of the list creation goes on to a step 812. If the subscript b has not reached (Hamming -1), on the other hand, the flow of the list creation goes on to a step 810. At the next step 810, the bit array's higher-order bit position, that is, (pos [b] + 1), is checked to form a judgment as to whether or not the bit at the higher-order position or the bit at (pos [b] + 1) already has the logic value of 1. If the bit at the bit array's higher-order position already has the logic value of 1, the flow of the list creation goes on to the step 812. If the bit at the bit array's higher-order position or the bit at (pos [b] + 1) has the logic value of 0, on the other hand, the flow of the list creation goes on to a step 811. At the step 811, the logic value of 1 in the bit array is shifted from the bit position p [b] to the bit position (p [b] + 1) and the flow of the list creation then goes back to the step 806 to create another bit array.

In the following description, a current bit position p [b] means a bit position from which the logic value of 1 is to be shifted to the bit array's other bit position having a logic value of 0. At the step 812, the subscript b is checked to form a judgment as to whether the bit at the current bit position p [b] is the bit array's highest-order bit having the logic value of 1, that is the bit at the bit position (Hamming -1). If the bit at the current bit position p [b] is the bit array's highest-order bit having the logic value of 1, the flow of the list creation goes on to a step 813. If the bit at the current bit position p [b] is not the bit array's highest-order bit having the logic value of 1, on the other hand, the flow of the list creation goes on to a step 814.

At the step 813, the current bit position p [b] is checked to form a judgment as to whether or not the current bit position p [b] is the highest-order bit position in the bit array, that is, whether or not the logic value of 1 can no longer be shifted from the current bit position p [b] to the next higher-order position. The highest-order bit position in the bit array is the bit at the bit position (Maxbit -1). If the current bit position p [b] is not the highest-order bit position in the bit array, that is, if the logic value of 1 can still be shifted from the current bit position p [b] to the next higher-order position, the flow of the list creation goes on to the step 811. If the current bit position p [b] is the highest-order bit position p in the bit array, that is, if the logic value of 1 can no longer be shifted from the current bit position p [b] to the next higher-order position, on the other hand, the flow of the list creation goes on to the step 814.

At the step 814, the subscript b is checked to form a judgment as to whether a bit at the current bit position p [b] is the bit array's lowest-order bit or bit 0. If the bit at the current bit position p [b] is the bit array's lowest-order bit, the flow of the list creation goes on to a step 815. If the bit at the bit current bit position p [b] is not the bit array's lowest-order bit, on the other hand, the flow of the list creation goes on to a step 816.

At the step 816, the logic value of 1 at the current bit position p [b] is shifted to a lower-order bit position having a logic value of 0. The lower-order position having a logic value of 0 is an immediately-higher-order bit than a 1-bit position closest to the current bit position p [b]. At the step 815, the logic value of 1 at the current bit position p [b] is shifted to the lowest-order bit position in the bit array or the bit position 0 in the bit array.

At the next step 817 following the step 815 or 816, the current bit position pos [b] is changed to a next high order bit position p [b + 1] in the bit array, that is, the subscript b is incremented by 1. At the next step 818, the subscript b is checked to form a judgment as to whether or not the subscript b has reached Hamming, that is, whether or not processing has been carried out for all possible combinations. If processing has not been carried out for all possible combinations, the flow of the list creation goes back to the step 806. If processing has been carried out for all possible combinations, on the other hand, the flow of the list creation goes on to a step 819 at which the creation of the list is ended. At the end of the list creation, the number of bit arrays that have been stored on the bit-array list dat is equal to the index num.

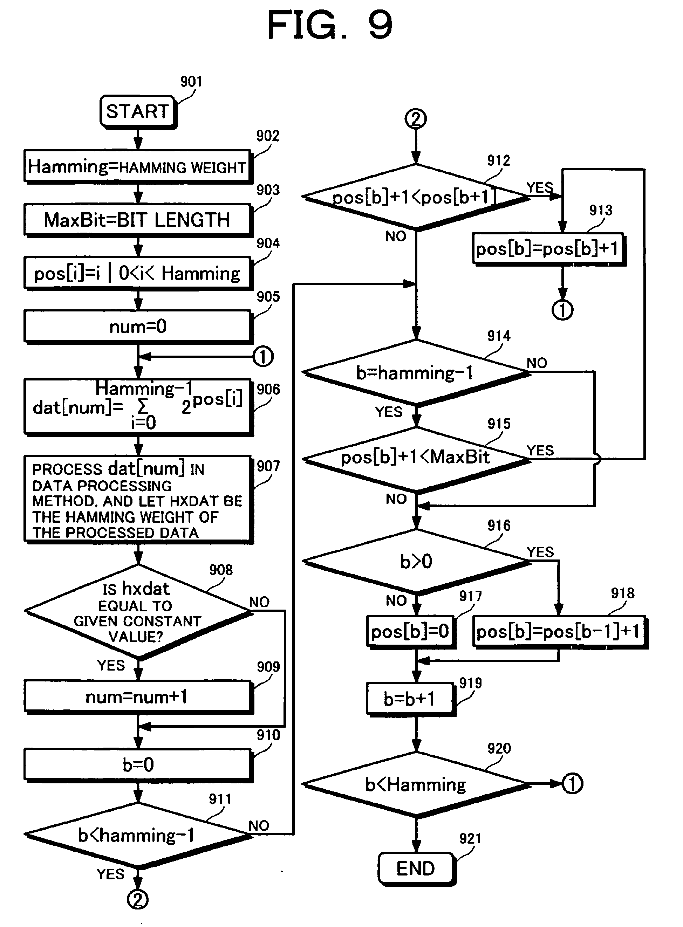

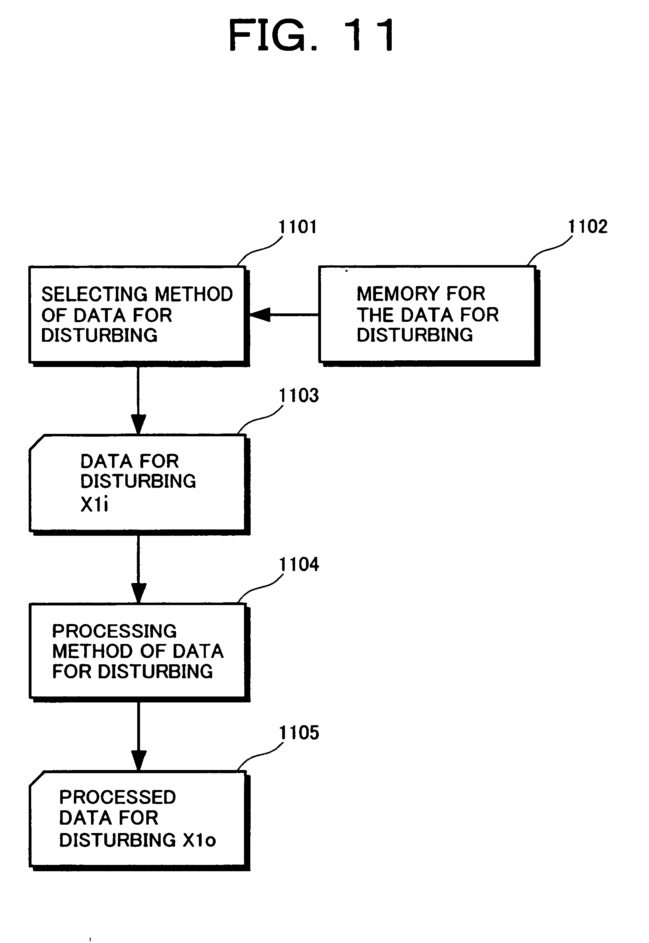

Fig. 11 is a diagram showing a data flow in a typical technique to generate the X1i disturbance data 1103 and the X1o processed disturbance data 1105. A disturbance-data selector 1101 is used for selecting a piece of data from a disturbance-data storage memory 1102 for storing pieces of data usable as the X1i disturbance data 1103 in advance. The selected piece of data is used as X1i disturbance data 1103. A disturbance-data-processing method 1104 is used for processing the X1i disturbance data 1103 to generate the X1o processed disturbance data 1105. The disturbance-data storage memory 1102 is typically a RAM or registers while the disturbance-data-processing method 1104 is normally executed by a CPU or an ALU. Fig. 9 is a flowchart representing an embodiment implementing a technique to create disturbance data to be stored in the disturbance-data storage memory 1102 in advance.

The embodiment shown in Fig. 9 adopts the same technique to create a list of bit arrays having constant uniform hamming weights as the embodiment shown in Fig. 8. The embodiment shown in Fig. 9 is different from that of Fig. 8 in that, in the case of the embodiment shown in Fig. 9, the disturbance data created on the list is not used as it is but processed by using a disturbance-data-processing method. The hamming weight of the processing results is stored in a variable hxdat at a step 907 of the flowchart shown in Fig. 9. Then, the flow of the list creation goes on to a step 908 to form a judgment as to whether the hamming weight is unchanged only if the hamming weight is found unchanged is the data for disturbance is cataloged on the bit-array list dat. The remaining of the flowchart is the same as the flowchart shown in Fig. 8.

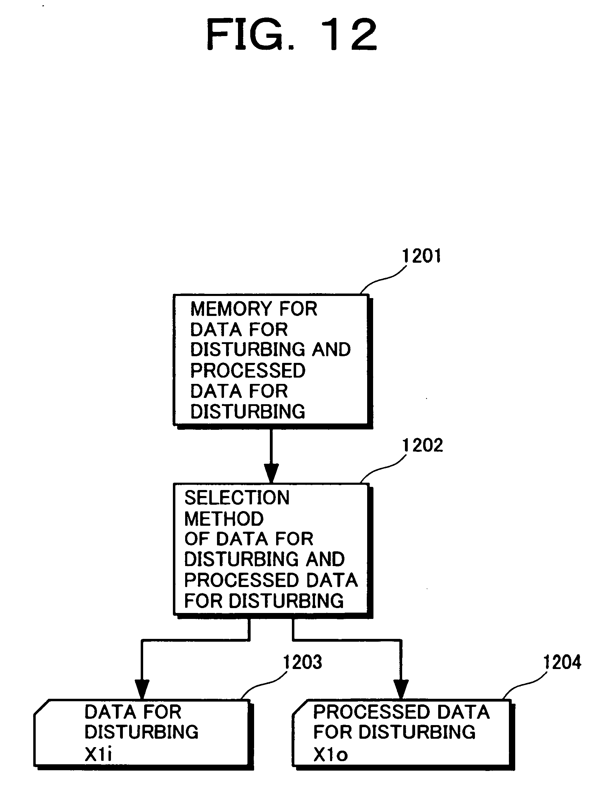

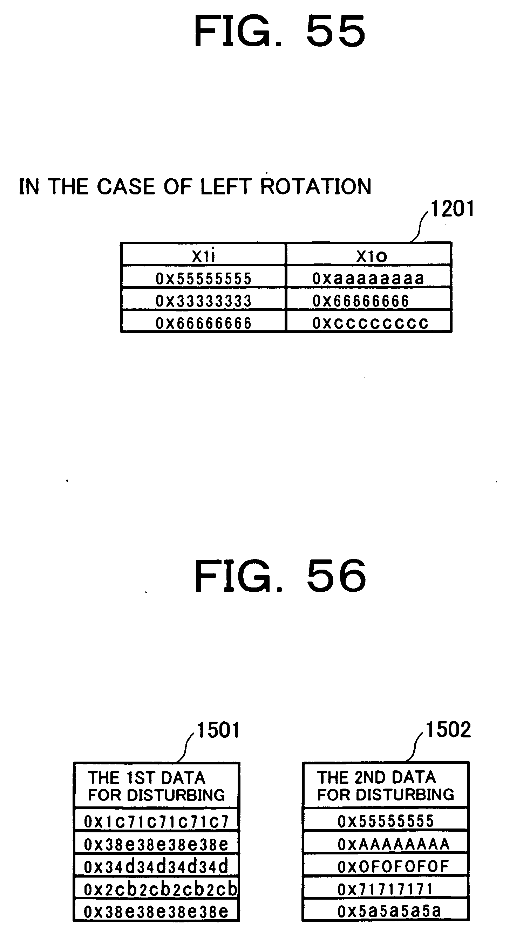

Fig. 12 is a diagram showing a data flow in an embodiment implementing a typical technique to generate X1i disturbance data 1203 and X1o processed disturbance data 1204. As shown in the figure, a plurality of pairs of data for disturbance and processed data for disturbance, which are typically generated by the embodiment with a data flow shown in Fig. 5 and the embodiment represented by a flowchart shown in Fig. 9, is stored in a disturbance-data and processed-disturbance-data storage memory 1201 in advance. A disturbance-data and processed-disturbance-data selector 1202 is used for fetching X1i disturbance data 1203 and X1o processed disturbance data 1204 from the disturbance-data and processed-disturbance-data storage memory 1201. The order in which X1i disturbance data 1203 and X1o processed disturbance data 1204 are fetched is arbitrary. For example, X1i disturbance data 1203 and X1o processed disturbance data 1204 are fetched at random based on random numbers or the like. Fig. 55 shows a typical table serving as an example of the disturbance-data and processed-disturbance-data storage memory 1201. The table includes typical disturbance data X1i and typical processed disturbance data X1o which are stored in the disturbance-data and processed-disturbance-data storage memory 1201 to be used in a left rotate operation.

In addition, it is necessary to have an even number of pairs of data for disturbance and processed data for disturbance which are stored in the disturbance-data and processed-disturbance-data storage memory 1201 and to properly select data for disturbance and processed data for disturbance to be stored in the disturbance-data and processed-disturbance-data storage memory 1201. At least, 2 pairs of data for disturbance and processed data for disturbance are needed.

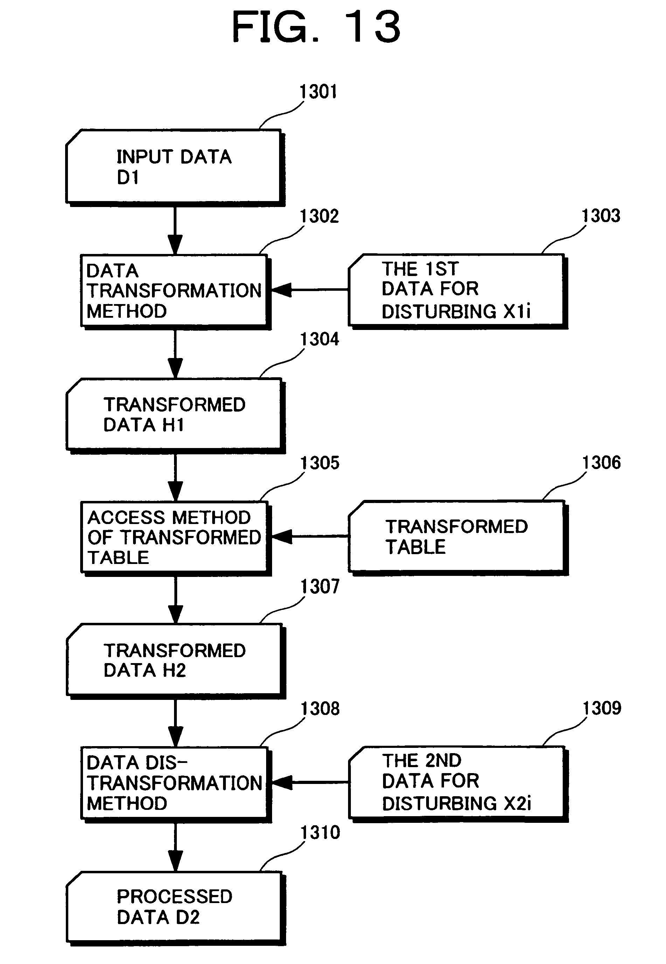

Fig. 13 is a diagram showing a data flow in an embodiment implementing a technique to process input data in accordance with a processed-data lookup table by transformation using 2 different pieces of disturbance data. Ideally, D1 input data 1301 is used to look up a transform table for D2 processed data 1310. The transform table is a relation between D1 input data 1301 and D2 processed data 1310 as expressed by Eq. 19 as follows:

$$D2. = \text{Table } [D1] \qquad (Eq. \ 19)$$

By observing the waveform of a current consumed during the table lookup processing, however, the values of D1 and D2 can be inferred. In order to solve this problem, a transformed table XTable is newly defined by Eq. 20 as follows:

$$\text{XTable } [f \ (I, \ X1i)] = g \ (\text{Table } [I], \ X2i) \ (Eq.20)$$

where notation X1i denotes first data for disturbance, notation X2i denotes second data for disturbance, notation f denotes a transform function for generating a table index and notation g denotes a transform function for generating an output result. Notation h used in the following description denotes a reversed function of the transform function g. The inverse-transformation function h is defined by Eq. 22 as follows:

$$D = h \ (g \ (D, \ X), \ X) \qquad (Eq. \ 22)$$

Thus, the lookup-table processing is expressed by the following equations:

$$H1 = f \ (D1, \ X1i) \qquad (Eq. \ 23)$$

$$H2 = \text{XTable } [H1] \qquad (Eq. \ 24)$$

$$D2 = h \ (H2, \ X2i) \qquad (Eq. \ 25)$$

The transform function f (x, y) is required to always produce different table indexes for different values of x. As the definition expressed by Eq. 22 indicates, the transform function g and the inverse-transformation function h need to satisfy a relation represented by Eq. 26 as follows:

$$a = h \ (g \ (a, \ X), \ X) \qquad (Eq. \ 26)$$

By observation the waveform of a current consumed during processing represented by Eq. 24, it may be possible to infer transformed data H1 or transformed data H2. Since the transformed data H1 is a result of transformation of the input data D1 by using the first disturbance data X1i whereas the transformed data H2 is subjected to inverse transformation using the second disturbance data X2i, however, the values of the input data D1 and the processed data D2 cannot be inferred by merely observing the waveform of a current consumed during processing represented by Eq. 24. In the embodiment shown in Fig. 13, processing represented by Eq. 23 is processing to transform the D1 input data 1301 by using the X1i first disturbance data 1303 in accordance with a data transform method 1302 to produce the H1 transformed data 1304. Processing represented by Eq. 24 is processing to fetch the H2 transformed data 1307 indicated by the H1 transformed data 1304 serving as a table index from a transformed table 1306 by using a transformed-table access method 1305. Processing represented by Eq. 25 is processing to carry out inverse transformation on the H2 transformed data 1307 by using the X2i second disturbance data 1309 in accordance with a data inverse-transformation method 1308 to produce the D2 processed data 1310.

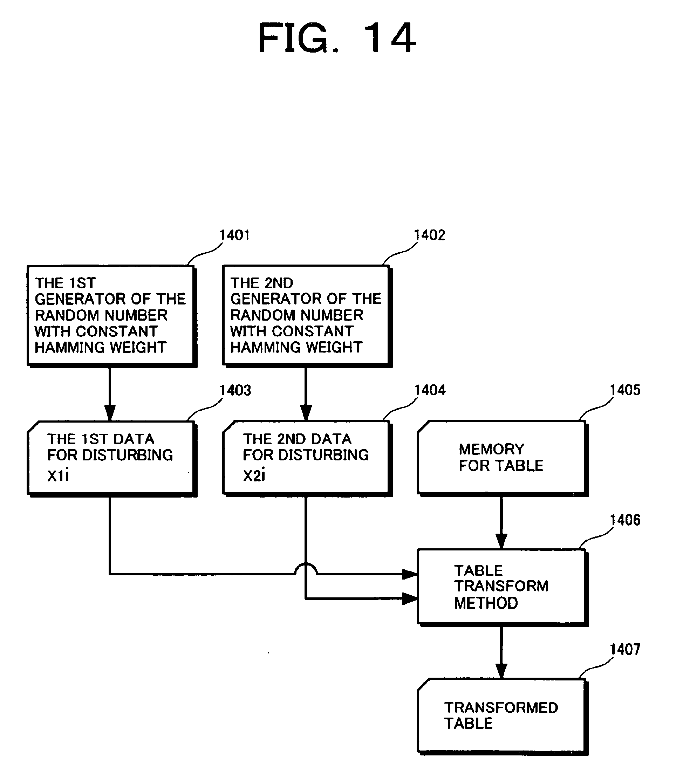

Fig. 14 is a diagram showing a data flow in an embodiment implementing a technique to generate the X1i first disturbance data 1403, the X2i second disturbance data 1404 and the transformed table 1407 which are used in the embodiment shown in Fig. 13. As shown in Fig. 14, a first constant-hamming-weight-random-number generator 1401 is used for generation of the X1i first disturbance data 1403 and a second constant-hamming-weight-random-number generator 1402 is used for generation of the X2i second disturbance data 1404. A table transform method 1406 is used for creating the transformed table 1407 from the X1i first disturbance data 1403, the X2i second disturbance data 1404 and a table, which is stored in a table storage memory 1405 and satisfies Eq. 19, in accordance with a transformation satisfying Eq. 20. As the first constant-hamming-weight-random-number generator 1401 and the second constant-hamming-weight-random-number generator 1402, the constant-hamming-weight-random-number generators shown in Figs. 6 to 8 can be used.

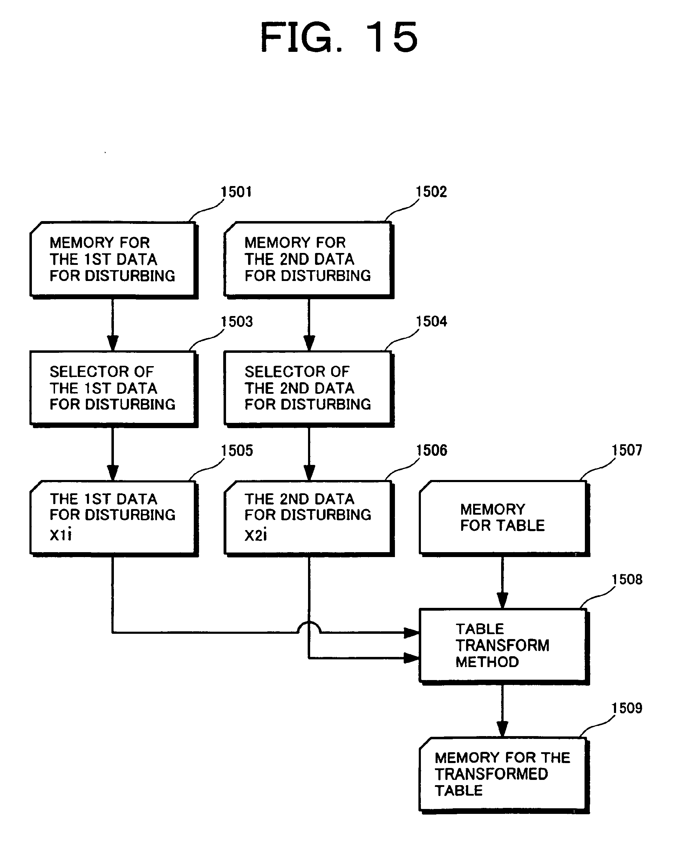

Fig. 15 is a diagram showing a data flow in an embodiment implementing a technique to generate the X1i first disturbance data 1505, the X2i second disturbance data 1506 and the transformed table 1509 which are used in the embodiment shown in Fig. 13. As shown in Fig. 15, a first-disturbance-data selector 1503 is used for selecting a piece of X1i first disturbance data 1505 from a first-disturbance-data storage memory 1501 for storing pieces of first disturbance data X1i in advance, and a second-disturbance-data selector 1504 is used for selecting a piece of X2i second disturbance data 1506 from a second-disturbance-data storage memory 1502 for storing pieces of second disturbance data X2i in advance. A table transform method 1508 is used for creating the transformed table 1509 from the selected piece of X1i first disturbance data 1505, the selected piece of X2i second disturbance data 1506 and a table, which is stored in a table storage memory 1507 and satisfies Eq. 19, in accordance with a transformation satisfying Eq. 20.

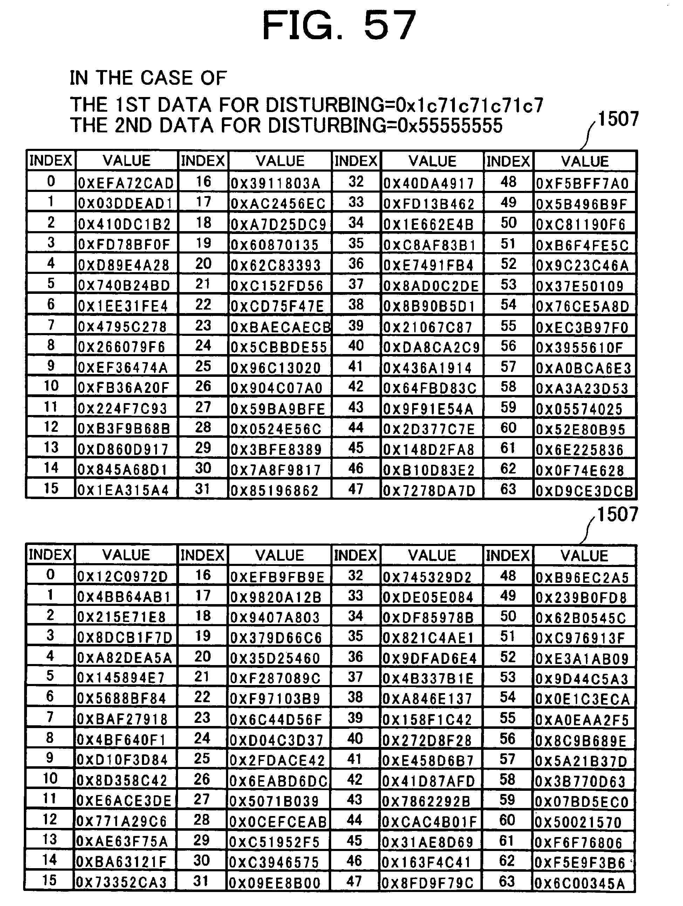

Fig. 56 is a diagram showing typical first disturbance data stored in the first-disturbance-data storage memory (1501) and typical second disturbance data stored in the second-disturbance-data storage memory (1502). Fig. 57 is a diagram showing typical table stored in the table storage memory (1507). As shown in the figure, an example of the first disturbance data is 0x1c71c71c71c7 and an example of the second disturbance data is 0x55555555.

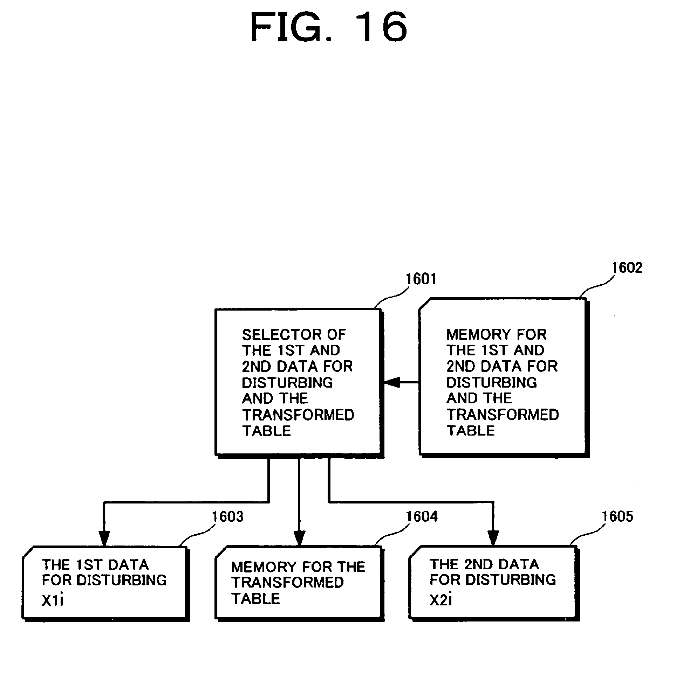

Fig. 16 is a diagram showing a data flow in an embodiment implementing a technique to generate the X1i first disturbance data 1603, the X2i second disturbance data 1604 and the transformed table 1605 which are used in the embodiment shown in Fig. 13. As shown in Fig. 16, first of all, a first-disturbance-data, second-disturbance-data and transformed table selector 1601 is used to select and fetch a set of first disturbance data X1i, second disturbance data X2i and a transformed table from a first-disturbance-data, second-disturbance-data and transformed-table storage memory 1602 to be used as the X1i first disturbance data 1603, the X2i second disturbance data 1604 and the transformed table 1605. The first-disturbance-data, second-disturbance-data and transformed-table storage memory 1602 is a memory used for storing in advance a plurality of sets each consisting of a constant-hamming-weight value serving as potential first disturbance data X1i, a constant-hamming-weight value serving as potential second disturbance data X2i and a transformed table serving as a potential serving table 1605. The transformed table is a list obtained as a result of transformation using a pair consisting of a constant-hamming-weight value serving as potential first disturbance data X1i and a constant-hamming-weight value serving as potential second disturbance data X2i.

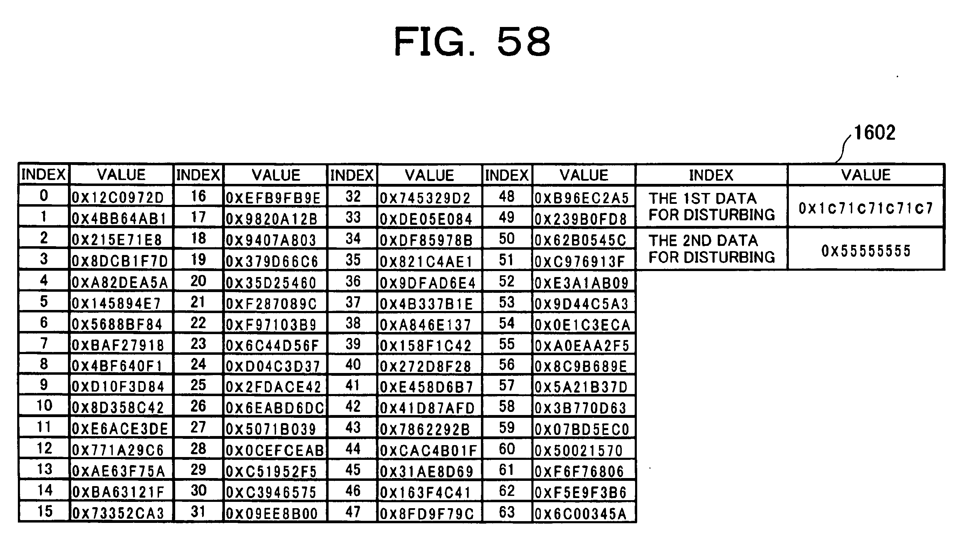

Fig. 58 is a diagram showing a table containing first data for disturbance, second data for disturbance and a transformed table, which are used in the embodiment shown in Fig. 16. The first-disturbance-data, second-disturbance-data and transformed table storage memory 1602 cited above is a memory used for storing in advance a plurality of tables each having a format shown in Fig. 58.

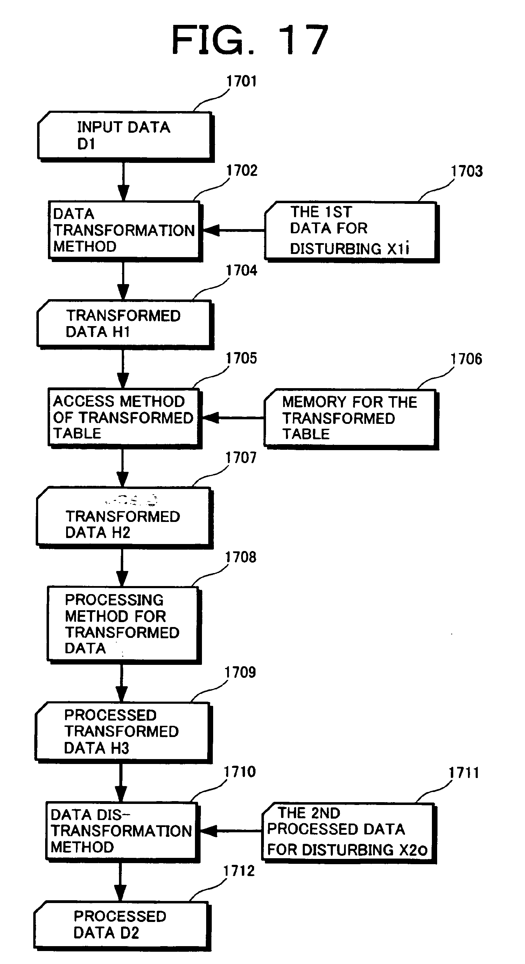

Fig. 17 is a diagram showing a data flow in a typical technique to process input data in accordance with a transformed table by transformation using 2 different pieces of disturbance data. Unlike the embodiment shown in Fig. 13, transformed data H2 is further processed by adoption of a method to process transformed data to generate processed transformed data H3. p processing shown in the figure includes a table-lookup operation and is carried out on D1 input data 1701 to produce D2 processed data 1712 as represented by Eq. 27 as follows.

$$D2 = p \ (Table \ [D1]) \qquad . \ (Eq. \ 27)$$

where notation Table denotes the transform table.

By observing the waveform of a current consumed during the table-lookup operation, the values of the input data D1 and the processed data D2 can be inferred. In order to solve this problem, a transformed table XTable is newly defined by Eq. 28 as follows:

$$XTable \ [f \ (i, \ X1i)] = g \ (Table \ [i], \ X2i) \ (Eq. \ 28)$$

where notation X1i denotes first data for disturbance, notation X2i denotes second data for disturbance, notation f denotes a transform function for generating a table index and notation g denotes a transform function for generating an output result. Notation h used in the following description denotes a reversed function of the transform function g. The inverse-transformation function h is defined by Eq. 29 as follows:

$$D = h (g (D, X), X) \qquad (Eq. 29)$$

Let processed second disturbance data X2o denoted by reference numeral 1711 in Fig. 17 be defined as follows.

$$X2o = p (X2i) \qquad (Eq. 30)$$

Thus, the lookup-table operation and the processing p are expressed by the following equations:

$$H1 = f (D1, X1i) \qquad (Eq. 31)$$

$$H2 = XTable [H1] \qquad (Eq. 32)$$

$$H3 = p (H2) \qquad (Eq. 33)$$

$$D2 = h (H3, X2o) \qquad (Eq. 34)$$

The transform function f, the inverse-transformation function h and the processing function p need to satisfy a relation represented by Eq. 35 as follows:

$$a = h (p (f (a, X)), p (X)) \qquad (Eq. 35)$$

Examples of the transform function f, the inverse-transformation function h and the processing function p that satisfy Eq. 35 are given as follows:

$$f (x, y) = x \text{ XOR } y \qquad (Eq. 36)$$

p (x) = right rotation (x)
h (x, y) = x XOR y

Even if the value of the transformed data H1 can be inferred by observing the waveform of a current consumed during the processing represented by Eq. 32, the value of the input data D1 cannot be inferred from only a result of observation for the processing represented by Eq. 32. This is because the transformed data H1 is obtained of a result of transformation of the input data D1 by using the first disturbance data X1i. By the same token, even if the value of the processed transformed data H3 can be inferred by observing the waveform of a current consumed during the processing represented by Eq. 33, the value of the processed data D2 cannot be inferred from only a result of observation for the processing represented by Eq. 33. This is because the processed transformed data H3 is further subjected to inverse transformation by using the X2o processed second disturbance data 1711.

In the embodiment shown in Fig. 17, processing represented by Eq. 31 is processing to transform the D1 input data 1701 by using the X1i first disturbance data 1703 in accordance with a data transform method 1702 to produce the H1 transformed data 1704. Processing represented by Eq. 32 is processing to fetch the H2 transformed data 1707 pointed to by the H1 transformed data 1704 serving as a table index from the transformed table 1706 by using a transformed-table access method 1705. Processing represented by Eq. 33 is processing to convert the H2 transformed data 1707 into H3 processed transformed data 1709 by using a transformed-data-processing method 1708. Processing represented by Eq. 34 is processing to carry out inverse transformation on the H3 processed transformed data 1709 by using the X2o processed second disturbance data 1711 in accordance with a data inverse-transformation method 1710 to produce the D2 processed data 1712.

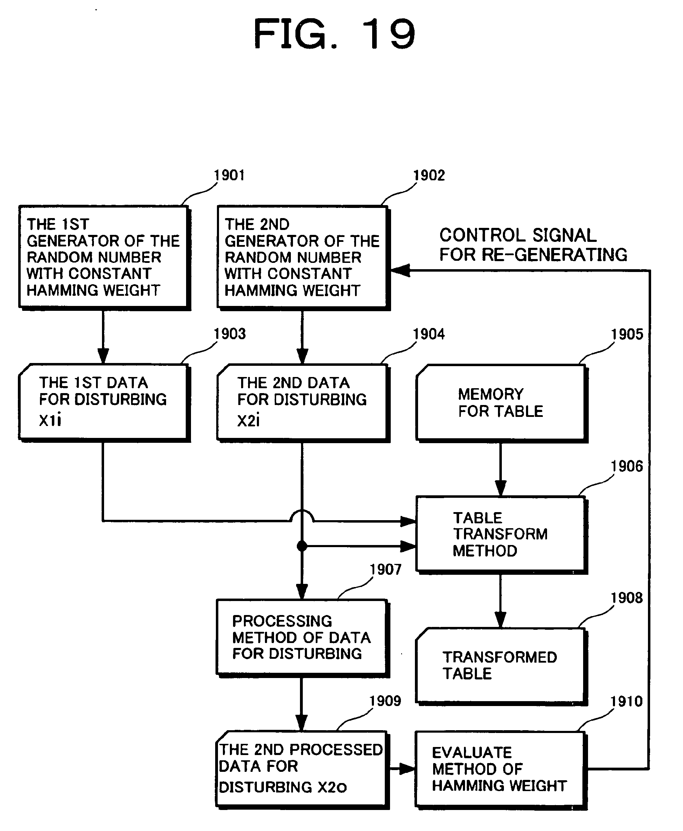

Fig. 19 is a diagram showing a data flow in another embodiment,implementing a technique to generate X1i first disturbance data 1903, X2i second disturbance data 1904, a transformed table 1908 and X2o processed second disturbance data 1909, which are used in the embodiment shown in Fig. 17.

As shown in Fig. 19, a first constant-hamming-weight-random-number generator 1901 is used for generating X1i first disturbance data 1903. By the same token, a second constant-hamming-weight-random-number generator 1902 is used for generating X2i second disturbance data 1904. A disturbance-data-processing method 1907 is used for processing the X2i second disturbance data 1904 to generate X2o processed second disturbance data 1909. A hamming-weight evaluation method 1910 is used for evaluating the hamming weight of the X2o processed second disturbance data 1909. If the hamming weight is found incorrect, a reproduction control signal is supplied to the constant-hamming-weight-random-number generator 1902 to regenerate other X2i second disturbance data 1904. A table transform method 1906 is used for carrying out transformation according to Eq. 27 to generate a transformed table 1908 from a table stored in a table storage memory 1905, the X1i first disturbance data 1903 and the X2i second disturbance data 1904. As the first constant-hamming-weight-random-number generator 1901 and the second constant-hamming-weight-random-number generator 1902, the constant-hamming-weight random-numbers generators shown in Figs. 6 to 8 can be adopted. This embodiment has a merit that, since the X1i first disturbance data 1903 and the X2i second disturbance data 1904 are generated each time they are required, a large number of variations in value can be expected specially in the case of disturbance data with a large bit count.

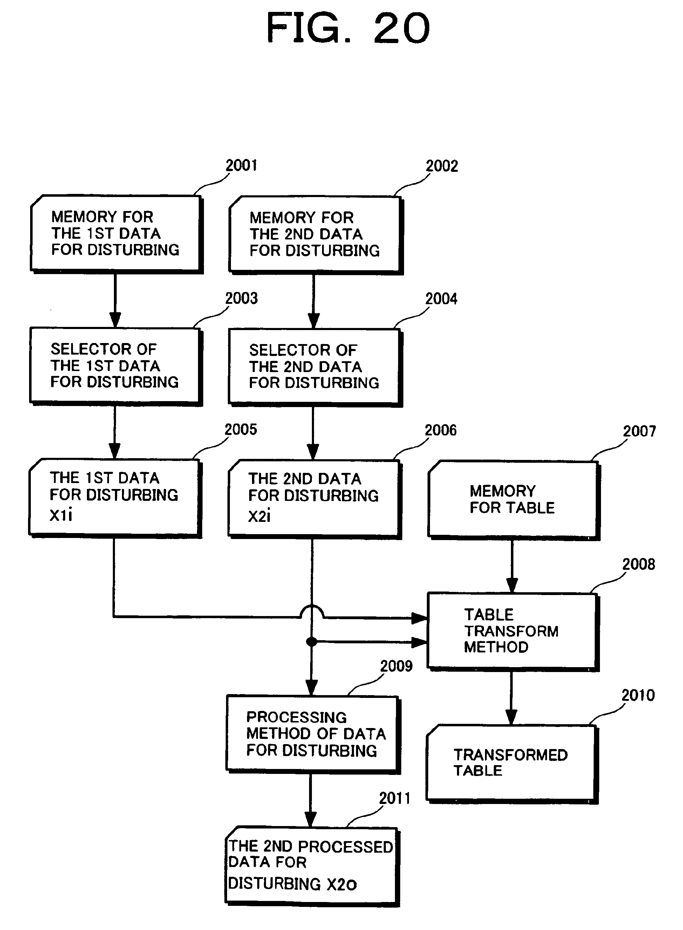

Fig. 20 is a diagram showing a data flow in a further embodiment implementing a technique to generate X1i first disturbance data 2005, X2i second disturbance data 2006, a transformed table 2010 and X2o processed second disturbance data 2011, which are used in the embodiment shown in Fig. 17.

As shown in Fig. 20, a first-disturbance-data selector 2003 is used for selecting a piece of X1i first disturbance data 2005 from a first-disturbance-data storage memory 2001 for storing pieces of first disturbance data X1i in advance, and a second-disturbance-data selector 2004 is used for selecting a piece of X2i second disturbance data 2006 from a second-disturbance-data storage memory 2002 for storing pieces of second disturbance data X2i in advance. A disturbance-data-processing method 2009 is used for processing the selected X2i second disturbance data 2006 to generate X2o processed second disturbance data 2011. A table transform method 2008 is used for creating the transformed table 2010 from the selected piece of X1i first disturbance data 2005, the selected piece of X2i second disturbance data 2006 and a table stored in a table storage memory 2007 in accordance with a transformation satisfying Eq. 26. This embodiment has a merit that, since candidates for the X1i first disturbance data 2005 and the X2i second disturbance data 2006 are prepared in advance, it does not take time to generate the X1i first disturbance data 2005 and the X2i second disturbance data 2006.

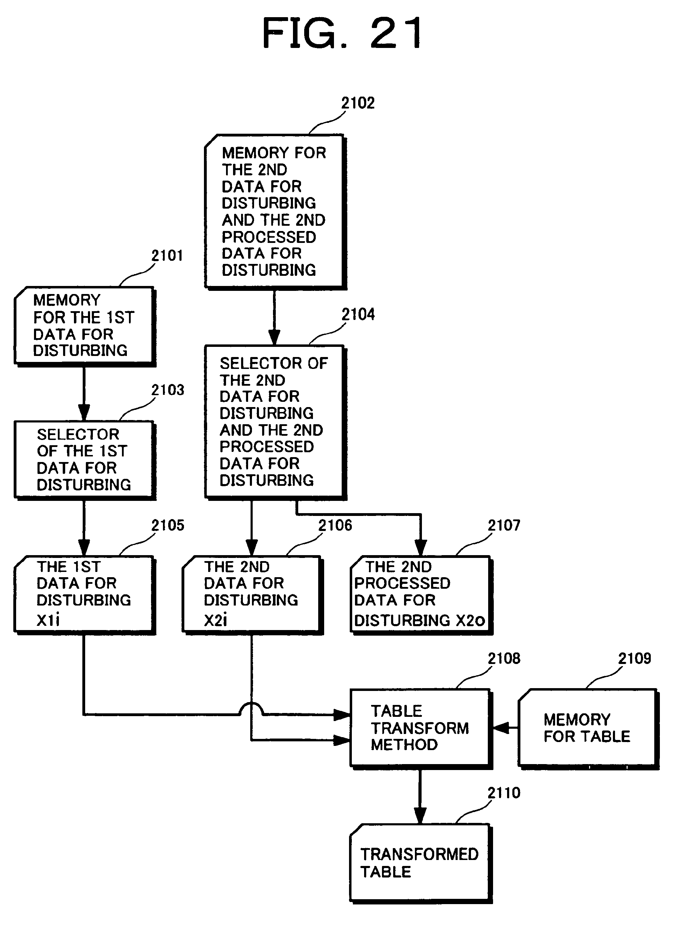

Fig. 21 is a diagram showing a data flow in a still further embodiment implementing a technique to generate X1i first disturbance data 2105, X2i second disturbance data 2106, a transformed table 2110 and X2o processed second disturbance data 2107, which are used in the embodiment shown in Fig. 17.

As shown in Fig. 21, a first-disturbance-data selector 2103 is used for selecting a piece of X1i first disturbance data 2105 from a first-disturbance-data storage memory 2101 for storing pieces of first disturbance data X1i in advance, and a second-disturbance-data and processed-second-disturbance-data selector 2104 is used for selecting a piece of X2i second disturbance data 2106 and a piece of X2o processed second disturbance data 2107 from a second-disturbance-data and processed-second-disturbance-data storage memory 2102 for storing pieces of second disturbance data X2i and pieces of processed second disturbance data X2o in advance. A table transform method 2108 is used for creating the transformed table 2110 from the selected piece of X1i first disturbance data 2105, the selected piece of X2i second disturbance data 2106 and a table stored in a table storage memory 2109 in accordance with a transformation satisfying Eq. 26. This embodiment has a merit that, since candidates for the X1i first disturbance data 2105, the X2i second disturbance data 2106 and the X2o processed second disturbance data 2107 are prepared in advance, it does not take time to generate the of X1i first disturbance data 2105, the X2i second disturbance data 2106 and the X2o processed second disturbance data 2107. It is also unnecessary to process X2i second disturbance data 2106 to generate X2o processed second disturbance data 2107. As a result, the amount of leaked information is small in comparison with the configuration shown in Fig. 20.

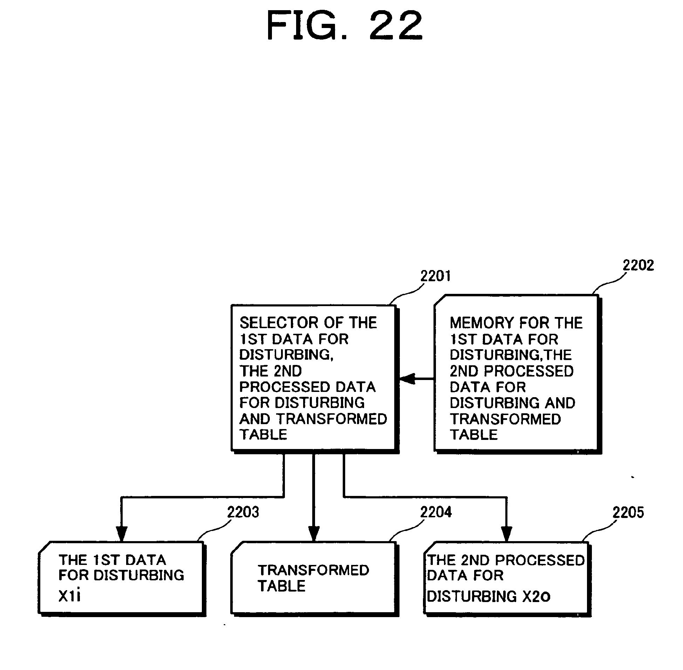

Fig. 22 is a diagram showing a data flow in a still further embodiment implementing a technique to generate X1i first disturbance data 2203, a transformed table 2205 and X2o processed second disturbance data 2204, which are used in the embodiment shown in Fig. 17.

As shown in Fig. 22, a first-disturbance-data and processed-second-disturbance-data and transformed-table selector 2201 is used for selecting a piece of X1i first disturbance data 2203, a piece of X2o processed second disturbance data 2204 and a transformed table 2205 from a first-disturbance-data and processed-second-disturbance-data and transformed-table storage memory 2202 for storing pieces of first disturbance data X1i, pieces of processed second disturbance data X2o and transformed tables in advance. This embodiment has a merit that it is also unnecessary to create a transformed table 2205 in comparison with the configuration shown in Fig. 21. As a result, the amount of leaked information is small in comparison with the configuration shown in Fig. 21.

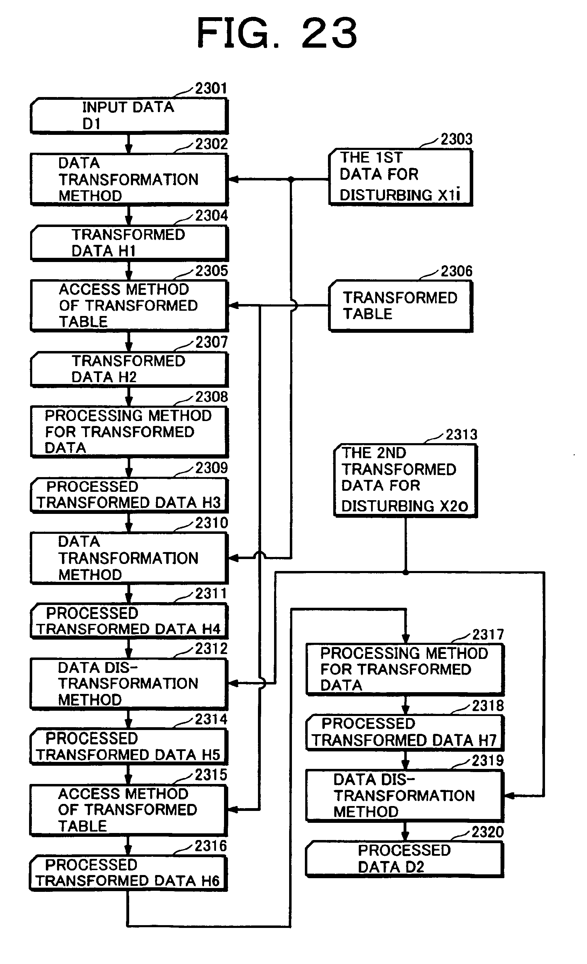

Fig. 23 is a diagram showing a first embodiment implementing an information-processing apparatus wherein input data is processed by carrying out data transformation, data inverse transformation, data processing and a table-lookup operation which are each carried a number of times by using a transformed table as well as 2 pieces of data for disturbance of a table index, table contents and numerical values appearing in the course of the process.

In the process, data is always transformed prior to data processing and the transformation will be followed by inverse transformation later. The procedure comprising the transformation, the data processing and the inverse-transformation is executed a number of times. As a result, in the course of data processing, no untransformed data will appear. Data subjected to data processing may be transformed once or twice. In either case, however, data in the course of processing is always data left in transformed state as it is. Thus, this embodiment is **characterized in that** the amount of leaked information is small.

In the embodiment shown in Fig. 23, any inverse transformation carried out after transformation opposite to the inverse transformation must result in a pre-transformation value prior to the transformation. On the contrary, any transformation carried out after inverse transformation opposite to the transformation must result in a value prior to the inverse-transformation. Assume that a function f (x, y) is a function for transforming data x by using disturbance data y and a function g (a, b) is a function for carrying out inverse transformation on transformed data a by using disturbance data b. That is to say, the function g is a function opposite to the function f. In this case, the following equation holds true:

$$f\ (g\ (x,\ y1),\ y2)\ =\ g\ (f\ (x,\ y2),\ y1) \qquad (Eq.\ 37)$$

In the embodiment shown in Fig. 23, X1i first disturbance data 2303, a transformed table 2306 and X2o processed second disturbance data 2313 can be generated by any of the embodiments shown in Figs. 19 to 22. As shown in Fig. 23, first of all, a data transform method 2302 is used to transform D1 input data 2301 by using X1i first disturbance data 2303 to generate H1 transformed data 2304. Then, a transformed-table access method 2305 is used for looking up a transformed table 2306 for H2 transformed data 2307 pointed to by the H1 transformed data 2304 serving as an index of the transformed table 2306. Subsequently, a transformed-data-processing method 2308 is used for processing the H2 transformed data 2307 to generate H3 processed transformed data 2309. The processed transformed data H3 in this state is ready for second transformation by using data for disturbance. Then, a data transform method 2310 is used to transform the H3 processed transformed data 2309 by using the X1i first disturbance data 2303 to generate H4 transformed processed transformed data 2311. The H4 transformed processed transformed data 2311 is thus data completing first transformation and second transformation. Subsequently, a data inverse-transformation method 2312 is used to carrying out inverse transformation on the H4 transformed processed transformed data 2309 by using X2o processed second disturbance data 2313 to generate H5 processed transformed data 2314. The H5 processed transformed data 2314 is obtained as a result of removing the second transformation. Since the H5 processed transformed data 2314 is thus data completing the first transformation only, the H5 processed transformed data 2314 can be used as an index pointing to an entry of a transformed table. Thus, a transformed-table access method 2315 is then used for looking up the transformed table 2306 for H6 transformed data 2316 indicated by the H5 transformed data 2314. Subsequently, a transformed-data processing method 2317 is used for processing the H6 transformed data 2316 to generate H7 processed transformed data 2318. Finally, a data inverse-transformation method 2319 is used to carrying out inverse transformation on the H7 processed transformed data 2318 by using X20 processed second disturbance data 2313 to generate D2 processed data 2320. In this embodiment, a transformation method and, hence an inverse-transformation method are each used only twice. It should be noted that such methods can each be used any number of times by following the same procedure.

Fig. 19 is a diagram showing a data flow in another embodiment implementing a technique to generate X1i first disturbance data 1903, a transformed table 1908 and X2o processed second disturbance data 1909, which are used in the embodiment shown in Fig. 23.

Fig. 20 is a diagram showing a data flow in a further embodiment implementing a technique to generate X1i first disturbance data 2005, a transformed table 2010 and X2o processed second disturbance data 2011, which are used in the embodiment shown in Fig. 23.

Fig. 21 is a diagram showing a data flow in a still further embodiment implementing a technique to generate X1i first disturbance data 2105, a transformed table 2110 and X2o processed second disturbance data 2107, which are used in the embodiment shown in Fig. 23.

Fig. 22 is a diagram showing a data flow in a still further embodiment implementing a technique to generate X1i first disturbance data 2203, a transformed table 2204 and X2o processed second disturbance data 2205, which are used in the embodiment shown in Fig. 23.

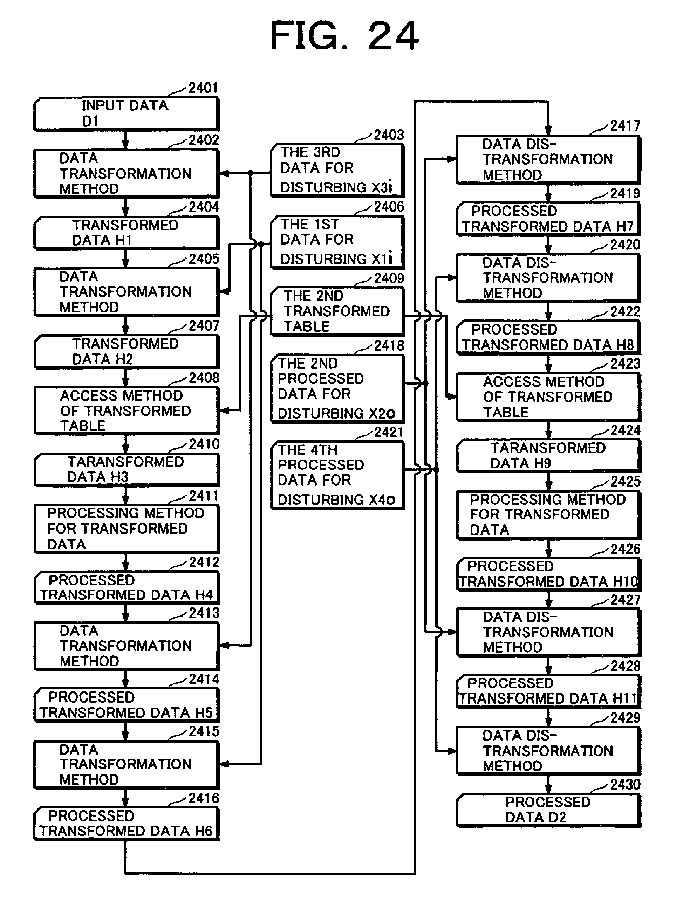

Fig. 24 is a diagram showing another embodiment implementing an information-processing apparatus wherein input data is subjected to repetition of a process comprising a transformation using a transformed table and transformations using 2 different pieces of data for disturbance of an index pointing to an entry in the transformed table and a result of transformation twice. The transformation of an index pointing to an entry in the transformed table and a result of 2 transformations by using 2 different pieces of disturbance data effectively disturbs observation of the waveform of current consumption by using only few resources. Such effective disturbance makes the current difficult to analyze.

As a method for generating 4 different pieces of data for disturbance and a second transformed table which are used in this embodiment, the embodiments shown in Figs. 19 to 23 can be used. In the case of an embodiment wherein a plurality of values having uniform constant hamming weights is prepared in advance and one of the values is selected, for example, if the number of variations of the values is small and the processing to transform a value by using data for disturbance is known, all the pieces of data for disturbance can be inferred. If the processing to transform a value by using data for disturbance is the XOR processing and the transformed value is equal to the data for disturbance, the result of the transformation is 0. It is thus not impossible to infer the set of data for disturbance prepared in advance. In order to solve this problem, after transformation using disturbance data with a variable hamming weight to give a result of transformation, disturbance data with a constant hamming weight is used to further disturb the result of transformation. In this way, the data for disturbance will be no longer easy to infer. The disturbance data with a variable hamming weight typically represents all values that can each be expressed by using the number of bits. Details of the processing are explained by referring to Fig. 24.

As shown in the figure, first of all, a data transform method 2402 is adopted for transforming D1 input data 2401 by using X3i third disturbance data 2403 to generate H1 transformed data 2404. The X3i third disturbance data 2403 is one of 2 pieces of data for transformation of indexes pointing to an entry in a table used in transformation by looking up the table for the entry. Before being used for looking up the table, the index needs to be further transformed by using X1i first disturbance data 2406. That is to say, a data transform method 2405 is adopted for transforming the H1 transformed data 2404 by using the X1i first disturbance data 2406 to generate H2 transformed data 2407. Then, a transformed-table access method 2408 is used for looking up a second transformed table 2409 for H3 transformed data 2410 pointed to by the H2 transformed data 2407 serving as an index pointing to an entry in the second transformed table 2409. Subsequently, a transformed-data-processing method 2411 is used for processing the H3 transformed data 2410 to produce H4 processed transformed data 2412. Then, a data transform method 2413 is adopted for transforming the H4 processed transformed data 2412 by using the X3i third disturbance data 2403 to generate H5 transformed processed transformed data 2414. Furthermore, a data transform method 2415 is adopted for transforming the H5 transformed processed transformed data 2414 by using the X1i first disturbance data 2406 to generate H6 transformed processed transformed data 2416. The H6 transformed processed transformed data 2416 is a result of transformations using the X3i third disturbance data 2403 and the X1i first disturbance data 2406 respectively as well as a transformation based on the second transformed table 2409 and thus ready for inverse-transformation by using X2o processed second disturbance data 2418 and X4o processed fourth disturbance data 2421. For this reason, a data inverse-transformation method 2417 is adopted for carrying out inverse transformation on the H6 transformed processed transformed data 2416 by using the X2o processed second disturbance data 2418 to generate H7 transformed processed transformed data 2419. Then, a data inverse-transformation method 2420 is adopted for carrying out inverse transformation on the H7 transformed processed transformed data 2419 by using the X4o processed fourth disturbance data 2421 to generate H8 processed transformed data 2422. Since the H8 processed transformed data 2422 is a result of transformations using the X3i third disturbance data 2403 and the X1i first disturbance data 2406 respectively, the H8 processed transformed data 2422 can be used as an index pointing to an entry in the second transformed table 2409. For this reason, a transformed-table access method 2423 is used for looking up the second transformed table 2409 for H9 transformed data 2424 pointed to by the H8 processed transformed data 2422 serving as an index pointing to an entry in the second transformed table 2409. Subsequently, a transformed-data-processing method 2425 is further used for processing the H9 transformed data 2424 to produce H10 processed transformed data 2426. The H10 processed transformed data 2426 is a result of transformations by using the X2o processed second disturbance data 2418 and the X4o processed fourth disturbance data 2421 respectively. For this reason, a data inverse-transformation method 2427 is adopted for carrying out inverse transformation on the H10 processed transformed data 2426 by using the X2o processed second disturbance data 2418 to generate H11 processed transformed data 2428. Finally, a data inverse-transformation method 2429 is adopted for carrying out inverse transformation on the H11 processed transformed data 2428 by using the X4o processed fourth disturbance data 2421 to generate the eventual D2 processed data 2430.

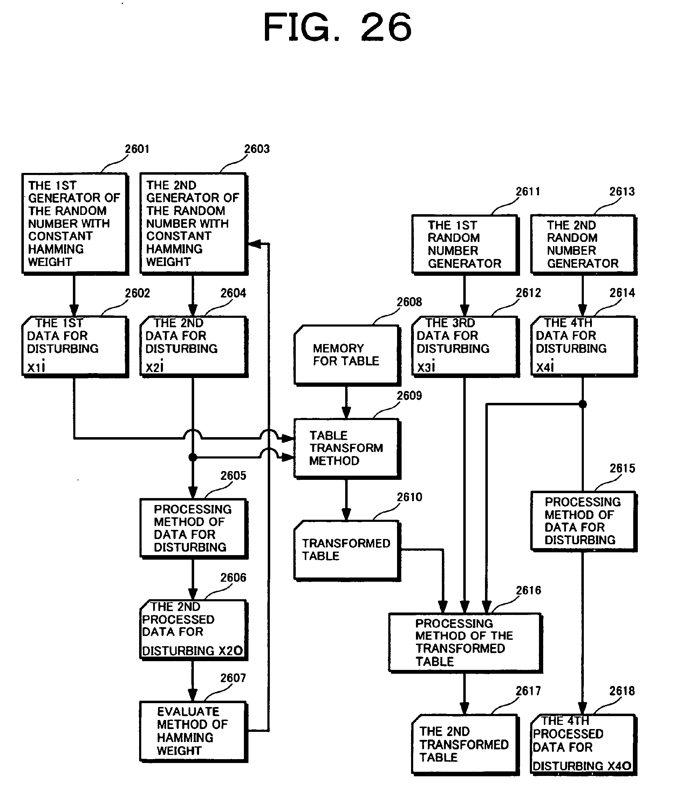

Fig. 26 is a diagram showing a data flow in an embodiment implementing a technique to generate X1i first disturbance data 2602, X3i third disturbance data 2612, X2o processed second disturbance data 2606, X4o processed fourth disturbance data 2618 and a second transformed table 2617, which are used in the embodiment shown in Fig. 24. In the procedure shown in Fig. 26, first of all, by adoption of the technique implemented by the embodiment shown in Fig. 19, X1i first disturbance data 2602, X2o processed second disturbance data 2606 and a transformed table 2610 are generated. Then, a transformed-table-processing method 2616 is adopted for processing the transformed table 2610 by using X3i third disturbance data 2612 produced by adoption of a third-disturbance-data-generating method 2611 and using X4i fourth disturbance data 2614 produced by adoption of a fourth-disturbance-data-generating method 2613 to generate a second transformed table 2617. In addition, a disturbance-data-processing method 2615 is used for computing X4o processed disturbance data 2618, which is required for inverse transformation of data, from the X4i fourth disturbance, data 2614.

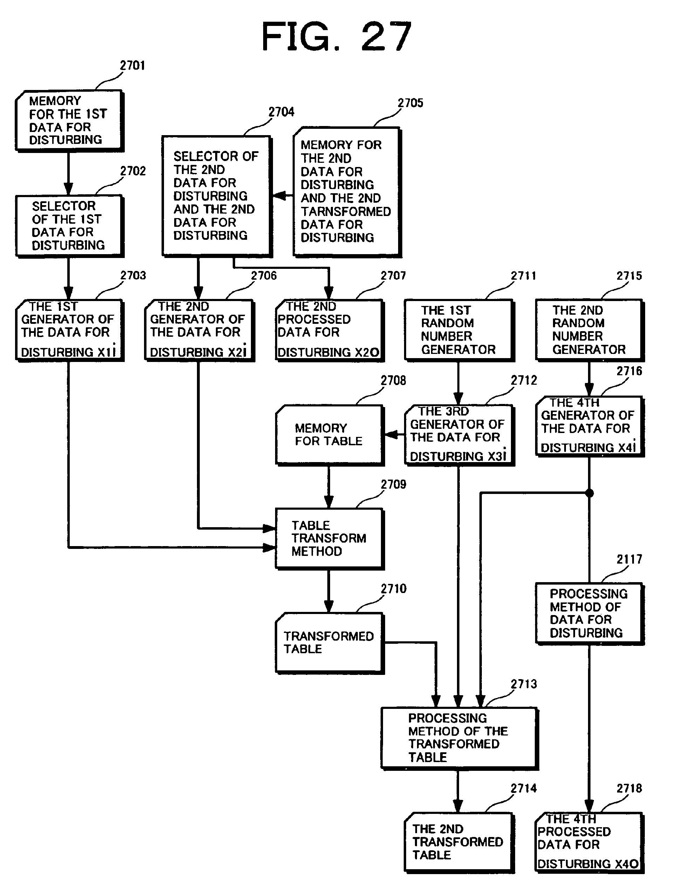

Fig. 27 is a diagram showing a data flow in another embodiment implementing a technique to generate X1i first disturbance data 2703, X3i third disturbance data 2712, X2o processed second disturbance data 2707, X4o processed fourth disturbance data 2718 and a second transformed table 2714, which are used in the embodiment shown in Fig. 24. In the procedure shown in Fig. 27, first of all, by adoption of the technique implemented by the embodiment shown in Fig. 20, X1i first disturbance data 2703, X2o processed second disturbance data 2706 and a transformed table 2710 are generated. Then, a transformed-table-processing method 2713 is adopted for processing the transformed table 2710 by using X3i third disturbance data 2712 produced by adoption of a third-disturbance-data-generating method 2711 and using X4i fourth disturbance data 2716 produced by adoption of a fourth-disturbance-data-generating method 2715 to generate a second transformed table 2714. In addition, a disturbance-data-processing method 2717 is used for computing X4o processed disturbance data 2718, which is required for inverse transformation of data, from the X4i fourth disturbance data 2716.

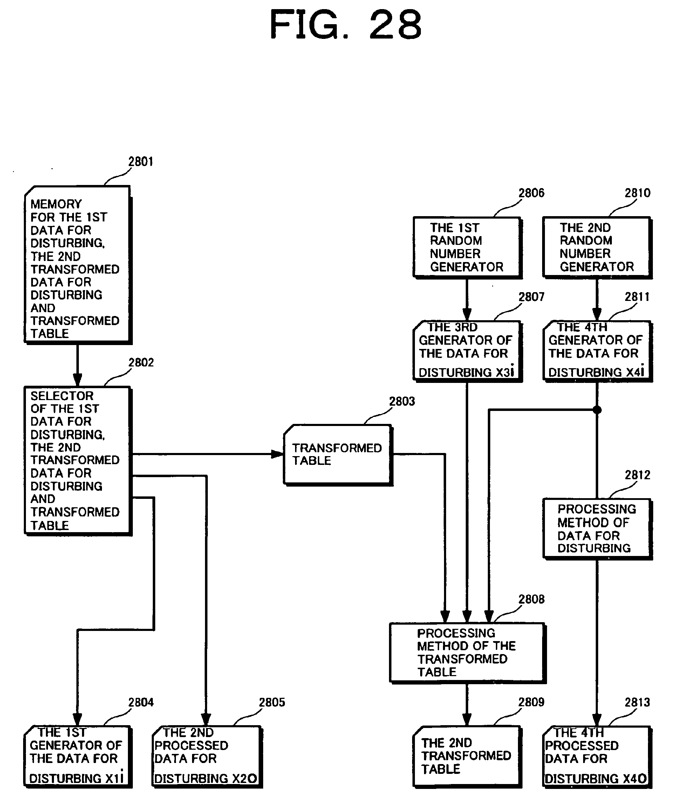

Fig. 28 is a diagram showing a data flow in a further embodiment implementing a technique to generate X1i first disturbance data 2804, X3i third disturbance data 2807, X2o processed second disturbance data 2805, X4o processed fourth disturbance data 2813 and a second transformed table 2809, which are used in the embodiment shown in Fig. 24.

In the procedure shown in Fig. 28, first of all, by adoption of the technique implemented by the embodiment shown in Fig. 21, X1i first disturbance data 2804, X2o processed second disturbance data 2805 and a transformed table 2803 are generated. Then, a transformed-table-processing method 2808 is adopted for processing the transformed table 2803 by using X3i third disturbance data 2807 produced by adoption of a third-disturbance-data-generating method 2806 and using X4i fourth disturbance data 2811 produced by adoption of a fourth-disturbance-data-generating method 2810 to generate a second transformed table 2809. In addition, a disturbance-data-processing method 2812 is used for computing X4o processed disturbance data 2813, which is required for inverse transformation of data, from the X4i fourth disturbance data 2811.

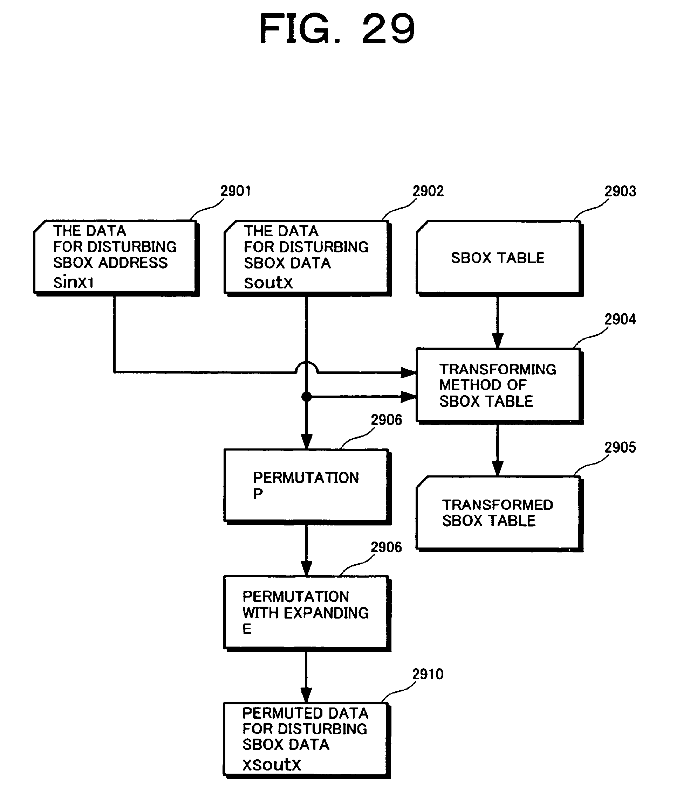

Next, other embodiments are explained by referring to Figs. 29, 30, 31, 32, 33, 34, 35, 36, 37, 38, 39, 45, 46 and 47.

First of all, processing to transform an SBOX table and data for disturbance are explained by referring to Fig. 29. An SBOX transform method 2904 is adopted for transforming an SBOX table 2903 by using SinX1 SBOX-address disturbance data 2901 and SoutX SBOX-content disturbance data 2902 to generate a transformed table 2905. Addresses and data of the SBOX table 2903 are transformed by carrying out XOR processing. In addition, the SoutX SBOX-content disturbance data 2902 is subjected to P (permutation) processing 2906 and E (permutation with expansion) processing 2907 to generate SBOX-data-permuted disturbance data 2909. To sum up, the processing described above can be expressed by Eqs. 38 and 39 as follows:

$$\mathrm{XSBOX\ [i\ XOR\ SinXi]\ =\ SBOX[i]\ XOR\ SoutX \qquad (Eq.\ 38)}$$

$$\mathrm{XSoutX\ =\ E\ (P\ (SoutX)) \qquad\qquad\qquad (Eq.\ 39)}$$

where notation SBOX [0 ---63] denotes the SBOX table, notation XSBOX [0 ---63] denotes the transformed SBOX table, notation P ( ) denotes the P permutation and notation E ( ) denotes the E (permutation with expansion) processing. As methods for generating the SinX1 SBOX-address disturbance data 2901 and the SoutX1 SBOX-content disturbance data 2902, the techniques shown in Figs. 19 to 22 can be adopted.

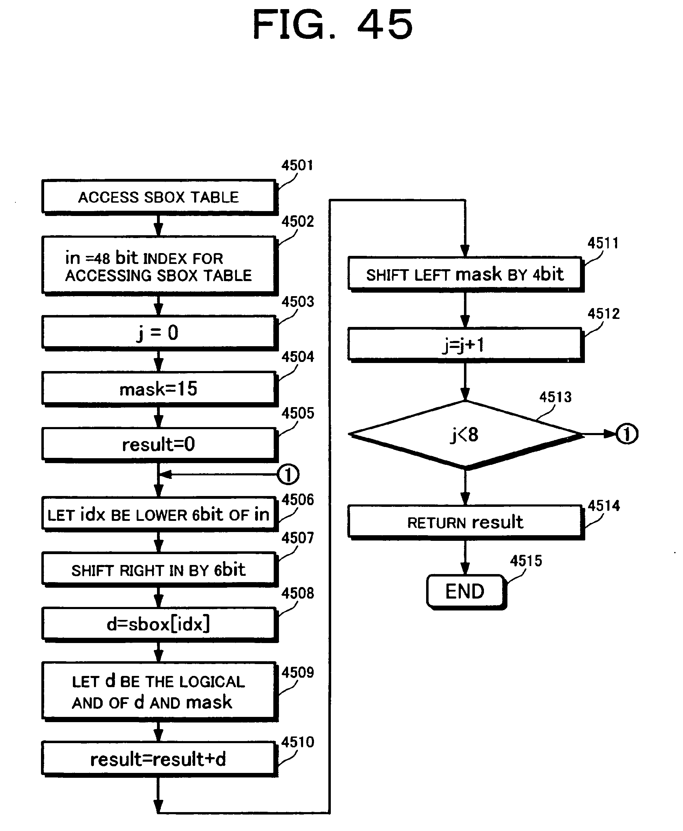

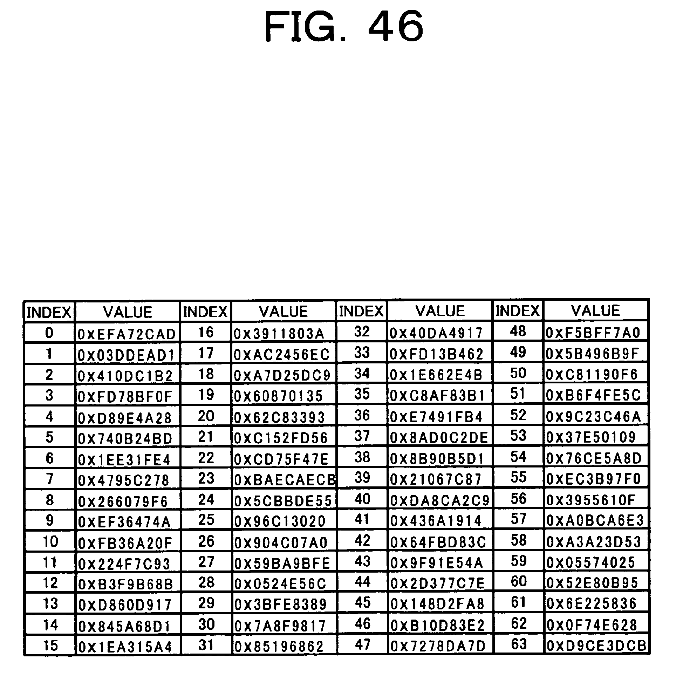

Fig. 46 is a diagram showing an embodiment implementing an SBOX storage format. As shown in the figure, the SBOX table is stored as a one-dimensional array of 64 integers each having a length of 32 bits. Fig. 45 is a flowchart of an embodiment representing a typical technique for looking up the SBOX table having a format like the one shown in Fig. 46. In the embodiment shown in Fig. 45, an index pointing to an entry in the SBOX table has a length of 48 bits. The 48-bit index is disassembled into eight 6-bit portions which are each used to look up the SBOX table for a 32-bit integer entry pointed to by the 6-bit portion. The 32-bit integer entry found in the lookup operation is masked by using a mask according to the position of the 6-bit portion to extract necessary data from the 32-bit integer entry. By sequentially repeating the lookup operation for all the eight 6-bit portions and sequentially adding a new piece of extracted necessary data to a sum of such pieces obtained so far, a final result of the lookup operations is obtained. The repetition of the lookup operation to make an access to the SBOX table is explained by referring to the flowchart shown in Fig. 45. As shown in the figure, the lookup repetition begins with a step 4502 at which a 48-bit numerical value input as an index to be used in the lookup operation is stored in a variable IN. As described above, the index is divided into eight 6-bit portions which are each to be used in one lookup operation. A variable j serves as a counter for counting the number of times the lookup operation has been carried out. At the next step 4503, the counter j is initialized at 0. Then, at the next step 4504, a variable mask for masking a lookup result is initialized at 15 which is represented by all ones set in the 4 least significant bits of the variable mask. Subsequently, at the next step 4505, a variable result used for storing a lookup-operation result is initialized at 0. Then, at the next step 4506, the 6 least significant bits of the variable IN are extracted and stored in a variable idx. Subsequently, at the next step 4507, the variable IN is shifted to the right by 6 bits to prepare new 6 least significant bits to be extracted next. Then, at the next step 4508, a lookup-operation result pointed to by an index stored in the variable idx is retrieved from the SBOX table and stored in a variable d. Subsequently, at the next step 4509, an AND operation is carried out on the variable d and the variable mask to generate a logical product which is stored in the variable d. Then, at the next step 4510, the variable d is added to the variable result. Subsequently, at the next step 4511, the variable mask is shifted to the left by 4 bits to prepare a new mask to be used in the next lookup operation. Then, at the next step 4512, the contents of the counter j are incremented by 1. The flow of the lookup repetition then goes on to a step 4513 to form a judgment at to whether of not the contents of the counter j are still smaller than 8. If the contents of the counter j are still smaller than 8, a next lookup operation is carried out, starting with the step 4506. If the contents of the counter j are equal to 8, on the other hand, the flow of the lookup repetition goes on to a step 4514 at which the variable result is passed to a calling routine as a return value representing the result of the repeated lookup operation.

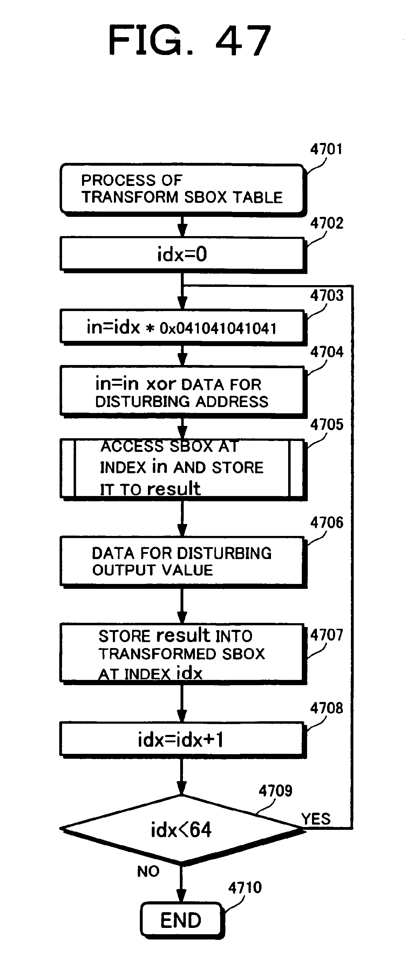

Fig. 47 is a flowchart representing details of the SBOX-table transform method 2904 shown in Fig. 29. The method is adopted as a procedure for transforming the SBOX table having the format shown in Fig. 46. A transformed SBOX table obtained as a result of execution of this procedure can be looked up by carrying out the lookup processing represented by the flowchart shown in Fig. 45. In addition, a transformed SBOX table obtained as a result of execution of the procedure represented by the flowchart shown in Fig. 47 can be treated as an ordinary SBOX table to be transformed again by execution of the procedure using new data for disturbance. That is to say, by execution of the procedure represented by the flowchart shown in Fig. 47 a number of times by using different pieces of data for disturbance, an SBOX table can be transformed the same number of times by using the different pieces of data for disturbance.

The procedure for transforming an SBOX table is explained by referring to the flowchart shown in Fig. 47. As shown in the figure, the flowchart begins with a step 4702 at which a 6-bit index idx for looking up the SBOX table is initialized at 0. Then, at the next step 4703, a 48-bit array is created by concatenating eight 6-bit indexes idx. The created 48-bit array is stored in a variable IN. Subsequently, at the next step 4704, an XOR operation is carried out on the variable IN and 48-bit data for disturbance of an address to produce a result which is stored back in the variable IN. Then, at the next step 4705, the SBOX-table lookup procedure represented by the flowchart shown in Fig. 45 is called with the variable IN passed to the procedure as a 48-bit index for looking up the SBOX table. A result returned by the SBOX-table lookup procedure represented by the flowchart shown in Fig. 45 is stored in a variable result. Subsequently, at the next step 4706, an XOR operation is carried out on the variable result and 32-bit data for disturbance of data to produce a transformed result which is stored back in the variable result. Then, at the next step 4707, the contents of the variable result are transferred to a transformed SBOX table's entries pointed to by the index idx. Subsequently, at the next step 4708, the index idx is incremented by 1. The flow of the procedure then goes on to a step 4709 to form a judgment as to whether or not the index idx is still smaller than 64. If the index idx is still smaller than 64, the processing is repeated, starting with the step 4703. If the index idx has already become equal to 64, on the other hand, the execution of the procedure is terminated.

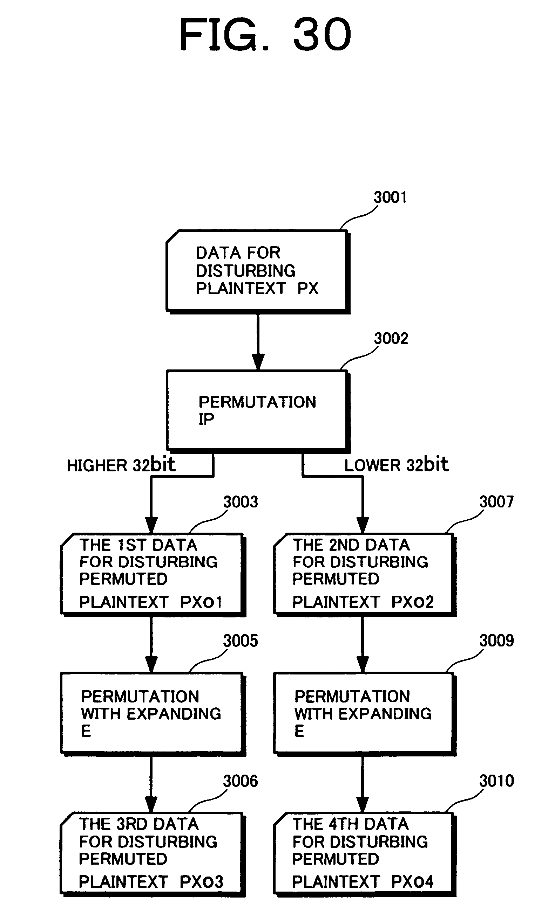

The following description explains generation of PXo1 first permuted-plain-text disturbance data 3003, PXo2 second permuted-plain-text disturbance data 3007, PXo3 third permuted-plain-text disturbance data 3006 and PXo4 fourth permuted-plain-text disturbance data 3010, which are each used for inverse transformation of data transformed by PX plain-text disturbance data, by referring to a data flow shown in Fig. 30. As shown in the figure, IP permutation 3002 is carried out on the PX plain-text disturbance data 3001 to generate 32 high-order bits and 32 low-order bits as the PXo1 first permuted-plain-text disturbance data 3003 and the PXo2 second permuted-plain-text disturbance data 3007 respectively. The PXo1 first permuted-plain-text disturbance data 3003 and the PXo2 second permuted-plain-text disturbance data 3007 are used inverse transformation of transformed data to produce a final result immediately before IP inverse permutation after completion of final-round processing. Then, the PXo1 first permuted-plain-text disturbance data 3003 is subjected to E permutation with expansion 3005 to produce the PXo3 third permuted-plain-text disturbance data 3006. By the same token, the PXo2 second permuted-plain-text disturbance data 3003 is subjected to E permutation with expansion 3009 to produce the PXo4 fourth permuted-plain-text disturbance data 3010. The PXo3 third permuted-plain-text disturbance data 3006 and the PXo4 fourth permuted-plain-text disturbance data 3010 are each used for inverse transformation prior to a lookup operation of an SBOX table in each round.

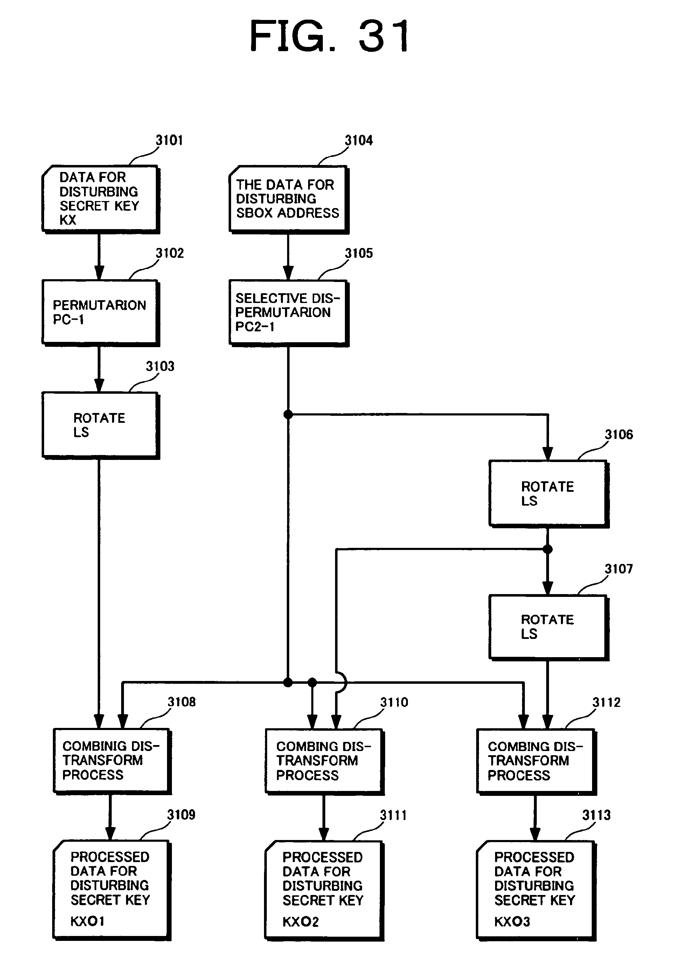

The following description explains data for disturbance of a secret key as well as generation of KXo1 first processed-secret-key disturbance data 3109, KXo2 second processed-secret-key disturbance data 3111 and KXo3 third processed-secret-key disturbance data 3113, which are each used for inverse transformation immediately following LS processing among pieces of key processing for rounds, by referring to a data flow shown in Fig. 31. In this embodiment, it is desired to output the following value:

$$X \ XOR \ XSoutX \qquad\qquad (Exp. \ 40)$$

where notation X denotes an ordinary output of selective permutation PC2.

Let notation PC1 ( ) denote selective permutation PC1, notation LS ( ) denote LS processing and notation K denote a key. In this embodiment, the key K is transformed in an XOR operation with secret-key disturbance data KX. Thus, in the first round, the following equations hold true:

$$K0 \ = \ LS \ (PC1 \ (KX \ XOR \ K)) \qquad (Eq. \ 41)$$

$$KXo1 \ = \ LS \ (PC1 \ (KX)) \ XOR \ INV\_PC2 \ (SinX1) \ (Eq. \ 42)$$

$$K1 \ = \ K0 \ XOR \ KXo1 \qquad\qquad (Eq. \ 43)$$

$$K1\_OUT \ = \ PC2 \ (K1) \qquad\qquad (Eq. \ 44)$$

By using an output from PC2 as K1_OUT, it is possible to obtain a value expressed by Exp. 40. Next, values for the second round are given as follows:

$$KXo2 \ = \ LS \ (INV\_PC2 \ (SinX1)) \ XOR \ INV\_PC2 \ (SinX1) (Eq. \ 45)$$

$$K2 \ = \ LS \ (K1) \ XOR \ KXo2 \qquad\qquad (Eq. \ 46)$$

$$K2\_OUT \ = \ PC2 \ (K2)$$

In a round wherein a 2-bit rotation is carried out in LS processing as is the case with the third round for example, the values are given as follows:

$$KXo3 \ = \ LS \ (LS(INV\_PC2 \ (SinX1))) \ XOR \ INV\_PC2 \ (SinX1)$$
$$(Eq. \ 47)$$

$$K3 \ = \ LS(LS \ (K2)) \ XOR \ KXo3$$

$$K3\_OUT = PC2 \; (K3) \qquad\qquad (Eq. \; 48)$$

By using an output from PC2 as K3_OUT, it is possible to obtain a value expressed by Exp. 40. Since there are only 2 types of bits shifted in LS processing, there are required 3 types of value, namely, KXo1 for the first round, KXo2 with a 1-bit shift in LS processing and KXo3 with a 2-bit shift in LS processing. With these 3 values, all kinds of inverse transformation can be carried out in the sixteenth round. Computations of KXo1, KXo2 and KXo3 which are expressed by Eqs. 41, 45 and 47 respectively are carried out in accordance with a data flow shown in Fig. 31. In this embodiment, transformation is implemented as an XOR operation. Thus, combining inverse transform processes 3108, 3110 and 3112 shown in Fig. 31 are also each carried out as an XOR operation in this embodiment.

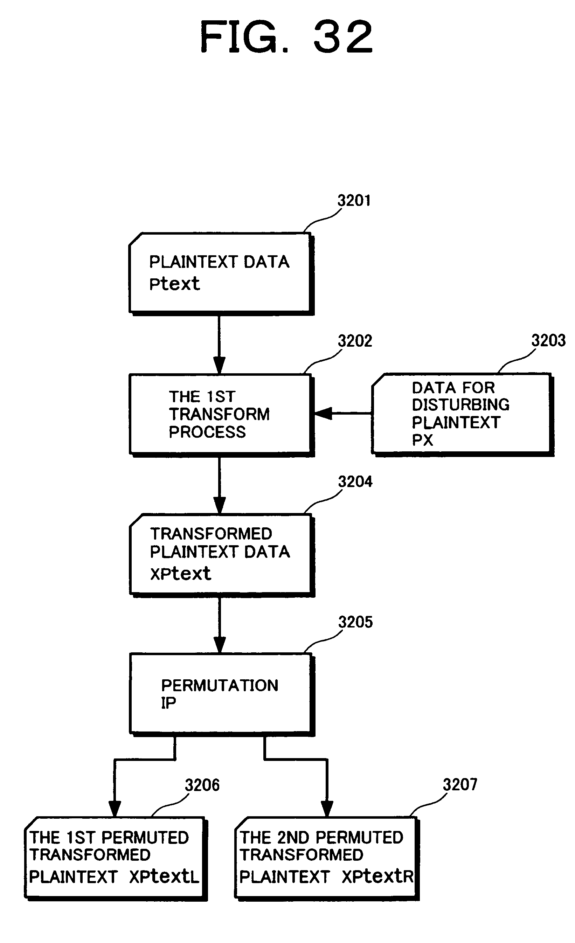

Fig. 32 is a diagram showing a data flow in an embodiment implementing a technique for transforming a Ptext plain text 3201.

The Ptext plain text 3201 is transformed by using PX plain-text disturbance data 3203 in a first transform process 3202 to produce XPtext transformed plain text 3204. The first transform process 3202 carried out in this embodiment is an XOR operation and can thus be expressed by Eq. 49 as follows:

$$XPtext = Ptext \; XOR \; PX \qquad (Eq. \; 49)$$

The XPtext transformed plain text 3204 is subjected to IP permutation 3205 for generating 32 high-order bits and 32 low-order bits, which are used as a XPtextL first permuted transformed plain text 3206 and a XPtextR second permuted transformed plain text 3207 respectively. If the first transformation process 3202 is eliminated from the data flow, a data flow of the ordinary DES encryption is obtained.

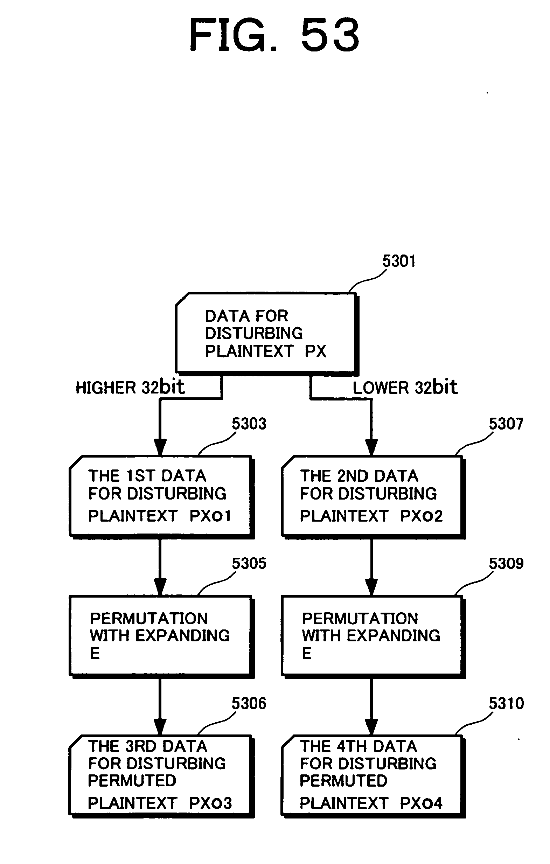

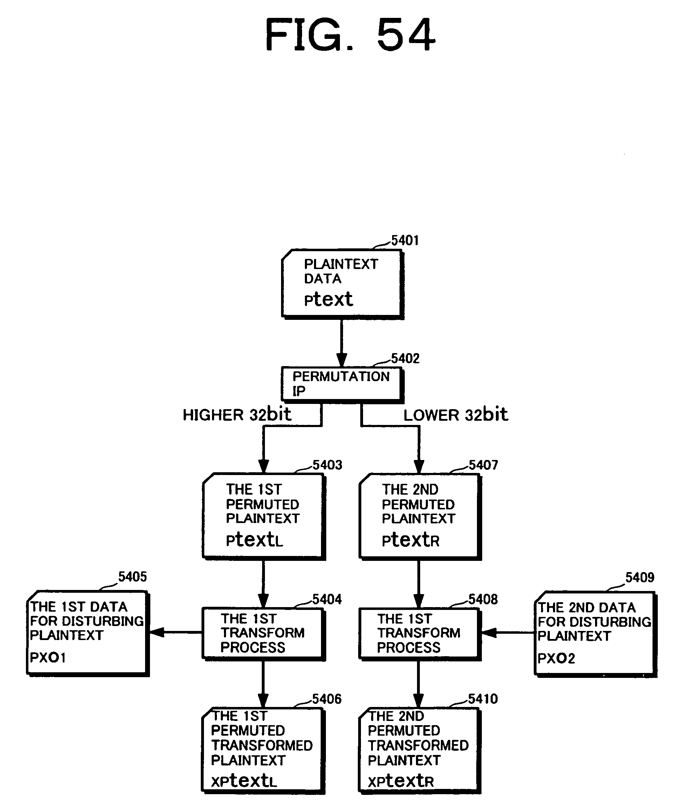

Fig. 54 is a diagram showing a data flow of another embodiment for generating a XPtextL first permuted transformed plain text and a XPtextR second permuted transformed plain text. As shown in the figure, in this other embodiment, a Ptext plain text 5401 is first subjected to IP permutation 5402 to generate the PtextL first permuted plain text 5403 and the XPtextR second permuted plain text respectively 5407 respectively. Then, a first transform method 5404 and a second transform method 5408 are used for transformations to generate the XPtextL first permuted transformed plain text 5406 and the XPtextR second permuted transformed plain text 5410 respectively. In this other embodiment, PXo1 plain-text disturbance data 5405 and PXo2 plain-text disturbance data 5409 are not involved in the IP permutation 5402, making the processing more efficient accordingly. Fig. 53 is a data flow in a first embodiment implementing a technique to process data for disturbance of a plain text.

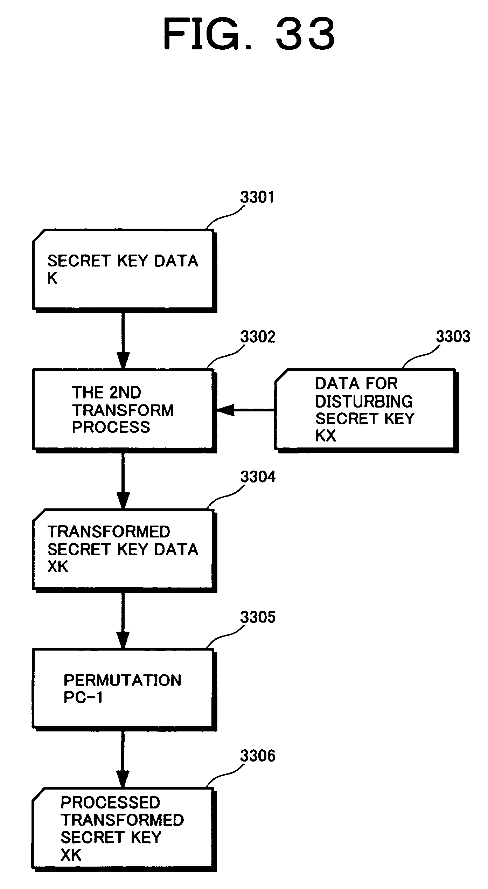

Fig. 33 is a diagram showing a data flow in an embodiment implementing a technique to process a K secret key 3301. As shown in the figure, the K secret key 3301 is subjected to a second transformation process 3302 using KX secret-key disturbance data 3303 to generate an XK transformed secret key 3304. The second transformation process 3302 carried out in this embodiment is an XOR operation and can thus be expressed by Eq. 50 as follows:

$$XK = K \; XOR \; KX \qquad (Eq. \; 50)$$

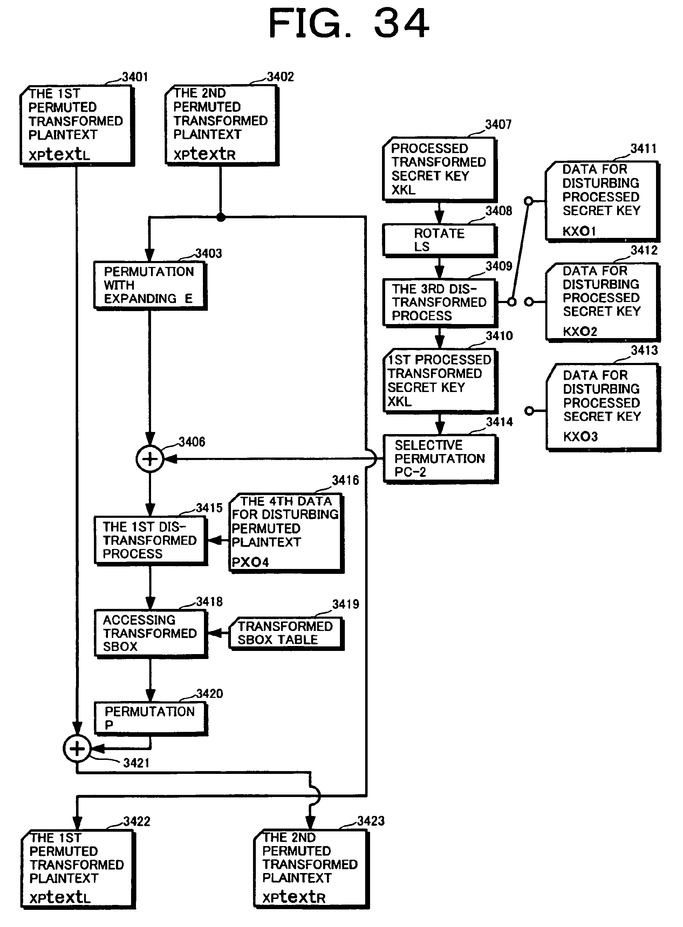

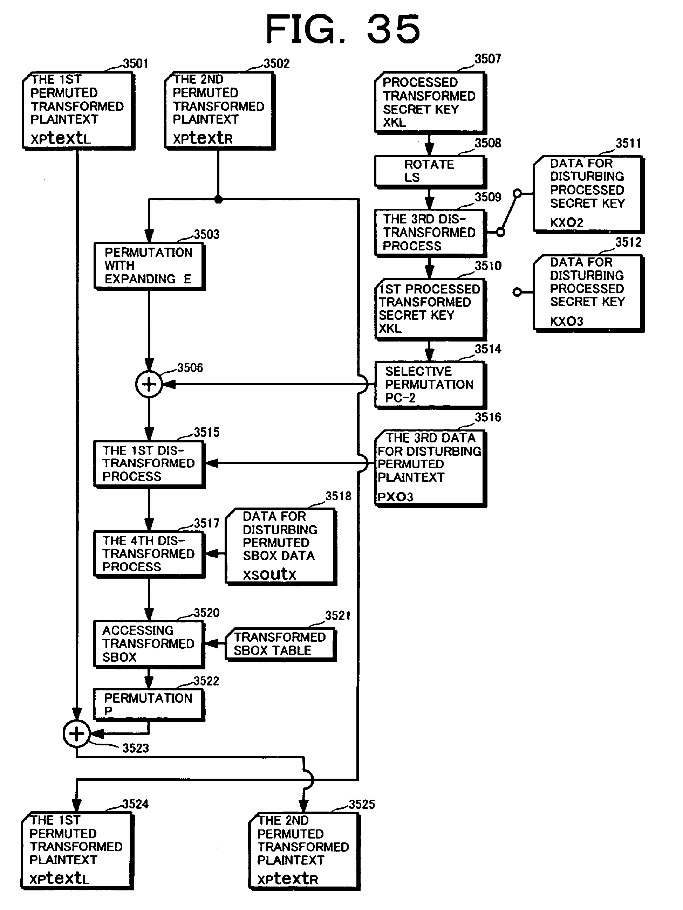

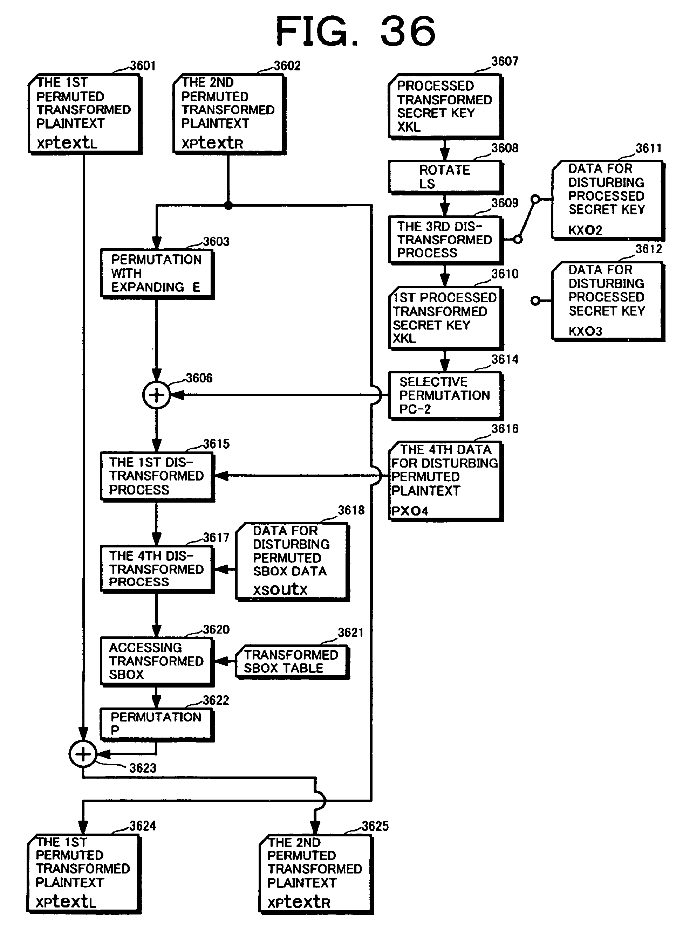

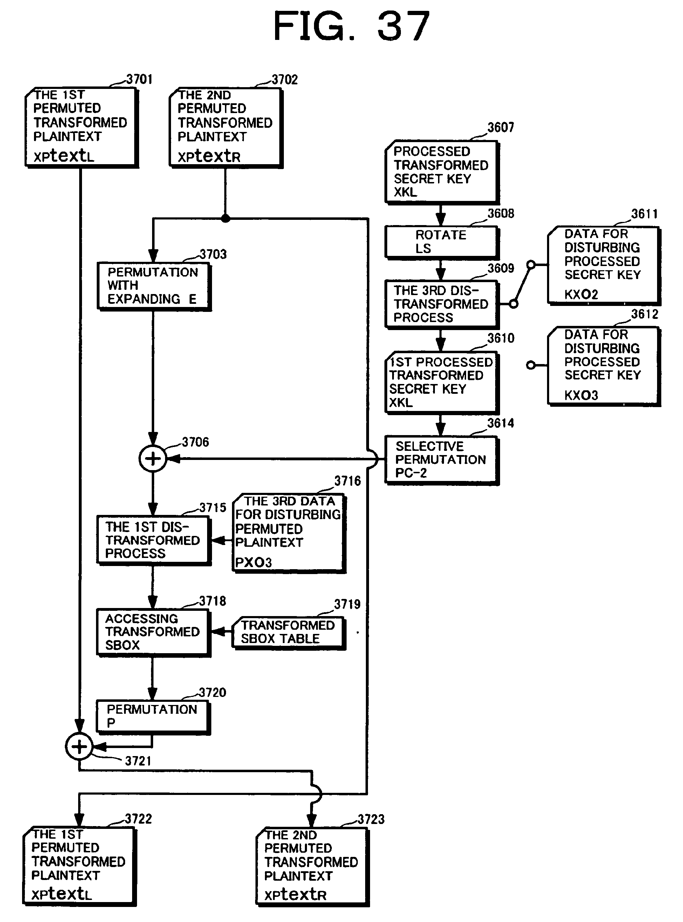

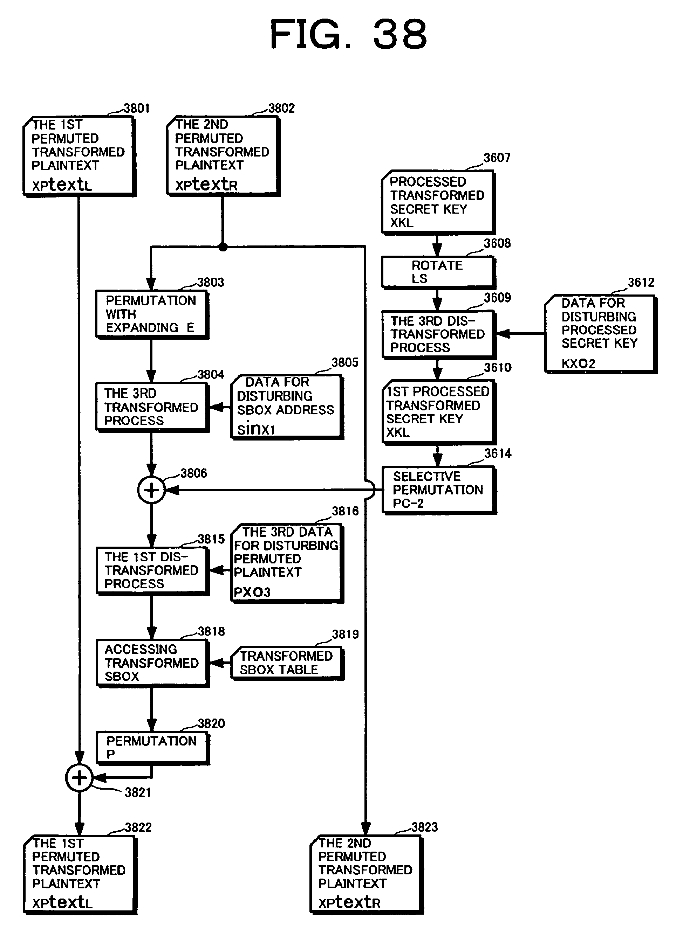

Next, pieces of processing in rounds are explained by referring to data flows shown in Figs. 34, 35, 36, 37 and 38. Due to differences between rounds, these 5 figures are different from each other in that, Fig. 34 shows a data flow for pieces of processing in the first, fifth, ninth and thirteenth rounds, Fig. 35 shows a data flow for pieces of processing in the second, sixth, tenth and fourteenth rounds, Fig. 36 shows a data flow for pieces of processing in the third, seventh, eleventh and fifteenth rounds, Fig. 37 shows a data flow for pieces of processing in the fourth, eighth and twelfth rounds whereas Fig. 38 shows a data flow for processing in the sixteenth rounds.

The data flow shown in Fig. 34 is explained as follows. In this data flow, notation PtextL denotes a pre-processing value of an XPtextL first permuted transformed plain text 3401 which requires no further transformation. On the other hand, notation PtextR denotes a pre-processing value of an XPtextR second permuted transformed plain text 3402 which was not subjected to transformation. Thus, the XPtextL first permuted transformed plain text 3401 and the XPtextR second permuted transformed plain text 3402 can be expressed by Eqs. 51 and 52 respectively as follows:

$$XPtextL = PtextL \; XOR \; PXo1 \qquad (Eq. \; 51)$$

$$XPtextR = PtextR \ XOR \ PXo2 \qquad (Eq. \ 52)$$

By the same token, notation KL denotes a pre-processing value of a XKL processed transformed secret key 3407 which requires no further transformation. The value XKL0 of the XKL processed transformed secret key 3407 is expressed by Eq. 53 as follows:

$$XKL0 = KL \ XOR \ PC1 \ (KX) \qquad (Eq. \ 53)$$

where notation PC1 ( ) denotes selective permutation PC1.

Let notation XKL1 denote the value of XKL first processed transformed secret key 3410 output by a third transformation process 3409 and notation INV_PC2 ( ) denote the inverse function of the selective permutation PC. The value of a bit not referenced by PC2 ( ) is set at 0 by INV_PC2 ( ). Processed-secret-key-disturbance data used in the third transformation process 3409 is determined by the number of bits shifted in rotate processing LS 3408 carried out in the round. If the number of shifted bits is 1, KXo2 is used. If the number of shifted bits is 2, KXo3 is used. In the case of a first round, KXo1 is used.

$$XKL1 = LS \ (XKL0) \ XOR \ KXo1 \qquad (Eq. \ 54)$$

Substituting the right-side expression of Eq. 53 for XKL0 in Eq. 54 yields Eq. 55 as follows:

$$XKL1 = LS \ (KL \ XOR \ PC1 \ (KX)) \ XOR \ KXo1 \qquad (Eq. \ 55)$$

By the way, Eqs. 56 and 57 below hold true:

$$LS \ (a \ XOR \ b) = LS \ (a) \ XOR \ LS \ (b) \qquad (Eq. \ 56)$$

$$(a \ XOR \ b) \ XOR \ c = a \ XOR \ (b \ XOR \ c) \qquad (Eq. \ 57)$$

Applying the relations of Eqs. 56 and 57 and substituting the right-side expression of Eq. 42 for KXo1 in Eq. 55 yield Eq. 58 as follows:

$$XKL1 = LS \ (KL \ XOR \ PC1 \ (KX)) \ XOR \ (LS \ (PC1 \ (KX)) \ XOR$$

$$INV\_PC2 \ (SinX1))$$

$$= LS \ (KL \ XOR \ PC1 \ (KX) \ XOR \ PC1 \ (KX)) \ XOR$$

$$INV\_PC2 \ (SinX1)$$

$$= LS \ (KL) \ XOR \ INV\_PC2 \ (SinX1) \qquad (Eq. \ 58)$$

Let notation XKL1PC2 denote a value obtained as a result of executing PC-2 selective permutation 3414 for XKL1 as follows:

$$XKL1PC2 = PC2\ (XKL1)$$

$$= PC2\ (LS\ (KL)\ XOR\ INV\_PC2\ (SinX1))$$

$$= PC2\ (LS\ (KL))\ XOR\ SinX1 \qquad (Eq.\ 59)$$

While the first round has been explained so far, in the fifth, ninth and thirteenth rounds, the output of the PC-2 selective permutation is the value of the expression (PC2 (LS (KL)) XOR SinX1), or a value with no transformation.

By the way, Eq. 60 below holds true:

$$XPtextRX = E\ (XPtextR)\ XOR\ XKL1PC2 \qquad (Eq.\ 60)$$

where notation XPtextRX denotes a result of an XOR operation 3404 and the function E ( ) represents the E permutation with expansion denoted by reference numeral 3403. Substituting the right-side expressions of Eqs. 52 and 59 for XPtextR and XKL1PC2 in Eq. 60 yields Eq. 61 as follows:

$$XPtextRX = E\ (PtextR\ XOR\ PXo2)\ XOR\ PC2\ (LS\ (KL))\ XOR$$

$$SinX1$$

$$= E\ (PtextR)\ XOR\ PC2\ (LS\ (KL))\ XOR\ E\ (PXo2)$$

$$XOR\ SinX1 \qquad (Eq.\ 61)$$

Let notation XPtextRX2 denote the result of a first inverse-transformation process 3415 using PXo4 fourth permuted-plain-text-disturbance data 3416. Since the first inverse-transformation process 3415 is an XOR operation, XPtextRX2 can be expressed by Eq. 62 as follows:

$$XPtextRX2 = XPtextR\ XOR\ PXo4$$

$$= E\ (PtextR)\ XOR\ PC2\ (LS\ (KL))\ XOR\ E$$

$$(PXo2)\ XOR\ SinX1\ XOR\ PXo4 \qquad (Eq.\ 62)$$

From the embodiment shown in Fig. 30,

$$PXo4 = E\ (PXo2) \qquad (Eq.\ 63)$$

Thus, substituting the right-side expression of Eq. 63 for PXo4 in Eq. 62 yields Eq. 64 as follows:

$$XPtextRX2 = XPtextR\ XOR\ PXo4$$

$$= E\ (PtextR)\ XOR\ PC2\ (LS\ (KL))\ XOR\ E$$

$$(PXo2)\ XOR\ SinX1\ XOR\ E\ (PXo2)$$

$$= E\ (PtextR)\ XOR\ PC2\ (LS\ (KL))\ XOR\ SinX1$$

$$(Eq.\ 64)$$

The value PtextRX2 serving as an input to transformed-SBOX-table access processing 3418 for a case with no transformation is given by Eq. 65 as follows:

$$PtextRX2 = E\ (PtextR)\ XOR\ PC2\ (LS\ (KL))\ (Eq.\ 65)$$

Thus, Eq. 64 can be rewritten into Eq. 66 as follows:

$$XPtextRX2 = PtextRX2\ XOR\ SinX1 \qquad (Eq.\ 66)$$

Comparison with a value for a case with no transformation indicates that XPtextRX2 is equal to a value obtained as a result of an XOR operation with the SBOX-address-disturbance data SinX1. Thus, an access can be made to a transformed SBOX table 3419. Since a result of such an access has been transformed by SoutX, an input to an XOR operation 3421 is given by Exp. 67 as follows:

$$P\ (SResult\ XOR\ Soutx) \qquad (Exp.\ 67)$$

where notation SResult denotes the SBOX output for a case with no transformation.

A result of an XOR operation 3421 carried out on Exp. 67 and an XPtextL first permuted transformed plain text 3401 is given by Exp. 68 as follows:

$$P\ (SResult\ XOR\ Soutx)\ XOR\ PtextL$$

$$= P\ (SResult)\ XOR\ P\ (Soutx)\ XOR\ XPtextL\ XOR\ PTextL$$

$$XOR\ PXo1 \qquad (Eq.\ 68)$$

The value of the right-side expression in Eq. 68 is substituted for an XPtextR second permuted transformed plain text 3423. Let notation PtextR2 denote the value substituted for the XPtextR second permuted transformed plain text 3423 for a case with no transformation and notation XPtextR2 denote the value substituted for the XPtextR second permuted transformed plain text 3423 for a case with a transformation. PtextR2 and XPtextR2 satisfy Eq. 69 as follows:

$$XPtextR2 = PtextR2\ XOR\ P\ (SoutX)\ XOR\ PXo1(Eq.\ 69)$$

By the same token, let notation PtextL2 denote the value substituted for the XPtextL first permuted transformed plain text 3422 for a case with no transformation and notation XPtextL2 denote the value substituted for the XPtextL first permuted transformed plain text 3422 for a case with a transformation. PtextR2 and XPtextR2 satisfy Eq. 69 as follows:

$$XPtextL2 = PtextL2 \; XOR \; PXo2 \qquad (Eq. \; 70)$$

The values of the right-side expressions of Eqs. 69 and 70 are used in a next round represented by a data flow shown in Fig. 35. Comparison of Eq. 69 with Eq. 51 indicates that, in Eq. 69, PXo1 is used in place of PXo2 and P (SoutX) is newly added as an XOR operand. These differences cause differences between the rounds represented by the data flows shown in Figs. 34 and 35 as follows. The PXo4 fourth permuted-plain-text disturbance data 3416 used in the first inverse-transformation process 3415 of the data flow shown in Fig. 34 is replaced by PXo3 third permuted-plain-text disturbance data 3516 used in a first inverse-transformation process 3515 of the data flow shown in Fig. 35. In order to restore a result of transformation using P (SoutX), a fourth inverse-transformation process 3517 is added. Before the fourth inverse-transformation process 3517 is carried out, P (SoutX) is subjected to expansion permutation E ( ), being converted into E (P(SoutX)) which is equal to the permuted-SBOX-table-disturbance data XSoutX.

Let notation PtextR3 denote the value substituted for the XPtextR second permuted transformed plain text 3525 for a case with no transformation shown in Fig. 35, notation XPtextR3 denote the value substituted for the XPtextR second permuted transformed plain text 3525 for a case with the transformation, notation PtextL3 denote the value substituted for the XPtextL first permuted transformed plain text 3524 for a case with no transformation and notation XPtextL3 denote the value substituted for the XPtextL first permuted transformed plain text 3524 for a case with the transformation. PtextR3 and XPtextR3 satisfy Eq. 71 while PtextL3 and XPtextL3 satisfy Eq. 72 as follows:

$$XPtextR3 = PtextR3 \; XOR \; P \; (SoutX) \; XOR \; PXo2 \; (Eq. \; 71)$$

$$XPtextL3 = PtextL3 \; XOR \; P \; (SoutX) \; XOR \; PXo1 \; (Eq. \; 72)$$

The values of the right-side expressions of Eqs. 71 and 72 are used in a next round represented by a data flow shown in Fig. 36. Comparison of Eq. 71 with Eq. 69 indicates that, in Eq. 71, PXo2 is used in place of PXo1. This difference causes a difference between the rounds represented by the data flows shown in Figs. 35 and 36 as follows. The PXo3 third permuted-plain-text disturbance data 3516 used in the first inverse-transformation process 3515 of the data flow shown in Fig. 35 is replaced by PXo4 fourth permuted-plain-text disturbance data 3616 used in a first inverse-transformation process 3615 of the data flow shown in Fig. 36. In addition, in both inputs to an XOR operation 3623, P (SoutX) has completed an XOR operation. Thus, the effect of P (SoutX) is nullified to result in the following.

Let notation PtextR4 denote the value substituted for the XPtextR second permuted transformed plain text 3625 for a case with no transformation shown in Fig. 36, notation XPtextR4 denote the value substituted for the XPtextR second permuted transformed plain text 3625 for a case with the transformation, notation PtextL4 denote the value substituted for the XPtextL first permuted transformed plain text 3624 for a case with no transformation and notation XPtextL4 denote the value substituted for the XPtextL first permuted transformed plain text 3624 for a case with the transformation. PtextR4 and XPtextR4 satisfy Eq. 73 while PtextL4 and XPtextL4 satisfy Eq. 74 as follows:

$$XPtextR4 = PtextR4 \; XOR \; PXo1 \qquad (Eq. \; 73)$$

$$XPtextL4 = PtextL4 \; XOR \; P \; (SoutX) \; XOR \; PXo2 \; (Eq. \; 74)$$

The values of the right-side expressions of Eqs. 73 and 74 are used in a next round represented by a data flow shown in Fig. 37. Comparison of Eq. 73 with Eq. 71 indicates that, in Eq. 73, PXo1 is used in place of PXo2. In addition, Eq. 73 does not include P (SoutX) as an XOR operand. This difference causes a difference between the rounds represented by the data flows shown in Figs. 36 and 37 as follows. The PXo4 fourth permuted-plain-text disturbance data 3616 used in the first inverse-transformation process 3615 of the data flow shown in Fig. 36 is replaced by PXo3 third permuted-plain-text disturbance data 3716 used in a first inverse-transformation process 3715 of the data flow shown in Fig. 37. Since it is not necessary to nullify the effect of the transformation using P (SoutX), the fourth inverse-transformation process is no longer required. In addition, in both inputs to an XOR operation 3721, P (SoutX) has completed an XOR operation. Thus, the effect of P (SoutX) is nullified to result in the following.

Let notation PtextR5 denote the value substituted for the XPtextR second permuted transformed plain text

EP 1 244 077 B1

3723 for a case with no transformation shown in Fig. 37, notation XPtextR5 denote the value substituted for the XPtextR second permuted transformed plain text 3723 for a case with the transformation, notation PtextL5 denote the value substituted for the XPtextL first permuted transformed plain text 3722 for a case with no transformation and notation XPtextL5 denote the value substituted for the XPtextL first permuted transformed plain text 3722 for a case with the transformation. PtextR5 and XPtextR5 satisfy Eq. 75 while PtextL5 and XPtextL5 satisfy Eq. 75 as follows:

$$XPtextR5 = PtextR5 \; XOR \; PXo2 \qquad (Eq. \; 75)$$

$$XPtextL5 = PtextL5 \; XOR \; PXo1 \qquad (Eq. \; 76)$$

Since the transformations expressed by Eqs. 75 and 76 are identical with those expressed by Eqs. 51 and 52 respectively, the next round can be implemented by the embodiment shown in Fig. 34.

A data flow shown in Fig. 38 is all but identical with that shown in Fig. 37 except that, in the data flow shown in Fig. 38, data is not swapped finally between XPtextL and XptextR. Let notation PtextR6 denote the value substituted for the XPtextR second permuted transformed plain text 3823 for a case with no transformation shown in Fig. 37, notation XPtextR6 denote the value substituted for the XPtextR second permuted transformed plain text 3823 for a case with the transformation, notation PtextL6 denote the value substituted for the XPtextL first permuted transformed plain text 3822 for a case with no transformation and notation XptextL6 denote the value substituted for the XPtextL first permuted transformed plain text 3822 for a case with the transformation. In this case, PtextR6 and XPtextR6 thus satisfy Eq. 77 while PtextL6 and XPtextL6 satisfy Eq. 78 as follows:

$$XPtextR6 = PtextR6 \; XOR \; PXo1 \qquad (Eq. \; 77)$$

$$XPtextL6 = PtextL6 \; XOR \; PXo2 \qquad (Eq. \; 78)$$

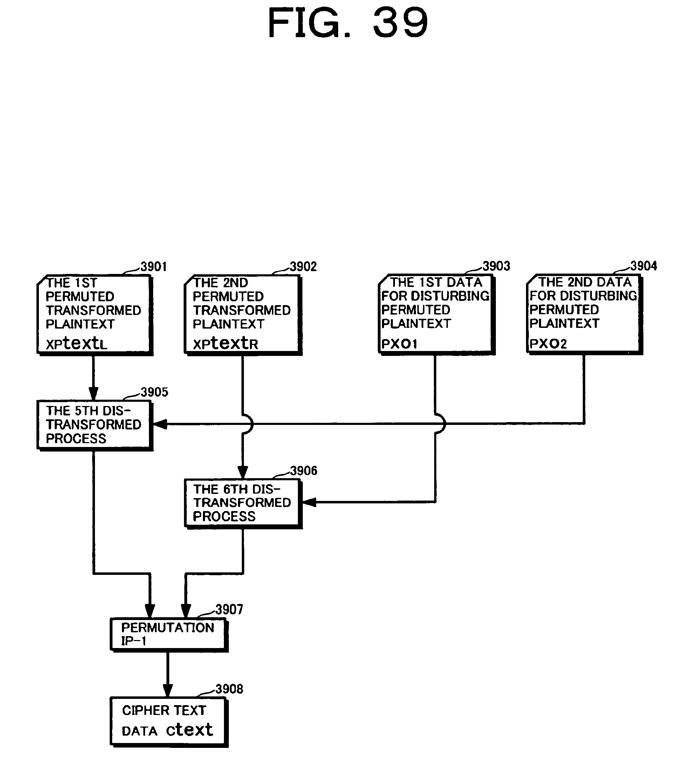

Fig. 39 is a data flow for finding a final result. A fifth inverse-transformation process 3905 is carried out by using PXo2 second permuted-plain-text-disturbance data 3904 for carrying out inverse transformation on a XPtextL first permuted plain text 3901 as expressed by Eq. 79 below. By the same token, a sixth inverse-transformation process 3906 is carried out by using PXo1 first permuted-plain-text-disturbance data 3903 for carrying out inverse transformation on a XPtextR second permuted plain text 3902 as expressed by Eq. 80 below. As a result, effects of all transformations are eliminated.

$$PtextR6 = XPtextR6 \; XOR \; PXo1 \qquad (Eq. \; 79)$$

$$PtextL6 = XPtextL6 \; XOR \; PXo2 \qquad (Eq. \; 80)$$

Finally, an IP-1 permutation process 3907 is carried out to permute the results of the fifth inverse-transformation process 3905 and the sixth inverse-transformation process 3906 in order to generate a Ctext final encrypted text 3908. At any point of time in the course of the processing up to the generation of the Ctext final encrypted text 3908, data is in a state of being transformed. It is thus difficult to infer the original data by observation of the waveform of current consumption.

The SBOX-address-disturbance data SinX, the SBOX-content-disturbance data SoutX and the transformed SBOX table are created by adoption of the technique with the data flow implemented by an embodiment like the one shown in Fig. 19, 20, 21 or 22. The following description explains other embodiments wherein the hamming weight is constant all the time and it is even more difficult to infer the original data by observation of the waveform of current consumption.

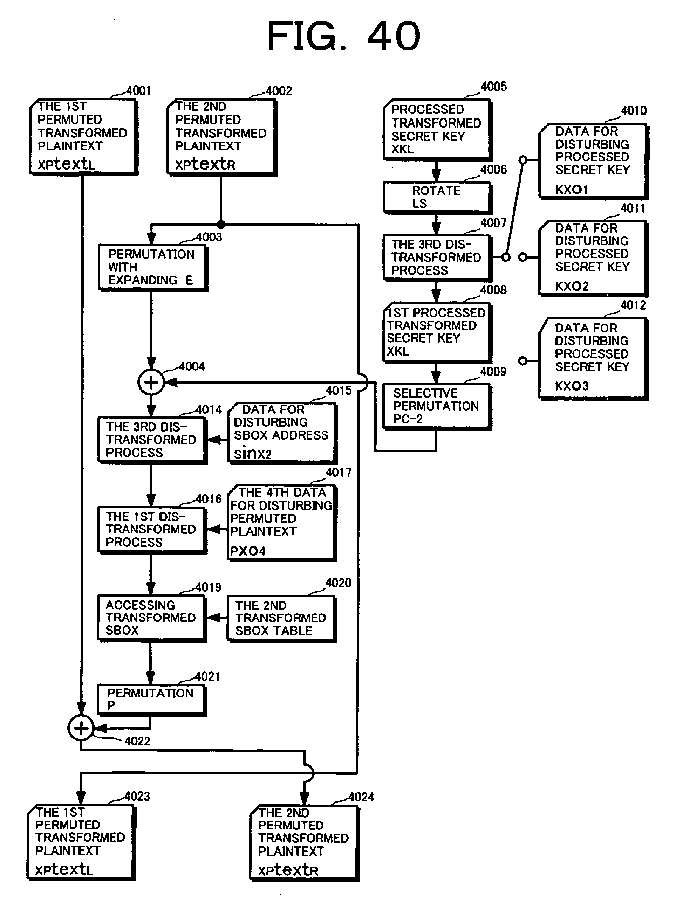

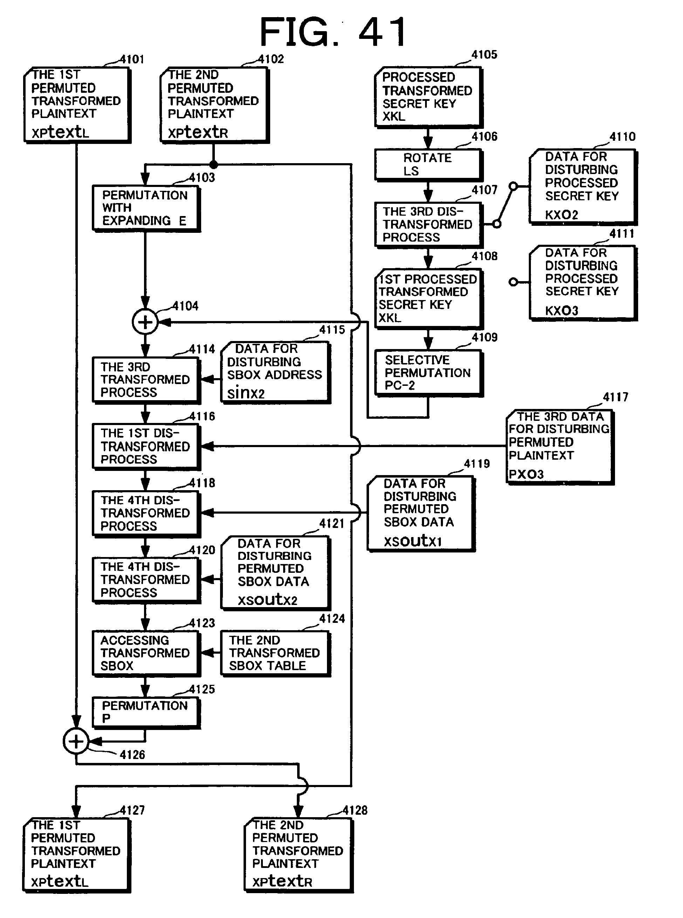

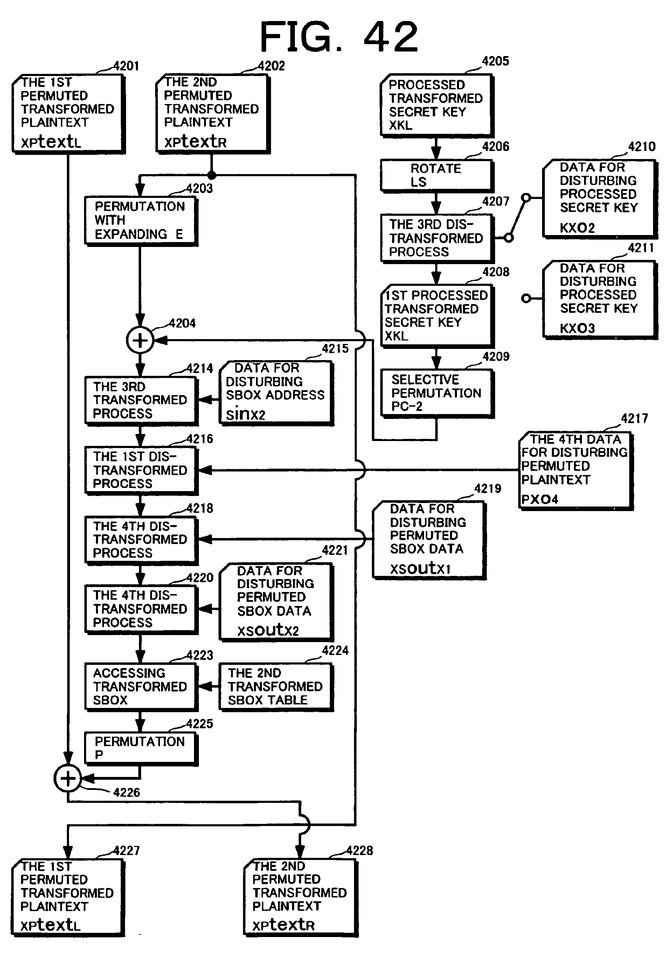

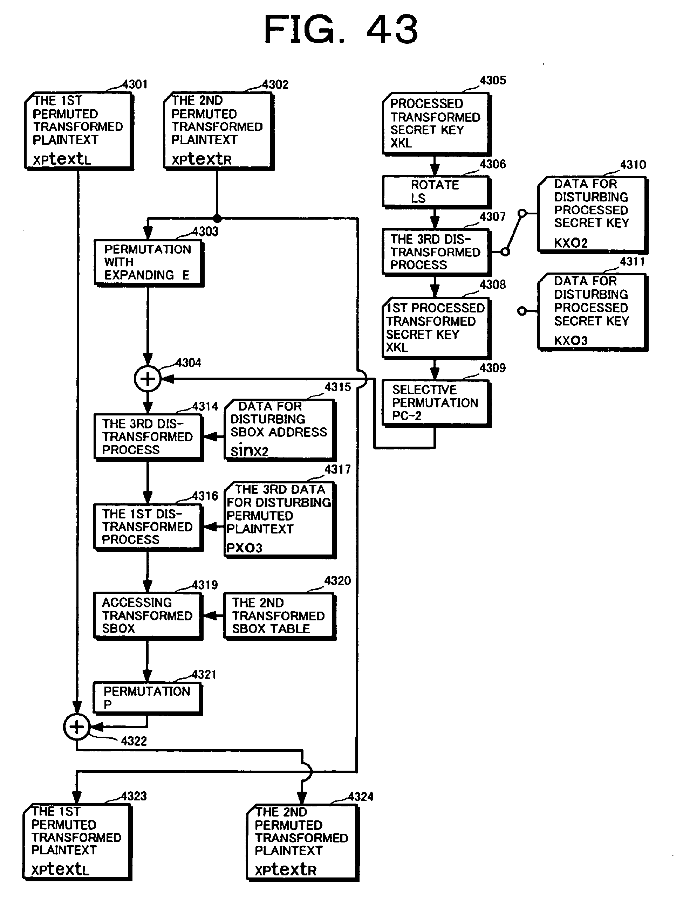

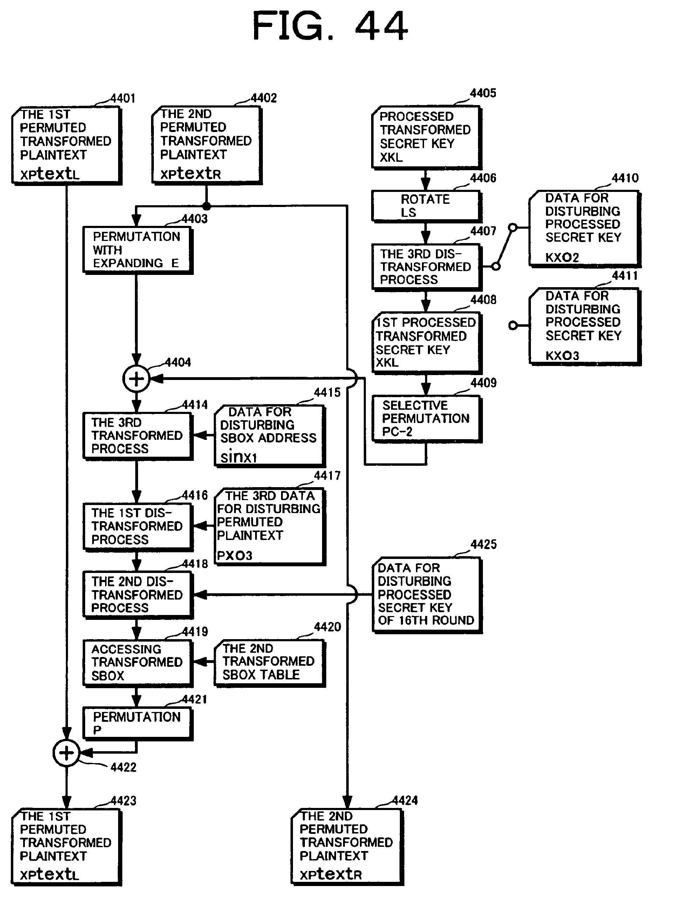

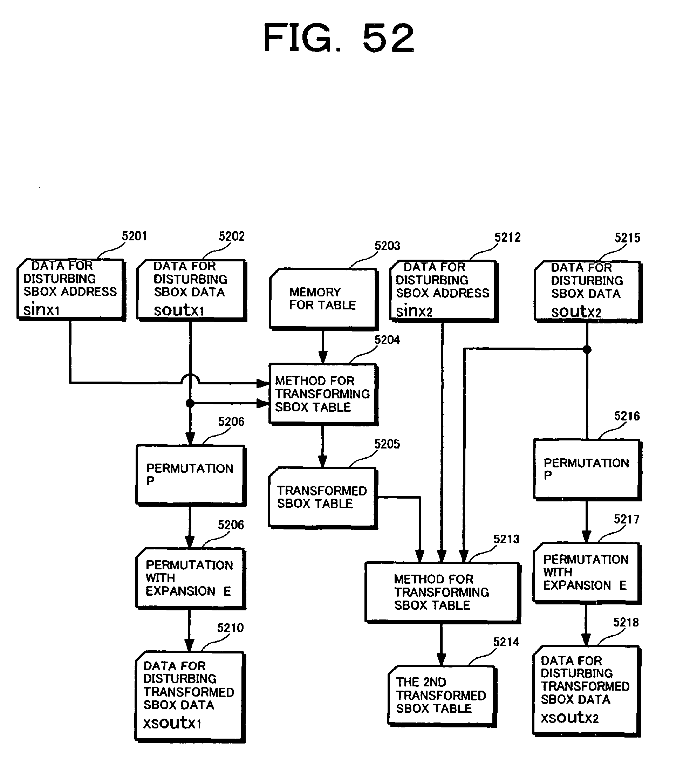

The other embodiments are shown in Figs. 39, 40, 41, 42, 43, 44, 45, 46, 47 and 52. While the basic procedures of these other embodiments are the same as the embodiments explained earlier by referring to Figs. 29, 30, 31, 32, 33, 34, 35, 36, 37, 38, 39, 45, 46 and 47, the former is different from the latter in that, in the case of these other embodiments, the transformation is carried out twice. An embodiment implementing a technique to transform a SBOX table is shown in Fig. 52. As shown in the figure, data for disturbance includes SinX1 first SBOX-address-disturbance data 5201, XSoutX1 first SBOX-content-disturbance data 5210, SinX2 second SBOX-address-disturbance data 5212 and XSoutX2 second SBOX-content-disturbance data 5218 to generate a second transformed SBOX table 5214. Since more pieces of SBOX-table-disturbance data are used, the embodiment implementing processing for the first, fifth, ninth and thirteenth rounds includes an additional third transforming process 4014 using SinX2 second permuted-SBOX-address-disturbance data 4015 as shown in Fig. 40. In addition, the embodiment implementing processing for the second, sixth, tenth and fourteenth rounds includes an additional third transforming process 4114 using SinX2 second SBOX-address-disturbance data 4115 and an additional fourth transforming process 4120 using XSoutX2 second permuted-SBOX-content-disturbance data 4121 as shown in Fig. 41. Furthermore, the embodiment implementing processing for the third, seventh, eleventh and fifteenth rounds includes an additional third transforming process 4214 using SinX2 second SBOX-address-disturbance data 4215 and an additional fourth transforming process 4220 using XSoutX2 second permuted-SBOX-content-disturbance data 4221 as shown in Fig. 42. Moreover, the embodiment implementing processing for the fourth, eighth and twelfth rounds includes an additional third transforming process 4314 using SinX2 second permuted-SBOX-address-disturbance data 4315 as shown in Fig. 43. Finally, the embodiment implementing processing for the sixteenth round includes an additional third transforming process 4414 using SinX2 second SBOX-address-disturbance data 4415 as shown in Fig. 44.

The first SBOX-address-disturbance data SinX1, the second SBOX-address-disturbance data SinX2, the first SBOX-content-disturbance data SoutX1, the second SBOX-content-disturbance data SoutX2 and the second transformed SBOX table are created by adoption of the technique with the data flow implemented by an embodiment like the one shown in Fig. 26, 27 or 28.

In another embodiment, the first SBOX-address-disturbance data SinX1, the second SBOX-address-disturbance data SinX2, the first SBOX-content-disturbance data SoutX1, the second SBOX-content-disturbance data SoutX2 and the second transformed SBOX table are created by adoption of the technique with the data flow like the one shown in Fig. 26, 27 or 28, and the hamming weight is examined not throughout the entire bits, but only for a limited number of bits that can be processed at one time by the central processing unit, in implementation of hamming-weight examination to keep the hamming weight constant.

In accordance with the embodiments of the present invention, by imposing additional restrictions on generation of data for disturbance in transformation of information processed in a chip of an IC card, it becomes difficult to infer processing and a secret key by observation of the waveform of current consumption.

## Claims

1. An information-processing apparatus serving as a data-processing means for carrying out a lookup operation on a table, carrying out data processing P on a lookup-operation result and outputting a result of said data processing as processed data, said information-processing apparatus comprising:

   a data transform means for transforming (1702) input data by using first disturbance data X1i to generate transformed data H1,
   a transformed-table access means for looking up (1705) a transformed table for transformed data H2 pointed to by said transformed data H1 used as an index of said transformed table;
   a transformed-data-processing means for processing (1708) said transformed data H2 to produce processed transformed data H3; and
   a data inverse-transform means for carrying out (1710) inverse transformation on said processed transformed data H3 by using processed second disturbance data X2o in order to generate processed D2 which can also be obtained without transformations as a result of said lookup operation carried out on said table by using said input data D1 and said data processing P carried out on said result of said lookup operation,
   wherein:

   said first disturbance data X1i has an all-time constant or all-time all but constant hamming weight;
   second disturbance data X2i has an all-time constant or all-time all but constant hamming weight and provides a constant or all but constant hamming weight to a result of data processing carried out on said second disturbance data X2i after said lookup operation, that is, processed second disturbance data X2o obtained as a result of said data processing P carried out on said second disturbance data X2i also has an all-time constant or all-time all but constant hamming weight as well; and

indexes of said table are transformed by using said first disturbance data X1i whereas said table's contents pointed to by said indexes are transformed by using said second disturbance data X2i to create said transformed table.

2. An information-processing apparatus according to claim 1, said information-processing apparatus further having:

a first constant-hamming-weight-random-number generation means for generating said first disturbance data X1i;

a second constant-hamming-weight-random-number generation means for generating said second disturbance data X2i;

a disturbance-data-processing means for processing said second disturbance data X2i to produce said transformed second disturbance data X2o;

a hamming-weight examination means for computing a hamming weight of said processed second disturbance data X2o and requesting said second constant-hamming-weight-random-number generation means to generate another value of said second disturbance data X2i in the case of an improper hamming weight of said processed second disturbance data X2o; and

a table transform means for creating.said transformed table by transformation of indexes of said table by using said first disturbance data X1i and transformation of contents of said table by using said second disturbance data X2i.

3. An information-processing apparatus according to claim 1, said information-processing apparatus further having:

a first-disturbance-data storage means for storing a plurality of numbers having uniform and constant or all but uniform and all but constant hamming weights;

a first-disturbance-data select means for randomly selecting one of said numbers stored in said first-disturbance-data storage means to be used as said first disturbance data X1i;

a second-disturbance-data storage means for storing a plurality of numbers having uniform and constant or all but uniform and all but constant hamming weights as well as providing uniform and constant or all but uniform and all but constant hamming weights to results of disturbance-data processing carried out on said numbers;

a second-disturbance-data select means for randomly selecting one of said numbers stored in said second-disturbance-data storage means to be used as said second disturbance data X2i;

a second-disturbance-data processing means for carrying out said disturbance-data processing on said second disturbance data X2i to generate said processed second disturbance data X2o; and

a table transform means for creating said transformed table by transformation of indexes of said table by using said first disturbance data X1i and transformation of contents of said table by using said second disturbance data X2i.

4. An information-processing apparatus according to claim 1, said information-processing apparatus further having:

a first-disturbance-data storage means for storing a plurality of numbers having uniform and constant or all but uniform and all but constant hamming weights;

a first-disturbance-data select means for randomly selecting one of said numbers stored in said first-disturbance-data storage means to be used as said first disturbance data X1i;

a second-disturbance-data and processed-second-disturbance-data storage means for storing a plurality of pairs each consisting of second disturbance data and processed second disturbance data, wherein said second disturbance data has a constant or all but constant hamming weight and provides a constant or all but constant hamming weight to said processed second disturbance data obtained as a result of disturbance-data processing carried out on said second disturbance data;

a second-disturbance-data and processed-second-disturbance-data select means for randomly selecting one of said pairs each consisting of second disturbance data and processed second disturbance data from said second-disturbance-data and processed-second-disturbance-data storage means to be used as a pair of said processed second disturbance data X2o and second disturbance data X2i; and

a table transform means for creating said transformed table by transformation of indexes of said table by using said first disturbance data X1i and transformation of contents of said table by using said second disturbance data X2i.

5. An information-processing apparatus according to claim 1, said information-processing apparatus further having:

a second-disturbance-data, processed-second-disturbance-data and transformed-table storage means for storing a plurality of sets each consisting of a candidate for said first disturbance data X1i, a candidate for said processed second disturbance data X2o and a candidate for said transformed table; and

a second-disturbance-data, processed-second-disturbance-data and transformed-table select means for randomly selecting one of said sets each consisting of a candidate for said first disturbance data X1i, a candidate for said processed second disturbance data X2o and a candidate for said transformed table from said second-disturbance-data, processed-second-disturbance-data and transformed-table storage means to be used as a set of said first disturbance data X1i, said processed second disturbance data X2o and said transformed table,

wherein:

said candidate for said transformed table is created by transformation of indexes of said table by using said candidate for said first disturbance data X1i and transformation of contents of said table by using said candidate for said second disturbance data X2i;

said candidate for said processed second disturbance data X2o is obtained as a result of processing carried out by disturbance-data processing means on said candidate for said second disturbance data X2i;

said candidate for said first disturbance data X1i has a constant hamming weight;

said candidate for said second disturbance data X2i has a constant hamming weight as well; and

said candidate for said processed second disturbance data X2o also has a constant hamming weight even after said processing carried out by said disturbance-data processing means.

## Patentansprüche

1. Informationsverarbeitungsvorrichtung, die als ein Datenverarbeitungsmittel dient zum Ausführen einer Suchoperation auf einer Tabelle, zum Ausführen einer Datenverarbeitung p auf einem Suchoperationsergebnis und zum Ausgeben eines Ergebnisses der Datenverarbeitung als verarbeitete Daten, wobei die Informationsverarbeitungsvorrichtung aufweist:

ein Datentransformiermittel zum Transformieren (1702) von Eingabedaten D1 durch Verwendung erster Stördaten X1i, um transformierte Daten H1 zu erzeugen,

ein "transformierte Tabelle"-Zugriffsmittel zum Durchsuchen (1705) einer transformierten Tabelle nach transformierten Daten H2, auf die gezeigt wird durch die transformierten Daten H1, die als ein Index der transformierten Tabelle verwendet werden;

ein "transformierte Daten"-Verarbeitungsmittel zum Verarbeiten (1708) der transformierten Daten H2, um verarbeitete transformierte Daten H3 zu erzeugen; und

ein Daten-Invers-Transformations-Mittel zum Ausführen (1710) einer inversen Transformation auf den verarbeiteten transformierten Daten H3 durch Verwendung verarbeiteter zweiter Stördaten X2o, um verarbeitete D2 zu erzeugen, die auch erlangt werden können ohne Transformationen als ein Ergebnis der Suchoperation, die auf der Tabelle durchgeführt wird, durch Verwendung der Eingabedaten D 1 und der Datenverarbeitung p, die auf dem Ergebnis der Suchoperation ausgeführt wird,

wobei:

die ersten Stördaten X1i eine immer-konstante oder fast immer-konstante Hamming-Gewichtung haben;

zweite Stördaten X2i eine immer-konstante oder fast immer-konstante Hamming-Gewichtung haben und eine konstante oder fast konstante Hamming-Gewichtung vorsehen für ein Ergebnis einer Datenverarbeitung, die ausgeführt wird auf den zweiten Stördaten X2i nach der Suchoperation, das heißt, verarbeitete zweite Stördaten X2o, erlangt als ein Ergebnis der Datenverarbeitung p, die auf den zweiten Stördaten X2i ausgeführt wird, haben ebenfalls eine immer-konstante oder fast immer-konstante Hamming-Gewichtung; und

Indizes der Tabelle transformiert werden durch Verwendung der ersten Stördaten X1i, während die Inhalte der Tabelle, auf die die Indizes zeigen, transformiert werden durch Verwendung der zweiten Stördaten X2i, um die transformierte Tabelle zu erzeugen.

2. Informationsverarbeitungsvorrichtung gemäß Anspruch 1, wobei die Informationsverarbeitungsvorrichtung weiter aufweist:

ein erstes "konstante Hamming-Gewichtung"-Zufallszahlerzeugungs-Mittel zum Erzeugen der ersten Stördaten X1i;

ein zweites "konstante Hamming-Gewichtung"-Zufallszahlerzeugungs-Mittel zum Erzeugen der zweiten Stördaten X2i;

ein Stördaten-Verarbeitungsmittel zum Verarbeiten der zweiten Stördaten X2i, um die transformierten zweiten Stördaten X2o zu erzeugen;

ein Hamming-Gewichtung-Untersuchungsmittel zum Berechnen einer Hamming-Gewichtung der verarbeiteten zweiten Stördaten X2o und Auffordern des zweiten "konstante Hamming-Gewichtung"-Zufallszahlerzeugungs-Mittels, einen weiteren Wert der zweiten Stördaten X2i zu erzeugen in dem Fall einer ungeeigneten Hamming-Gewichtung der verarbeiteten zweiten Stördaten X2o; und

ein Tabellen-Transformations-Mittel zum Erzeugen der transformierten Tabelle durch Transformation von Indizes der Tabelle durch Verwendung der ersten Stördaten X1i und Transformation von Inhalten der Tabelle durch Verwendung der zweiten Stördaten X2i.

**3.** Informationsverarbeitungsvorrichtung gemäß Anspruch 1, wobei die Informationsverarbeitungsvorrichtung weiter aufweist:

ein "erste Stördaten"-Speichermittel zum Speichern einer Vielzahl von Zahlen, die einheitliche und konstante oder fast einheitliche und fast konstante Hamming-Gewichtungen haben;

ein "erste Stördaten"-Auswahlmittel zum zufälligen Auswählen einer der Zahlen, die in dem "erste Stördaten"-Speichermittel gespeichert sind, zur Verwendung als die ersten Stördaten X1i;

ein "zweite Stördaten"-Speichermittel zum Speichern einer Vielzahl von Zahlen, die einheitliche und konstante oder fast einheitliche und konstante Hamming-Gewichtungen haben, sowie zum Vorsehen von einheitlichen und konstanten oder fast einheitlichen und fast konstanten Hamming-Gewichtungen auf Ergebnisse einer Stördaten-Verarbeitung, die auf den Zahlen ausgeführt wird;

ein "zweite Stördaten"-Auswahlmittel zum zufälligen Auswählen einer der Zahlen, die in dem "zweite Stördaten"-Speichermittel gespeichert sind, zur Verwendung als die zweiten Stördaten X2i; ein "zweite Stördaten"-Verarbeitungsmittel zum Ausführen der Stördatenverarbeitung auf den zweiten Stördaten X2i, um die verarbeiteten zweiten Stördaten X2o zu erzeugen; und

ein Tabellen-Transformations-Mittel zum Erzeugen der transformierten Tabelle durch Transformation von Indizes der Tabelle durch Verwendung der ersten Stördaten X1i und Transformation von Inhalten der Tabelle durch Verwendung der zweiten Stördaten X2i.

**4.** Informationsverarbeitungsvorrichtung gemäß Anspruch 1, wobei die Informationsverarbeitungsvorrichtung weiter aufweist:

ein "erste Stördaten"-Speichermittel zum Speichern einer Vielzahl von Zahlen, die einheitliche und konstante oder fast einheitliche und fast konstante Hamming-Gewichtungen haben;

ein "erste Stördaten"-Auswahlmittel zum zufälligen Auswählen einer der Zahlen, die in dem "erste Stördaten"-Speichermittel gespeichert sind, zur Verwendung als die ersten Stördaten X1i;

ein "zweite Stördaten"- und "verarbeitete zweite Stördaten"-Speichermittel zum Speichern einer Vielzahl von Paaren, die jeweils aus zweiten Stördaten und verarbeiteten zweiten Stördaten bestehen, wobei die zweiten Stördaten eine konstante oder fast konstante Hamming-Gewichtung haben und eine konstante oder fast konstante Hamming-Gewichtung für die verarbeiteten zweiten Stördaten vorsehen, die erlangt werden als ein Ergebnis einer Stördaten-Verarbeitung, die auf den zweiten Stördaten ausgeführt wird;

ein "zweite Stördaten"- und "verarbeitete zweite Stördaten"-Auswahlmittel zum zufälligen Auswählen eines der Paare, die jeweils bestehen aus zweiten Stördaten und verarbeiteten zweiten Stördaten aus dem "zweite Stördaten"- und "verarbeitete zweite Stördaten"-Speichermittel, zur Verwendung als ein Paar der verarbeiteten zweiten Stördaten X2o und zweiten Stördaten X2i; und

ein Tabellen-Transformations-Mittel zum Erzeugen der transformierten Tabelle durch Transformation von Indizes der Tabelle durch Verwendung der ersten Stördaten X1i und Transformation von Inhalten der Tabelle durch Verwendung der zweiten Stördaten X2i.

**5.** Informationsverarbeitungsvorrichtung gemäß Anspruch 1, wobei die Informationsverarbeitungsvorrichtung weiter aufweist:

ein "zweite Stördaten"-, "verarbeitete zweite Stördaten"- und "transformierte Tabelle"-Speichermittel zum Speichern einer Vielzahl von Sätzen, die jeweils bestehen aus einem Kandidaten für die ersten Stördaten X1i, einem Kandidaten für die verarbeiteten zweiten Stördaten X2o und einem Kandidaten für die transformierte Tabelle; und

ein "zweite Stördaten"-, "verarbeitete zweite Stördaten"- und "transformierte Tabelle"-Auswahlmittel zum zufälligen Auswählen eines der Sätze, die jeweils bestehen aus einem Kandidaten für die ersten Stördaten X1i, einem Kandidaten für die verarbeiteten zweiten Stördaten X2o und einem Kandidaten für die transformierte Tabelle aus dem "zweite Stördaten"-, "verarbeitete zweite Stördaten"- und "transformierte Tabelle"-Speichermittel zur Verwendung als ein Satz der ersten Stördaten X1i, der verarbeiteten zweiten Stördaten X2o und der transformierten Tabelle,
wobei:

der Kandidat für die transformierte Tabelle erzeugt wird durch Transformation von Indizes der Tabelle durch Verwendung des Kandidaten für die ersten Stördaten X1i und Transformation von Inhalten der Tabelle durch Verwendung des Kandidaten für die zweiten Stördaten X2i;

wobei der Kandidat für die verarbeiteten zweiten Stördaten X2o erlangt wird als ein Ergebnis einer Verarbeitung, die ausgeführt wird von dem Stördaten-Verarbeitungsmittel auf dem Kandidaten für die zweiten Stördaten X2o; wobei der Kandidat für die ersten Stördaten X1i eine konstante Hamming-Gewichtung hat; wobei der Kandidat für die zweiten Stördaten X2i ebenfalls eine konstante Hamming-Gewichtung hat; und wobei der Kandidat für die verarbeiteten zweiten Stördaten X2o ebenfalls eine konstante Hamming-Gewichtung hat, auch nach der Verarbeitung, die durch das Stördaten-Verarbeitungsmittel ausgeführt wird.

## Revendications

1. Appareil de traitement de l'information servant de moyen de traitement de données pour réaliser une opération de recherche sur un tableau, réaliser un traitement de données p sur un résultat d'opération de recherche et émettre un résultat dudit traitement de données à titre de données traitées, ledit appareil de traitement de l'information comprenant :

   un moyen de transformation des données pour transformer (1702) des données d'entrée D1 en utilisant des premières données de perturbation X1i pour générer des données transformées H1,
   un moyen d'accès au tableau transformé pour rechercher (1705) dans un tableau transformé des données transformées H2 pointées par lesdites données transformées H1 utilisées comme un indice dudit tableau transformé ;
   un moyen de traitement des données transformées pour traiter (1708) lesdites données transformées H2 afin de produire des données transformées traitées H3 ; et
   un moyen de transformation inverse des données pour réaliser (1710) une transformation inverse sur lesdites données transformées traitées H3 en utilisant des deuxièmes données de perturbation X2o traitées afin de générer des données traitées D2 qui peuvent être aussi obtenues sans transformations sous la forme d'un résultat de ladite opération de recherche réalisée sur ledit tableau en utilisant lesdites données d'entrée D1 et ledit traitement de données p réalisé sur ledit résultat de ladite opération de recherche,

   dans lequel :

   lesdites premières données de perturbation X1i ont un poids de Hamming constant tout le temps ou presque constant tout le temps ;
   lesdites deuxièmes données de perturbation X2i ont un poids de Hamming constant tout le temps ou presque constant tout le temps et donnent un poids de Hamming constant ou presque constant à un résultat du traitement des données réalisé sur lesdites deuxièmes données de perturbation X2i après ladite opération de recherche, ce qui veut dire que les deuxièmes données de perturbation traitées X2o obtenues sous la forme d'un résultat dudit traitement des données p réalisé sur lesdites deuxièmes données de perturbation X2i ont aussi un poids constant tout le temps ou presque constant tout le temps également ; et
   les indices dudit tableau sont transformés en utilisant lesdites premières données de perturbation X1i alors que lesdits contenus du tableau pointés par lesdits indices sont transformés en utilisant lesdites deuxièmes données de perturbation X2i pour créer ledit tableau transformé.

2. Appareil de traitement de l'information selon la revendication 1, ledit appareil de traitement de l'information comprenant en outre :

   un premier moyen de génération d'un nombre aléatoire de poids de Hamming constant pour générer lesdites premières données de perturbation X1i ;

un deuxième moyen de génération d'un nombre aléatoire de poids de Hamming constant pour générer lesdites deuxièmes données de perturbation X2i ;

un moyen de traitement des données de perturbation pour traiter lesdites deuxièmes données de perturbation X2i afin de produire lesdites deuxièmes données de perturbation transformées X2o ;

un moyen d'examen du poids de Hamming pour calculer un poids de Hamming desdites deuxièmes données de perturbation traitées X2o et demander audit deuxième moyen de génération du nombre aléatoire de poids constant de Hamming de générer une autre valeur desdites deuxièmes données de perturbation X2i dans le cas d'un poids de Hamming incorrect desdites deuxièmes données de perturbation traitées X2o ; et

un moyen de transformation de tableau pour créer ledit tableau transformé par transformation des indices dudit tableau en utilisant lesdites premières données de perturbation X1i et transformation des contenus dudit tableau en utilisant lesdites deuxièmes données de perturbation X2i.

**3.** Appareil de traitement de l'information selon la revendication 1, ledit appareil de traitement de l'information comprenant en outre :

un moyen de stockage des premières données de perturbation pour stocker une pluralité de nombres ayant des poids de Hamming uniformes et constants ou presque uniformes et presque constants ;

un moyen de sélection des premières données de perturbation pour sélectionner aléatoirement un desdits nombres stockés dans ledit moyen de stockage des premières données de perturbation à utiliser en tant que dites premières données de perturbation X1i ;

un moyen de stockage des deuxièmes données de perturbation pour stocker une pluralité de nombres ayant des poids de Hamming uniformes et constants ou presque uniformes et presque constants ainsi que pour donner des poids de Hamming uniformes et constants ou presque uniformes et presque constants à des résultats du traitement des données de perturbation réalisé sur lesdits nombres ;

un moyen de sélection des deuxièmes données de perturbation pour sélectionner aléatoirement un desdits nombres stockés dans ledit moyen de stockage des deuxièmes données de perturbation à utiliser en tant que dites deuxièmes données de perturbation X2i ;

un moyen de traitement des deuxièmes données de perturbation pour réaliser ledit traitement des données de perturbation sur lesdites deuxièmes données de perturbation X2i afin de générer lesdites deuxièmes données de perturbation traitées X2o ; et

un moyen de transformation de tableau pour créer ledit tableau transformé par transformation des indices dudit tableau en utilisant lesdites premières données de perturbation X1i et transformation des contenus dudit tableau en utilisant lesdites deuxièmes données de perturbation X2i.

**4.** Appareil de traitement de l'information selon la revendication 1, ledit appareil de traitement de l'information comprenant en outre :

un moyen de stockage des premières données de perturbation pour stocker une pluralité de nombres ayant des poids de Hamming uniformes et constants ou presque uniformes et presque constants ;

un moyen de sélection des premières données de perturbation pour sélectionner aléatoirement un desdits nombres stockés dans ledit moyen de stockage des premières données de perturbation à utiliser en tant que dites premières données de perturbation X1i ;

un moyen de stockage des deuxièmes données de perturbation et des deuxièmes données de perturbation traitées pour stocker une pluralité de paires, chacune se composant des deuxièmes données de perturbation et des deuxièmes données de perturbation traitées, lesdites deuxièmes données de perturbation ayant un poids de Hamming constant ou presque constant et donnant un poids de Hamming constant ou presque constant auxdites deuxièmes données de perturbation traitées obtenues en tant que résultat du traitement réalisé sur lesdites deuxièmes données de perturbation ;

un moyen de sélection des deuxièmes données de perturbation et des deuxièmes données de perturbation traitées pour sélectionner aléatoirement une desdites paires, chacune se composant des deuxièmes données de perturbation et des deuxièmes données de perturbation traitées, dans ledit moyen de stockage des deuxièmes données de perturbation et des deuxièmes données de perturbation traitées à utiliser en tant que paire desdites deuxièmes données de perturbation traitées X2o et deuxièmes données de perturbation X2i ; et

un moyen de transformation de tableau pour créer ledit tableau transformé par transformation des indices dudit tableau en utilisant lesdites premières données de perturbation X1i et transformation des contenus dudit tableau en utilisant lesdites deuxièmes données de perturbation X2i.

5. Appareil de traitement de l'information selon la revendication 1, ledit appareil de traitement de l'information comprenant en outre :

un moyen de stockage des deuxièmes données de perturbation, des deuxièmes données de perturbation traitées et du tableau transformé pour stocker une pluralité d'ensembles, chacun se composant d'un candidat pour lesdites premières données de perturbation X1i, d'un candidat pour lesdites deuxièmes données de perturbation traitées X2o et d'un candidat pour ledit tableau transformé ; et

un moyen de sélection des deuxièmes données de perturbation, des deuxièmes données de perturbation traitées et du tableau transformé pour sélectionner aléatoirement un desdits ensembles, chacun se composant d'un candidat pour lesdites premières données de perturbation X1i, d'un candidat pour lesdites deuxièmes données de perturbation traitées X2o et d'un candidat pour ledit tableau transformé, dans ledit moyen de stockage des deuxièmes données de perturbation, des deuxièmes données de perturbation traitées et du tableau transformé à utiliser en tant qu'ensemble desdites premières données de perturbation X1i, desdites deuxièmes données de perturbation traitées X2o et dudit tableau transformé,

dans lequel

ledit candidat pour ledit tableau transformé est créé par transformation des indices dudit tableau en utilisant ledit candidat pour lesdites premières données de perturbation X1i et transformation des contenus dudit tableau en utilisant ledit candidat pour lesdites deuxièmes données de perturbation X2i ;

ledit candidat pour lesdites deuxièmes données de perturbation traitées X2o est obtenu en tant que résultat du traitement réalisé par le moyen de traitement des données de perturbation sur ledit candidat pour lesdites deuxièmes données de perturbation X2i ;

ledit candidat pour lesdites premières données de perturbation X1i a un poids de Hamming constant ;

ledit candidat pour lesdites deuxièmes données de perturbation X2i a un poids de Hamming constant également ; et

ledit candidat pour lesdites deuxièmes données de perturbation traitées X2o a aussi un poids de Hamming constant même une fois ledit traitement réalisé par ledit moyen de traitement des données de perturbation.

# FIG. 1

Vcc  GND
RST  I/O
CLK

102

101

# FIG. 2

# FIG. 3

# FIG. 4

401

```
INPUT DATA
D1
```

402                                              403

```
DATA                          DATA FOR
TRANSFORMATION      ◄─────     DISTURBING X1i
METHOD
```

404

```
TRANSFORMED
DATA H1
```

405

```
TRANSFORMED
DATA PROCESSING
METHOD
```

406

```
TRANSFORMED
DATA H2
```

407                                              408

```
DATA DIS-                     TRANSFORMED
TRANSFORMATION      ◄─────     DATA FOR
METHOD                        DISTURBING X1o
```

409

```
PROCESSED
DATA D2
```

# FIG. 5

GENERATOR OF THE
RANDOM NUMBER
WITH THE CONSTANT
HAMMING WEIGHT — 501

CONTROL SIGNAL
FOR RE-GENERATING

THE 1ST DATA
FOR DISTURBING
X1i — 502

PROCESSING
METHOD OF DATA
FOR DISTURBING — 503

PROCESSED
DATA FOR
DISTURBING X1o — 504

EVALUATE
METHOD OF
HAMMING WEIGHT — 505

# FIG. 6

601
GENERATOR OF
THE n-BIT
RANDOM NUMBER

602
n-BIT
RANDOM NUMBER

603
BIT INVERTER
OPERATION
METHOD

604
INVERTED
n-BIT RANDOM
NUMBER

605
DATA
CONCATENATING
METHOD

606
2n-BIT RANDOM NUMBER
WITH CONSTANT
HAMMING WEIGHT

# FIG. 7

```
                    ┌─────────────┐  701
                    │    START    │
                    └──────┬──────┘
                           │
                           ▼
              ┌───────────────────────┐  702
              │  RECEIVE TARGET       │
              │  HAMMING WEIGHT H     │
              └───────────┬───────────┘
                          │        ◄──────────────┐
                          ▼                        │
              ┌───────────────────────┐  703       │
              │  GENERATE             │            │
              │  RANDOM               │            │
              │  NUMBER R             │            │
              └───────────┬───────────┘            │
                          │                        │
                          ▼                        │
              ┌───────────────────────┐  704       │
              │  CALCURATE RH, THE    │            │
              │  HAMING WEIGHT OF     │            │
              │  RANDOM NUMBER R      │            │
              └───────────┬───────────┘            │
                          │              705       │
                          ▼                        │
                    ◇─────────────◇       NO       │
                    │   RH=H?     │ ───────────────┘
                    ◇─────────────◇
                          │
                          │ YES
                          ▼
              ┌───────────────────────┐  706
              │  RETURN RANDOM        │
              │  NUMBER R             │
              └───────────┬───────────┘
                          │
                          ▼
                    ┌─────────────┐  707
                    │    END      │
                    └─────────────┘
```

# FIG. 8

START — 801

Hamming=HAMMING WEIGHT — 802

MaxBit=BIT LENGTH — 803

pos[i]=i | 0<i< Hamming — 804

num=0 — 805

①

$$dat[num]= \sum_{i=0}^{Hamming-1} 2^{pos[i]}$$ — 806

num=num+1 — 807

b=0 — 808

b<hamming-1 — 809    NO →

YES

pos[b]+1<pos[b+1] — 810    NO →

YES    ②

pos[b]=pos[b]+1 — 811

①

b=hamming-1 — 812    NO →

YES

pos[b]+1<MaxBit — 813    YES → ②

NO

b>0 — 814    YES →

NO

pos[b]=0 — 815

pos[b]=pos[b-1]+1 — 816

b=b+1 — 817

b<Hamming — 818    → ①

END — 819

# FIG. 9

START — 901

Hamming=HAMMING WEIGHT — 902

MaxBit=BIT LENGTH — 903

pos[i]=i | 0<i< Hamming — 904

num=0 — 905

① 

$$dat[num]= \sum_{i=0}^{Hamming-1} 2^{pos[i]}$$ — 906

PROCESS dat[num] IN DATA PROCESSING METHOD, AND LET HXDAT BE THE HAMMING WEIGHT OF THE PROCESSED DATA — 907

IS hxdat EQUAL TO GIVEN CONSTANT VALUE? — 908
NO / YES

num=num+1 — 909

b=0 — 910

b<hamming-1 — 911
NO / YES

②

② 
pos[b]+1<pos[b+1] — 912
YES / NO

pos[b]=pos[b]+1 — 913
①

b=hamming-1 — 914
NO / YES

pos[b]+1<MaxBit — 915
YES / NO

b>0 — 916
YES / NO

pos[b]=0 — 917

pos[b]=pos[b-1]+1 — 918

b=b+1 — 919

b<Hamming — 920
①

END — 921

# FIG. 10

```
              START  1001

           n=BIT LENGTH  1002

              L=n/m  1003

               D=0  1004

        GENERATE RANDOM
        NUMBER R  1005

        PICK UP THE DATA
        ACCORDING TO RANDOM
        NUMBER R FROM THE TABLE
        THAT CONTAINS DATA WITH
        CONSTANT HAMMING WEIGHT
        m, AND STORE IT TO d  1006
```

$$D=D \times 2^m+d \quad 1007$$

```
           REPEAT        NO
           L TIMES?  1008

              YES

        RETURN D AS
        THE RESULT  1009

              END  1010
```

# FIG. 11

1101

SELECTING METHOD
OF DATA FOR
DISTURBING

1102

MEMORY FOR
THE DATA FOR
DISTURBING

1103

DATA FOR
DISTURBING
X1i

1104

PROCESSING
METHOD OF DATA
FOR DISTURBING

1105

PROCESSED
DATA FOR
DISTURBING X1o

# FIG. 12

1201

MEMORY FOR
DATA FOR
DISTURBING AND
PROCESSED
DATA FOR
DISTURBING

1202

SELECTION
METHOD
OF DATA FOR
DISTURBING AND
PROCESSED DATA
FOR DISTURBING

1203

DATA FOR
DISTURBING
X1i

1204

PROCESSED DATA
FOR DISTURBING
X1o

# FIG. 13

```
                    1301
          ┌──────────────────┐
          │ INPUT DATA       │
          │ D1               │
          └──────────────────┘
                    │
                    ▼              1302                              1303
          ┌──────────────────┐              ┌──────────────────┐
          │ DATA             │              │ THE 1ST          │
          │ TRANSFORMATION   │◄─────────────│ DATA FOR         │
          │ METHOD           │              │ DISTURBING X1i   │
          └──────────────────┘              └──────────────────┘
                    │              1304
                    ▼
          ┌──────────────────┐
          │ TRANSFORMED      │
          │ DATA H1          │
          └──────────────────┘
                    │              1305                              1306
                    ▼
          ┌──────────────────┐              ┌──────────────────┐
          │ ACCESS METHOD    │              │ TRANSFORMED      │
          │ OF TRANSFORMED   │◄─────────────│ TABLE            │
          │ TABLE            │              │                  │
          └──────────────────┘              └──────────────────┘
                    │              1307
                    ▼
          ┌──────────────────┐
          │ TRANSFORMED      │
          │ DATA H2          │
          └──────────────────┘
                    │              1308                              1309
                    ▼
          ┌──────────────────┐              ┌──────────────────┐
          │ DATA DIS-        │              │ THE 2ND          │
          │ TRANSFORMATION   │◄─────────────│ DATA FOR         │
          │ METHOD           │              │ DISTURBING X2i   │
          └──────────────────┘              └──────────────────┘
                    │              1310
                    ▼
          ┌──────────────────┐
          │ PROCESSED        │
          │ DATA D2          │
          └──────────────────┘
```

# FIG. 14

```
1401                        1402
```

| 1401 | 1402 |
|---|---|
| THE 1ST GENERATOR OF THE RANDOM NUMBER WITH CONSTANT HAMMING WEIGHT | THE 2ND GENERATOR OF THE RANDOM NUMBER WITH CONSTANT HAMMING WEIGHT |

# FIG. 15

```
      1501                          1502
┌─────────────────┐        ┌─────────────────┐
│ MEMORY FOR      │        │ MEMORY FOR      │
│ THE 1ST DATA    │        │ THE 2ND DATA    │
│ FOR DISTURBING  │        │ FOR DISTURBING  │
└─────────────────┘        └─────────────────┘
         │                          │
         ▼        1503              ▼        1504
┌─────────────────┐        ┌─────────────────┐
│ SELECTOR OF     │        │ SELECTOR OF     │
│ THE 1ST DATA    │        │ THE 2ND DATA    │
│ FOR DISTURBING  │        │ FOR DISTURBING  │
└─────────────────┘        └─────────────────┘
         │        1505              │        1506                    1507
         ▼                          ▼                    ┌─────────────────┐
┌─────────────────┐        ┌─────────────────┐           │ MEMORY          │
│ THE 1ST DATA    │        │ THE 2ND DATA    │           │ FOR TABLE       │
│ FOR DISTURBING  │        │ FOR DISTURBING  │           └─────────────────┘
│ X1i             │        │ X2i             │                    │
└─────────────────┘        └─────────────────┘                    │   1508
         │                          │                              ▼
         │                          │                    ┌─────────────────┐
         └──────────────────────────┼───────────────────▶│ TABLE           │
                                     └───────────────────▶│ TRANSFORM       │
                                                          │ METHOD          │
                                                          └─────────────────┘
                                                                   │   1509
                                                                   ▼
                                                          ┌─────────────────┐
                                                          │ MEMORY FOR THE  │
                                                          │ TRANSFORMED     │
                                                          │ TABLE           │
                                                          └─────────────────┘
```

# FIG. 16

SELECTOR OF THE 1ST AND 2ND DATA FOR DISTURBING AND THE TRANSFORMED TABLE — 1601

MEMORY FOR THE 1ST AND 2ND DATA FOR DISTURBING AND THE TRANSFORMED TABLE — 1602

THE 1ST DATA FOR DISTURBING X1i — 1603

MEMORY FOR THE TRANSFORMED TABLE — 1604

THE 2ND DATA FOR DISTURBING X2i — 1605

# FIG. 17

1701

INPUT DATA
D1

1702

DATA
TRANSFORMATION
METHOD

1703

THE 1ST
DATA FOR
DISTURBING X1i

1704

TRANSFORMED
DATA H1

1705

ACCESS METHOD
OF TRANSFORMED
TABLE

1706

MEMORY FOR THE
TRANSFORMED
TABLE

1707

TRANSFORMED
DATA H2

1708

PROCESSING
METHOD FOR
TRANSFORMED
DATA

1709

PROCESSED
TRANSFORMED
DATA H3

1710

DATA DIS-
TRANSFORMATION
METHOD

1711

THE 2ND
PROCESSED DATA
FOR DISTURBING X2o

1712

PROCESSED
DATA D2

# FIG. 18

```
       1801                        1802
┌─────────────────┐   ┌─────────────────┐
│  GENERATOR OF   │   │  GENERATOR OF   │
│  THE 1ST DATA   │   │  THE 2ND DATA   │
│  FOR DISTURBING │   │  FOR DISTURBING │
└────────┬────────┘   └────────┬────────┘
         │                     │
         │   1803              │   1804              1805
┌────────▼────────┐   ┌────────▼────────┐   ┌─────────────────┐
│  THE 1ST DATA   │   │  THE 2ND DATA   │   │                 │
│  FOR DISTURBING │   │  FOR DISTURBING │   │     MEMORY       │
│  X1i            │   │  X2i            │   │   FOR TABLE      │
└────────┬────────┘   └────────┬────────┘   └────────┬────────┘
         │                     │                     │
         │                     │                     │   1806
         │                     │            ┌────────▼────────┐
         └─────────────────────┼───────────►│     TABLE        │
                               ├───────────►│  TRANSFORM       │
                               │            │  METHOD          │
                               │            └────────┬────────┘
                        1807   │                     │   1808
              ┌────────────────▼┐          ┌────────▼────────┐
              │  PROCESSING      │          │ MEMORY FOR THE  │
              │  METHOD OF DATA  │          │ TRANSFORMED     │
              │  FOR DISTURBING  │          │ TABLE           │
              └────────┬─────────┘          └─────────────────┘
                       │   1809
              ┌────────▼─────────┐
              │THE 2ND PROCESSED │
              │DATA FOR          │
              │DISTURBING X2o    │
              └──────────────────┘
```

# FIG. 19

THE 1ST GENERATOR OF THE RANDOM NUMBER WITH CONSTANT HAMMING WEIGHT — 1901

THE 2ND GENERATOR OF THE RANDOM NUMBER WITH CONSTANT HAMMING WEIGHT — 1902

CONTROL SIGNAL FOR RE-GENERATING

THE 1ST DATA FOR DISTURBING X1i — 1903

THE 2ND DATA FOR DISTURBING X2i — 1904

MEMORY FOR TABLE — 1905

TABLE TRANSFORM METHOD — 1906

PROCESSING METHOD OF DATA FOR DISTURBING — 1907

TRANSFORMED TABLE — 1908

THE 2ND PROCESSED DATA FOR DISTURBING X2o — 1909

EVALUATE METHOD OF HAMMING WEIGHT — 1910

# FIG. 20

# FIG. 21

**2102**
MEMORY FOR THE 2ND DATA FOR DISTURBING AND THE 2ND PROCESSED DATA FOR DISTURBING

**2101**
MEMORY FOR THE 1ST DATA FOR DISTURBING

**2104**
SELECTOR OF THE 2ND DATA FOR DISTURBING AND THE 2ND PROCESSED DATA FOR DISTURBING

**2103**
SELECTOR OF THE 1ST DATA FOR DISTURBING

**2105**
THE 1ST DATA FOR DISTURBING X1i

**2106**
THE 2ND DATA FOR DISTURBING X2i

**2107**
THE 2ND PROCESSED DATA FOR DISTURBING X2o

**2108**
TABLE TRANSFORM METHOD

**2109**
MEMORY FOR TABLE

**2110**
TRANSFORMED TABLE

# FIG. 22

```
                                          2201              2202
                              ┌─────────────────┐   ┌─────────────────┐
                              │ SELECTOR OF THE │   │ MEMORY FOR THE  │
                              │ 1ST DATA FOR    │   │ 1ST DATA FOR    │
                              │ DISTURBING,     │   │ DISTURBING,THE  │
                              │ THE 2ND         │   │ 2ND PROCESSED   │
                              │ PROCESSED DATA  │◄──│ DATA FOR        │
                              │ FOR DISTURBING  │   │ DISTURBING AND  │
                              │ AND TRANSFORMED │   │ TRANSFORMED     │
                              │ TABLE           │   │ TABLE           │
                              └─────────────────┘   └─────────────────┘
```

THE 1ST DATA FOR DISTURBING X1i — 2203

TRANSFORMED TABLE — 2204

THE 2ND PROCESSED DATA FOR DISTURBING X2o — 2205

# FIG. 23

```
┌─────────────────────────┐ 2301
│ INPUT DATA              │
│ D1                      │
└─────────────────────────┘
            │
            ▼              2302                          2303
┌─────────────────────────┐              ┌─────────────────────────┐
│ DATA                    │◄─────────────│ THE 1ST                 │
│ TRANSFORMATION          │              │ DATA FOR                │
│ METHOD                  │              │ DISTURBING X1i          │
└─────────────────────────┘              └─────────────────────────┘
            │              2304
┌─────────────────────────┐
│ TRANSFORMED             │
│ DATA H1                 │
└─────────────────────────┘
            │              2305                          2306
┌─────────────────────────┐              ┌─────────────────────────┐
│ ACCESS METHOD           │◄─────────────│ TRANSFORMED             │
│ OF TRANSFORMED          │              │ TABLE                   │
│ TABLE                   │              └─────────────────────────┘
└─────────────────────────┘
            │              2307
┌─────────────────────────┐
│ TRANSFORMED             │
│ DATA H2                 │
└─────────────────────────┘
            │              2308
┌─────────────────────────┐
│ PROCESSING METHOD       │
│ FOR TRANSFORMED         │
│ DATA                    │
└─────────────────────────┘
            │              2309                          2313
┌─────────────────────────┐              ┌─────────────────────────┐
│ PROCESSED               │              │ THE 2ND                 │
│ TRANSFORMED DATA H3     │              │ TRANSFORMED             │
└─────────────────────────┘              │ DATA FOR                │
            │              2310          │ DISTURBING X2o          │
┌─────────────────────────┐              └─────────────────────────┘
│ DATA                    │◄─┐                        │
│ TRANSFORMATION          │  │                        │
│ METHOD                  │  │                        │
└─────────────────────────┘  │                        │
            │              2311                        │
┌─────────────────────────┐  │                        │
│ PROCESSED               │  │           2317          │
│ TRANSFORMED DATA H4     │  │  ┌─────────────────────────┐
└─────────────────────────┘  │  │ PROCESSING METHOD       │
            │              2312  │ FOR TRANSFORMED         │
┌─────────────────────────┐  │  │ DATA                    │
│ DATA DIS-               │◄─┘  └─────────────────────────┘
│ TRANSFORMATION          │                 │           2318
│ METHOD                  │     ┌─────────────────────────┐
└─────────────────────────┘     │ PROCESSED               │
            │              2314  │ TRANSFORMED DATA H7     │
┌─────────────────────────┐     └─────────────────────────┘
│ PROCESSED               │                 │           2319
│ TRANSFORMED DATA H5     │     ┌─────────────────────────┐
└─────────────────────────┘     │ DATA DIS-               │
            │              2315  │ TRANSFORMATION          │◄─┐
┌─────────────────────────┐     │ METHOD                  │  │
│ ACCESS METHOD           │◄────└─────────────────────────┘  │
│ OF TRANSFORMED          │                 │           2320 │
│ TABLE                   │     ┌─────────────────────────┐  │
└─────────────────────────┘     │ PROCESSED               │  │
            │              2316  │ DATA D2                 │  │
┌─────────────────────────┐     └─────────────────────────┘  │
│ PROCESSED               │                                   │
│ TRANSFORMED DATA H6     │───────────────────────────────────┘
└─────────────────────────┘
```

# FIG. 24

# FIG. 25

# FIG. 26

2601 · THE 1ST GENERATOR OF THE RANDOM NUMBER WITH CONSTANT HAMMING WEIGHT

2603 · THE 2ND GENERATOR OF THE RANDOM NUMBER WITH CONSTANT HAMMING WEIGHT

2611 · THE 1ST RANDOM NUMBER GENERATOR

2613 · THE 2ND RANDOM NUMBER GENERATOR

2602 · THE 1ST DATA FOR DISTURBING X1i

2604 · THE 2ND DATA FOR DISTURBING X2i

2608 · MEMORY FOR TABLE

2612 · THE 3RD DATA FOR DISTURBING X3i

2614 · THE 4TH DATA FOR DISTURBING X4i

2609 · TABLE TRANSFORM METHOD

2605 · PROCESSING METHOD OF DATA FOR DISTURBING

2610 · TRANSFORMED TABLE

2615 · PROCESSING METHOD OF DATA FOR DISTURBING

2606 · THE 2ND PROCESSED DATA FOR DISTURBING X2O

2616 · PROCESSING METHOD OF THE TRANSFORMED TABLE

2607 · EVALUATE METHOD OF HAMMING WEIGHT

2617 · THE 2ND TRANSFORMED TABLE

2618 · THE 4TH PROCESSED DATA FOR DISTURBING X4O

# FIG. 27

2701

MEMORY FOR THE 1ST DATA FOR DISTURBING

2704

SELECTOR OF THE 2ND DATA FOR DISTURBING AND THE 2ND DATA FOR DISTURBING

2705

MEMORY FOR THE 2ND DATA FOR DISTURBING AND THE 2ND TARNSFORMED DATA FOR DISTURBING

2702

SELECTOR OF THE 1ST DATA FOR DISTURBING

2703

THE 1ST GENERATOR OF THE DATA FOR DISTURBING X1$i$

2706

THE 2ND GENERATOR OF THE DATA FOR DISTURBING X2$i$

2707

THE 2ND PROCESSED DATA FOR DISTURBING X2O

2711

THE 1ST RANDOM NUMBER GENERATOR

2715

THE 2ND RANDOM NUMBER GENERATOR

2708

MEMORY FOR TABLE

2712

THE 3RD GENERATOR OF THE DATA FOR DISTURBING X3$i$

2716

THE 4TH GENERATOR OF THE DATA FOR DISTURBING X4$i$

2709

TABLE TRANSFORM METHOD

2117

PROCESSING METHOD OF DATA FOR DISTURBING

2710

TRANSFORMED TABLE

2713

PROCESSING METHOD OF THE TRANSFORMED TABLE

2714

THE 2ND TRANSFORMED TABLE

2718

THE 4TH PROCESSED DATA FOR DISTURBING X4O

# FIG. 28

2801

MEMORY FOR THE 1ST DATA FOR DISTURBING, THE 2ND TRANSFORMED DATA FOR DISTURBING AND TRANSFORMED TABLE

2802

SELECTOR OF THE 1ST DATA FOR DISTURBING, THE 2ND TRANSFORMED DATA FOR DISTURBING AND TRANSFORMED TABLE

2803

TRANSFORMED TABLE

2806

THE 1ST RANDOM NUMBER GENERATOR

2810

THE 2ND RANDOM NUMBER GENERATOR

2807

THE 3RD GENERATOR OF THE DATA FOR DISTURBING X3i

2811

THE 4TH GENERATOR OF THE DATA FOR DISTURBING X4i

2812

PROCESSING METHOD OF DATA FOR DISTURBING

2808

PROCESSING METHOD OF THE TRANSFORMED TABLE

2804

THE 1ST GENERATOR OF THE DATA FOR DISTURBING X1i

2805

THE 2ND PROCESSED DATA FOR DISTURBING X2O

2809

THE 2ND TRANSFORMED TABLE

2813

THE 4TH PROCESSED DATA FOR DISTURBING X4O

# FIG. 29

| 2901 | 2902 | 2903 |
| --- | --- | --- |
| THE DATA FOR DISTURBING SBOX ADDRESS SinX1 | THE DATA FOR DISTURBING SBOX DATA SoutX | SBOX TABLE |

2904

TRANSFORMING METHOD OF SBOX TABLE

2906

PERMUTATION P

2905

TRANSFORMED SBOX TABLE

2906

PERMUTATION WITH EXPANDING E

2910

PERMUTED DATA FOR DISTURBING SBOX DATA XSoutX

# FIG. 30

**3001**

DATA FOR
DISTURBING
PLAINTEXT  PX

↓

**3002**

PERMUTATION
IP

HIGHER 32bit                    LOWER 32bit

↓                                        ↓

**3003**                              **3007**

THE 1ST DATA
FOR DISTURBING
PERMUTED
PLAINTEXT  PXo1

THE 2ND DATA
FOR DISTURBING
PERMUTED
PLAINTEXT  PXo2

↓                                        ↓

**3005**                              **3009**

PERMUTATION
WITH EXPANDING
E

PERMUTATION
WITH EXPANDING
E

↓                                        ↓

**3006**                              **3010**

THE 3RD DATA
FOR DISTURBING
PERMUTED
PLAINTEXT  PXo3

THE 4TH DATA
FOR DISTURBING
PERMUTED
PLAINTEXT  PXo4

# FIG. 31

**3101** DATA FOR DISTURBING SECRET KEY KX

**3104** THE DATA FOR DISTURBING SBOX ADDRESS

**3102** PERMUTARION PC-1

**3105** SELECTIVE DIS-PERMUTARION PC2-1

**3103** ROTATE LS

**3106** ROTATE LS

**3107** ROTATE LS

**3108** COMBINIG DIS-TRANSFORM PROCESS

**3110** COMBING DIS-TRANSFORM PROCESS

**3112** COMBING DIS-TRANSFORM PROCESS

**3109** PROCESSED DATA FOR DISTURBING SECRET KEY KXO1

**3111** PROCESSED DATA FOR DISTURBING SECRET KEY KXO2

**3113** PROCESSED DATA FOR DISTURBING SECRET KEY KXO3

# FIG. 32

3201

PLAINTEXT DATA
Ptext

3202                          3203

THE 1ST
TRANSFORM
PROCESS
◄
DATA FOR
DISTURBING
PLAINTEXT
PX

3204

TRANSFORMED
PLAINTEXT DATA
XPtext

3205

PERMUTATION
IP

3206                          3207

THE 1ST PERMUTED
TRANSFORMED
PLAINTEXT XPtextL

THE 2ND PERMUTED
TRANSFORMED
PLAINTEXT XPtextR

# FIG. 33

3301

SECRET KEY DATA
K

3302

THE 2ND
TRANSFORM
PROCESS

3303

DATA FOR
DISTURBING
SECRET KEY
KX

3304

TRANSFORMED
SECRET KEY DATA
XK

3305

PERMUTATION
PC-1

3306

PROCESSED
TRANSFORMED
SECRET KEY
XK

# FIG. 34

**3401**
THE 1ST PERMUTED TRANSFORMED PLAINTEXT
xptextL

**3402**
THE 2ND PERMUTED TRANSFORMED PLAINTEXT
xptextR

**3407**
PROCESSED TRANSFORMED SECRET KEY
XKL

**3411**
DATA FOR DISTURBING PROCESSED SECRET KEY
KXO1

**3408**
ROTATE LS

**3409**
THE 3RD DIS-TRANSFORMED PROCESS

**3412**
DATA FOR DISTURBING PROCESSED SECRET KEY
KXO2

**3403**
PERMUTATION WITH EXPANDING E

**3410**
1ST PROCESSED TRANSFORMED SECRET KEY
XKL

**3413**
DATA FOR DISTURBING PROCESSED SECRET KEY
KXO3

**3406**
$\oplus$

**3414**
SELECTIVE PERMUTATION PC-2

**3415**
THE 1ST DIS-TRANSFORMED PROCESS

**3416**
THE 4TH DATA FOR DISTURBING PERMUTED PLAINTEXT
PXO4

**3418**
ACCESSING TRANSFORMED SBOX

**3419**
TRANSFORMED SBOX TABLE

**3420**
PERMUTATION P

**3421**
$\oplus$

**3422**
THE 1ST PERMUTED TRANSFORMED PLAINTEXT
xptextL

**3423**
THE 2ND PERMUTED TRANSFORMED PLAINTEXT
xptextR

# FIG. 35

3501
THE 1ST PERMUTED TRANSFORMED PLAINTEXT
xptextL

3502
THE 2ND PERMUTED TRANSFORMED PLAINTEXT
xptextR

3507
PROCESSED TRANSFORMED SECRET KEY
XKL

3508
ROTATE LS

3511
DATA FOR DISTURBING PROCESSED SECRET KEY
KXO2

3503
PERMUTATION WITH EXPANDING E

3509
THE 3RD DIS-TRANSFORMED PROCESS

3512
DATA FOR DISTURBING PROCESSED SECRET KEY
KXO3

3510
1ST PROCESSED TRANSFORMED SECRET KEY
XKL

3506
+

3514
SELECTIVE PERMUTATION PC-2

3515
THE 1ST DIS-TRANSFORMED PROCESS

3516
THE 3RD DATA FOR DISTURBING PERMUTED PLAINTEXT
PXO3

3517
THE 4TH DIS-TRANSFORMED PROCESS

3518
DATA FOR DISTURBING PERMUTED SBOX DATA
xsoutx

3520
ACCESSING TRANSFORMED SBOX

3521
TRANSFORMED SBOX TABLE

3522
PERMUTATION P

3523
+

3524
THE 1ST PERMUTED TRANSFORMED PLAINTEXT
xptextL

3525
THE 2ND PERMUTED TRANSFORMED PLAINTEXT
xptextR

# FIG. 36

THE 1ST PERMUTED TRANSFORMED PLAINTEXT xptextʟ — 3601

THE 2ND PERMUTED TRANSFORMED PLAINTEXT xptextʀ — 3602

PROCESSED TRANSFORMED SECRET KEY XKL — 3607

ROTATE LS — 3608

DATA FOR DISTURBING PROCESSED SECRET KEY KXO2 — 3611

THE 3RD DIS-TRANSFORMED PROCESS — 3609

DATA FOR DISTURBING PROCESSED SECRET KEY KXO3 — 3612

PERMUTATION WITH EXPANDING E — 3603

1ST PROCESSED TRANSFORMED SECRET KEY XKL — 3610

⊕ — 3606

SELECTIVE PERMUTATION PC-2 — 3614

THE 1ST DIS-TRANSFORMED PROCESS — 3615

THE 4TH DATA FOR DISTURBING PERMUTED PLAINTEXT PXO4 — 3616

THE 4TH DIS-TRANSFORMED PROCESS — 3617

DATA FOR DISTURBING PERMUTED SBOX DATA xsoutx — 3618

ACCESSING TRANSFORMED SBOX — 3620

TRANSFORMED SBOX TABLE — 3621

PERMUTATION P — 3622

⊕ — 3623

THE 1ST PERMUTED TRANSFORMED PLAINTEXT xptextʟ — 3624

THE 2ND PERMUTED TRANSFORMED PLAINTEXT xptextʀ — 3625

# FIG. 37

**3701** THE 1ST PERMUTED TRANSFORMED PLAINTEXT xptextL

**3702** THE 2ND PERMUTED TRANSFORMED PLAINTEXT xptextR

**3607** PROCESSED TRANSFORMED SECRET KEY XKL

**3608** ROTATE LS

**3611** DATA FOR DISTURBING PROCESSED SECRET KEY KXO2

**3703** PERMUTATION WITH EXPANDING E

**3609** THE 3RD DIS-TRANSFORMED PROCESS

**3612** DATA FOR DISTURBING PROCESSED SECRET KEY KXO3

**3610** 1ST PROCESSED TRANSFORMED SECRET KEY XKL

**3706** ⊕

**3614** SELECTIVE PERMUTATION PC-2

**3715** THE 1ST DIS-TRANSFORMED PROCESS

**3716** THE 3RD DATA FOR DISTURBING PERMUTED PLAINTEXT PXO3

**3718** ACCESSING TRANSFORMED SBOX

**3719** TRANSFORMED SBOX TABLE

**3720** PERMUTATION P

**3721** ⊕

**3722** THE 1ST PERMUTED TRANSFORMED PLAINTEXT xptextL

**3723** THE 2ND PERMUTED TRANSFORMED PLAINTEXT xptextR

# FIG. 38

**3801** THE 1ST PERMUTED TRANSFORMED PLAINTEXT xptextL

**3802** THE 2ND PERMUTED TRANSFORMED PLAINTEXT xptextR

**3607** PROCESSED TRANSFORMED SECRET KEY XKL

**3608** ROTATE LS

**3803** PERMUTATION WITH EXPANDING E

**3804** THE 3RD TRANSFORMED PROCESS

**3805** DATA FOR DISTURBING SBOX ADDRESS sinx1

**3609** THE 3RD DIS-TRANSFORMED PROCESS

**3612** DATA FOR DISTURBING PROCESSED SECRET KEY KXO2

**3610** 1ST PROCESSED TRANSFORMED SECRET KEY XKL

**3806** (+)

**3614** SELECTIVE PERMUTATION PC-2

**3815** THE 1ST DIS-TRANSFORMED PROCESS

**3816** THE 3RD DATA FOR DISTURBING PERMUTED PLAINTEXT PXO3

**3818** ACCESSING TRANSFORMED SBOX

**3819** TRANSFORMED SBOX TABLE

**3820** PERMUTATION P

**3821** (+)

**3822** THE 1ST PERMUTED TRANSFORMED PLAINTEXT xptextL

**3823** THE 2ND PERMUTED TRANSFORMED PLAINTEXT xptextR

# FIG. 39

THE 1ST PERMUTED TRANSFORMED PLAINTEXT xptextL — 3901

THE 2ND PERMUTED TRANSFORMED PLAINTEXT xptextR — 3902

THE 1ST DATA FOR DISTURBING PERMUTED PLAINTEXT PXO1 — 3903

THE 2ND DATA FOR DISTURBING PERMUTED PLAINTEXT PXO2 — 3904

THE 5TH DIS-TRANSFORMED PROCESS — 3905

THE 6TH DIS-TRANSFORMED PROCESS — 3906

PERMUTATION IP-1 — 3907

CIPHER TEXT DATA ctext — 3908

# FIG. 40

```
┌─────────────┐4001    ┌─────────────┐4002         ┌─────────────┐4005              ┌─────────────┐4010
│THE 1ST      │        │THE 2ND      │             │PROCESSED    │                  │DATA FOR     │
│PERMUTED     │        │PERMUTED     │             │TRANSFORMED  │                  │DISTURBING   │
│TRANSFORMED  │        │TRANSFORMED  │             │SECRET KEY   │                  │PROCESSED    │
│PLAINTEXT    │        │PLAINTEXT    │             │XKL          │                  │SECRET KEY   │
│xptextL      │        │xptextR      │             └─────────────┘                  │             │
└─────────────┘        └─────────────┘                    │                         │KXO1         │
                                                           ▼     4006                └─────────────┘
                                                    ┌─────────────┐                         4011
                                                    │ROTATE       │                  ┌─────────────┐
                              4003                   │LS           │                  │DATA FOR     │
                       ┌─────────────┐              └─────────────┘                  │DISTURBING   │
                       │PERMUTATION  │                     │       4007               │PROCESSED    │
                       │WITH         │                     ▼                         │SECRET KEY   │
                       │EXPANDING  E │              ┌─────────────┐                  │             │
                       └─────────────┘              │THE 3RD DIS- │                  │KXO2         │
                              │                     │TRANSFORMED  │                  └─────────────┘
                              │                     │PROCESS      │                         4012
                              ▼                     └─────────────┘                  ┌─────────────┐
                             (+)  4004                     │       4008               │DATA FOR     │
                              │                            ▼                         │DISTURBING   │
                4014          │      4015             ┌─────────────┐                │PROCESSED    │
         ┌─────────────┐ ┌─────────────┐             │1ST PROCESSED│                │SECRET KEY   │
         │THE 3RD DIS- │ │DATA FOR     │             │TRANSFORMED  │                │             │
         │TRANSFORMED  │◄│DISTURBING   │             │SECRET KEY   │                │KXO3         │
         │PROCESS      │ │SBOX ADDRESS │             │XKL          │                └─────────────┘
         └─────────────┘ │sinx2        │             └─────────────┘
                │        └─────────────┘                    │       4009
                │          4017                             ▼
                ▼    ┌─────────────┐               ┌─────────────┐
         ┌─────────────┐│THE 4TH DATA│             │SELECTIVE    │
         │THE 1ST DIS- ││FOR DISTURBING│           │PERMUTATION  │
         │TRANSFORMED  │◄│PERMUTED    │             │PC-2         │
         │PROCESS      ││PLAINTEXT    │             └─────────────┘
         └─────────────┘│PXO4         │
                │    4016└─────────────┘
                │         4020
                ▼    ┌─────────────┐
         ┌─────────────┐│THE 2ND     │
         │ACCESSING    ││TRANSFORMED  │
         │TRANSFORMED  │◄│SBOX TABLE  │
         │SBOX         ││             │
         └─────────────┘└─────────────┘
                │ 4019
                ▼
         ┌─────────────┐4021
         │PERMUTATION  │
         │P            │
         └─────────────┘
                │
               (+)◄──────
                │  4022
```

```
┌─────────────┐4023          ┌─────────────┐4024
│THE 1ST      │              │THE 2ND      │
│PERMUTED     │              │PERMUTED     │
│TRANSFORMED  │              │TRANSFORMED  │
│PLAINTEXT    │              │PLAINTEXT    │
│xptextL      │              │xptextR      │
└─────────────┘              └─────────────┘
```

# FIG. 41

THE 1ST PERMUTED TRANSFORMED PLAINTEXT xptextL — 4101

THE 2ND PERMUTED TRANSFORMED PLAINTEXT xptextR — 4102

PROCESSED TRANSFORMED SECRET KEY XKL — 4105

ROTATE LS — 4106

THE 3RD DIS-TRANSFORMED PROCESS — 4107

DATA FOR DISTURBING PROCESSED SECRET KEY KXO2 — 4110

DATA FOR DISTURBING PROCESSED SECRET KEY KXO3 — 4111

PERMUTATION WITH EXPANDING E — 4103

1ST PROCESSED TRANSFORMED SECRET KEY XKL — 4108

⊕ — 4104

SELECTIVE PERMUTATION PC-2 — 4109

THE 3RD TRANSFORMED PROCESS — 4114

DATA FOR DISTURBING SBOX ADDRESS sinx2 — 4115

THE 1ST DIS-TRANSFORMED PROCESS — 4116

THE 3RD DATA FOR DISTURBING PERMUTED PLAINTEXT PXO3 — 4117

THE 4TH DIS-TRANSFORMED PROCESS — 4118

DATA FOR DISTURBING PERMUTED SBOX DATA xsoutx1 — 4119

THE 4TH DIS-TRANSFORMED PROCESS — 4120

DATA FOR DISTURBING PERMUTED SBOX DATA xsoutx2 — 4121

ACCESSING TRANSFORMED SBOX — 4123

THE 2ND TRANSFORMED SBOX TABLE — 4124

PERMUTATION P — 4125

⊕ — 4126

THE 1ST PERMUTED TRANSFORMED PLAINTEXT xptextL — 4127

THE 2ND PERMUTED TRANSFORMED PLAINTEXT xptextR — 4128

74

# FIG. 42

**4201**
THE 1ST PERMUTED TRANSFORMED PLAINTEXT
xptextL

**4202**
THE 2ND PERMUTED TRANSFORMED PLAINTEXT
xptextR

**4205**
PROCESSED TRANSFORMED SECRET KEY
XKL

**4206**
ROTATE LS

**4210**
DATA FOR DISTURBING PROCESSED SECRET KEY
KXO2

**4203**
PERMUTATION WITH EXPANDING E

**4207**
THE 3RD DIS-TRANSFORMED PROCESS

**4211**
DATA FOR DISTURBING PROCESSED SECRET KEY
KXO3

**4208**
1ST PROCESSED TRANSFORMED SECRET KEY
XKL

**4204** ⊕

**4215**
DATA FOR DISTURBING SBOX ADDRESS
sinx2

**4214**
THE 3RD TRANSFORMED PROCESS

**4209**
SELECTIVE PERMUTATION PC-2

**4216**
THE 1ST DIS-TRANSFORMED PROCESS

**4217**
THE 4TH DATA FOR DISTURBING PERMUTED PLAINTEXT
PXO4

**4218**
THE 4TH DIS-TRANSFORMED PROCESS

**4219**
DATA FOR DISTURBING PERMUTED SBOX DATA
xsoutx1

**4220**
THE 4TH DIS-TRANSFORMED PROCESS

**4221**
DATA FOR DISTURBING PERMUTED SBOX DATA
xsoutx2

**4223**
ACCESSING TRANSFORMED SBOX

**4224**
THE 2ND TRANSFORMED SBOX TABLE

**4225**
PERMUTATION P

**4226** ⊕

**4227**
THE 1ST PERMUTED TRANSFORMED PLAINTEXT
xptextL

**4228**
THE 2ND PERMUTED TRANSFORMED PLAINTEXT
xptextR

# FIG. 43

THE 1ST PERMUTED TRANSFORMED PLAINTEXT xptextL  — 4301

THE 2ND PERMUTED TRANSFORMED PLAINTEXT xptextR  — 4302

PROCESSED TRANSFORMED SECRET KEY XKL  — 4305

ROTATE LS  — 4306

DATA FOR DISTURBING PROCESSED SECRET KEY KXO2  — 4310

PERMUTATION WITH EXPANDING E  — 4303

THE 3RD DIS-TRANSFORMED PROCESS  — 4307

DATA FOR DISTURBING PROCESSED SECRET KEY KXO3  — 4311

1ST PROCESSED TRANSFORMED SECRET KEY XKL  — 4308

+  — 4304

DATA FOR DISTURBING SBOX ADDRESS sinx2  — 4315

SELECTIVE PERMUTATION PC-2  — 4309

THE 3RD DIS-TRANSFORMED PROCESS  — 4314

THE 1ST DIS-TRANSFORMED PROCESS  — 4316

THE 3RD DATA FOR DISTURBING PERMUTED PLAINTEXT PXO3  — 4317

ACCESSING TRANSFORMED SBOX  — 4319

THE 2ND TRANSFORMED SBOX TABLE  — 4320

PERMUTATION P  — 4321

+  — 4322

THE 1ST PERMUTED TRANSFORMED PLAINTEXT xptextL  — 4323

THE 2ND PERMUTED TRANSFORMED PLAINTEXT xptextR  — 4324

# FIG. 44

THE 1ST PERMUTED TRANSFORMED PLAINTEXT xptextL — 4401

THE 2ND PERMUTED TRANSFORMED PLAINTEXT xptextR — 4402

PROCESSED TRANSFORMED SECRET KEY XKL — 4405

ROTATE LS — 4406

THE 3RD DIS-TRANSFORMED PROCESS — 4407

DATA FOR DISTURBING PROCESSED SECRET KEY KXO2 — 4410

DATA FOR DISTURBING PROCESSED SECRET KEY KXO3 — 4411

PERMUTATION WITH EXPANDING E — 4403

1ST PROCESSED TRANSFORMED SECRET KEY XKL — 4408

+ — 4404

SELECTIVE PERMUTATION PC-2 — 4409

THE 3RD TRANSFORMED PROCESS — 4414

DATA FOR DISTURBING SBOX ADDRESS sinx1 — 4415

THE 1ST DIS-TRANSFORMED PROCESS — 4416

THE 3RD DATA FOR DISTURBING PERMUTED PLAINTEXT PXO3 — 4417

THE 2ND DIS-TRANSFORMED PROCESS — 4418

DATA FOR DISTURBING PROCESSED SECRET KEY OF 16TH ROUND — 4425

ACCESSING TRANSFORMED SBOX — 4419

THE 2ND TRANSFORMED SBOX TABLE — 4420

PERMUTATION P — 4421

+ — 4422

THE 1ST PERMUTED TRANSFORMED PLAINTEXT xptextL — 4423

THE 2ND PERMUTED TRANSFORMED PLAINTEXT xptextR — 4424

# FIG. 45

ACCESS SBOX TABLE — 4501

in =48 bit INDEX FOR ACCESSING SBOX TABLE — 4502

j = 0 — 4503

mask=15 — 4504

result=0 — 4505

① 

LET idx BE LOWER 6bit OF in — 4506

SHIFT RIGHT IN BY 6bit — 4507

d=sbox[idx] — 4508

LET d BE THE LOGICAL AND OF d AND mask — 4509

result=result+d — 4510

SHIFT LEFT mask BY 4bit — 4511

j=j+1 — 4512

j<8 — 4513 → ①

RETURN result — 4514

END — 4515

# FIG. 46

| INDEX | VALUE | INDEX | VALUE | INDEX | VALUE | INDEX | VALUE |
|---|---|---|---|---|---|---|---|
| 0 | 0XEFA72CAD | 16 | 0X3911803A | 32 | 0X40DA4917 | 48 | 0XF5BFF7A0 |
| 1 | 0X03DDEAD1 | 17 | 0XAC2456EC | 33 | 0XFD13B462 | 49 | 0X5B496B9F |
| 2 | 0X410DC1B2 | 18 | 0XA7D25DC9 | 34 | 0X1E662E4B | 50 | 0XC81190F6 |
| 3 | 0XFD78BF0F | 19 | 0X60870135 | 35 | 0XC8AF83B1 | 51 | 0XB6F4FE5C |
| 4 | 0XD89E4A28 | 20 | 0X62C83393 | 36 | 0XE7491FB4 | 52 | 0X9C23C46A |
| 5 | 0X740B24BD | 21 | 0XC152FD56 | 37 | 0X8AD0C2DE | 53 | 0X37E50109 |
| 6 | 0X1EE31FE4 | 22 | 0XCD75F47E | 38 | 0X8B90B5D1 | 54 | 0X76CE5A8D |
| 7 | 0X4795C278 | 23 | 0XBAECAECB | 39 | 0X21067C87 | 55 | 0XEC3B97F0 |
| 8 | 0X266079F6 | 24 | 0X5CBBDE55 | 40 | 0XDA8CA2C9 | 56 | 0X3955610F |
| 9 | 0XEF36474A | 25 | 0X96C13020 | 41 | 0X436A1914 | 57 | 0XA0BCA6E3 |
| 10 | 0XFB36A20F | 26 | 0X904C07A0 | 42 | 0X64FBD83C | 58 | 0XA3A23D53 |
| 11 | 0X224F7C93 | 27 | 0X59BA9BFE | 43 | 0X9F91E54A | 59 | 0X05574025 |
| 12 | 0XB3F9B68B | 28 | 0X0524E56C | 44 | 0X2D377C7E | 60 | 0X52E80B95 |
| 13 | 0XD860D917 | 29 | 0X3BFE8389 | 45 | 0X148D2FA8 | 61 | 0X6E225836 |
| 14 | 0X845A68D1 | 30 | 0X7A8F9817 | 46 | 0XB10D83E2 | 62 | 0X0F74E628 |
| 15 | 0X1EA315A4 | 31 | 0X85196862 | 47 | 0X7278DA7D | 63 | 0XD9CE3DCB |

# FIG. 47

```
                                              ┌─ 4701
        ┌──────────────────────────┐
        │  PROCESS OF              │
        │  TRANSFORM SBOX TABLE    │
        └──────────────────────────┘
                     │              ┌─ 4702
                     ▼
        ┌──────────────────────────┐
        │          idx=0           │
        └──────────────────────────┘
                     │                     4703
                     ▼
        ┌──────────────────────────┐
        │  in=idx * 0x041041041041 │
        └──────────────────────────┘
                     │              ┌─ 4704
                     ▼
        ┌──────────────────────────┐
        │  in=in xor DATA FOR      │
        │  DISTURBING ADDRESS      │
        └──────────────────────────┘
                     │              ┌─ 4705
                     ▼
        ┌──────────────────────────┐
        │  ACCESS SBOX AT          │
        │  INDEX in AND STORE      │
        │  IT TO result            │
        └──────────────────────────┘
                     │              ┌─ 4706
                     ▼
        ┌──────────────────────────┐
        │  DATA FOR DISTURBING     │
        │  OUTPUT VALUE            │
        └──────────────────────────┘
                     │              ┌─ 4707
                     ▼
        ┌──────────────────────────┐
        │  STORE result INTO       │
        │  TRANSFORMED SBOX        │
        │  AT INDEX idx            │
        └──────────────────────────┘
                     │              ┌─ 4708
                     ▼
        ┌──────────────────────────┐
        │        idx=idx+1         │
        └──────────────────────────┘
                     │              ┌─ 4709
                     ▼
              ◇────────────◇   YES
              ◇  idx<64    ◇───────►
              ◇────────────◇
                     │ NO
                     ▼              ┌─ 4710
                ┌────────┐
                │  END   │
                └────────┘
```

# FIG. 48

GENERATOR OF THE RANDOM NUMBER WITH THE CONSTANT HAMMING WEIGHT  — 511

CONTROL SIGNAL FOR RE-GENERATING

DATA FOR DISTURBING X1i  — 512

PROCESSING METHOD OF DATA FOR DISTURBING  — 513

TRANSFORMED DATA FOR DISTURBING X1o  — 514

EVALUATE METHOD OF HAMMING WEIGHT  — 515

# FIG. 49

4901

GENERATOR FOR
RANDOM NUMBER

CONTROL SIGNAL FOR
RE-GENERATING RANDOM NUMBER

4902

RANDOM NUMBER

4903

METHOD FOR
CALCULATING
HAMMING WEIGHT

4904

HAMMING WEIGHT

4905

METHOD FOR
EVALUATING
HAMMING WEIGHT

# FIG. 50

```
                                                        5002
              5001                    METHOD FOR
 METHOD FOR                           GENERATING PARTIAL
 CONTROLING              ──────▶      RANDOM NUMBER
 RANDOM NUMBER                        WITH CONSTANT
 GENERATOR                            HAMMING WEIGHT

                                              │
                                              ▼
                                                        5003
                                      PARTIAL
                                      RANDOM NUMBER

                                              │
                                              ▼
                                                        5004
                                      DATA
                                      CONCATENATING
                                      METHOD

                                              │
                                              ▼
                                                        5005
                                      RANDOM NUMBER
                                      WITH CONSTANT
                                      HAMMING WEIGHT
```

# FIG. 51

5101

```
METHOD FOR
GENERATING
RANDOM NUMBER
```

5102

```
RANDOM NUMBER
```

5103                                           5104

```
METHOD FOR           ◄──    MEMORY FOR
DATA SELECTION              THE DATA WITH
                           CONSTANT
                           HAMMING WEIGHT
```

5105

```
RANDOM NUMBER
WITH CONSTANT
HAMMING WEIGHT
```

# FIG. 52

# FIG. 53

```
                                            5301
                          ┌─────────────────┐
                          │ DATA FOR        │
                          │ DISTURBING      │
                          │ PLAINTEXT  PX   │
                          └─────────────────┘
        HIGHER 32bit      ┌──────┴──────┐    LOWER 32bit

                   5303                          5307
        ┌─────────────────┐            ┌─────────────────┐
        │ THE 1ST DATA    │            │ THE 2ND DATA    │
        │ FOR DISTURBING  │            │ FOR DISTURBING  │
        │ PLAINTEXT  PXO1 │            │ PLAINTEXT  PXO2 │
        └─────────────────┘            └─────────────────┘

                   5305                          5309
        ┌─────────────────┐            ┌─────────────────┐
        │ PERMUTATION     │            │ PERMUTATION     │
        │ WITH EXPANDING  │            │ WITH EXPANDING  │
        │ E               │            │ E               │
        └─────────────────┘            └─────────────────┘

                   5306                          5310
        ┌─────────────────┐            ┌─────────────────┐
        │ THE 3RD DATA    │            │ THE 4TH DATA    │
        │ FOR DISTURBING  │            │ FOR DISTURBING  │
        │ PERMUTED        │            │ PERMUTED        │
        │ PLAINTEXT  PXO3 │            │ PLAINTEXT  PXO4 │
        └─────────────────┘            └─────────────────┘
```

EP 1 244 077 B1

# FIG. 54

PLAINTEXT
DATA
ptext — 5401

PERMUTATION
IP — 5402

HIGHER 32bit          LOWER 32bit

THE 1ST
PERMUTED
PLAINTEXT
ptextL — 5403

THE 2ND
PERMUTED
PLAINTEXT
ptextR — 5407

THE 1ST DATA
FOR DISTURBING
PLAINTEXT
PXO1 — 5405

THE 1ST
TRANSFORM
PROCESS — 5404

THE 1ST
TRANSFORM
PROCESS — 5408

THE 2ND DATA
FOR DISTURBING
PLAINTEXT
PXO2 — 5409

THE 1ST
PERMUTED
TRANSFORMED
PLAINTEXT
xptextL — 5406

THE 2ND
PERMUTED
TRANSFORMED
PLAINTEXT
xptextR — 5410

87

# FIG. 55

IN THE CASE OF LEFT ROTATION

1201

| X1i | X1o |
|---|---|
| 0X55555555 | 0Xaaaaaaaa |
| 0X33333333 | 0X66666666 |
| 0X66666666 | 0Xcccccccc |

# FIG. 56

1501

| THE 1ST DATA FOR DISTURBING |
|---|
| 0X1c71c71c71c7 |
| 0x38e38e38e38e |
| 0x34d34d34d34d |
| 0x2cb2cb2cb2cb |
| 0x38e38e38e38e |

1502

| THE 2ND DATA FOR DISTURBING |
|---|
| 0X55555555 |
| 0XAAAAAAAA |
| 0X0F0F0F0F |
| 0X71717171 |
| 0x5a5a5a5a |

# FIG. 57

IN THE CASE OF
THE 1ST DATA FOR DISTURBING=0x1c71c71c71c7
THE 2ND DATA FOR DISTURBING=0x55555555

1507

| INDEX | VALUE | INDEX | VALUE | INDEX | VALUE | INDEX | VALUE |
|---|---|---|---|---|---|---|---|
| 0 | 0xEFA72CAD | 16 | 0x3911803A | 32 | 0x40DA4917 | 48 | 0xF5BFF7A0 |
| 1 | 0x03DDEAD1 | 17 | 0xAC2456EC | 33 | 0xFD13B462 | 49 | 0x5B496B9F |
| 2 | 0x410DC1B2 | 18 | 0xA7D25DC9 | 34 | 0x1E662E4B | 50 | 0xC81190F6 |
| 3 | 0xFD78BF0F | 19 | 0x60870135 | 35 | 0xC8AF83B1 | 51 | 0xB6F4FE5C |
| 4 | 0xD89E4A28 | 20 | 0x62C83393 | 36 | 0xE7491FB4 | 52 | 0x9C23C46A |
| 5 | 0x740B24BD | 21 | 0xC152FD56 | 37 | 0x8AD0C2DE | 53 | 0x37E50109 |
| 6 | 0x1EE31FE4 | 22 | 0xCD75F47E | 38 | 0x8B90B5D1 | 54 | 0x76CE5A8D |
| 7 | 0x4795C278 | 23 | 0xBAECAECB | 39 | 0x21067C87 | 55 | 0xEC3B97F0 |
| 8 | 0x266079F6 | 24 | 0x5CBBDE55 | 40 | 0xDA8CA2C9 | 56 | 0x3955610F |
| 9 | 0xEF36474A | 25 | 0x96C13020 | 41 | 0x436A1914 | 57 | 0xA0BCA6E3 |
| 10 | 0xFB36A20F | 26 | 0x904C07A0 | 42 | 0x64FBD83C | 58 | 0xA3A23D53 |
| 11 | 0x224F7C93 | 27 | 0x59BA9BFE | 43 | 0x9F91E54A | 59 | 0x05574025 |
| 12 | 0xB3F9B68B | 28 | 0x0524E56C | 44 | 0x2D377C7E | 60 | 0x52E80B95 |
| 13 | 0xD860D917 | 29 | 0x3BFE8389 | 45 | 0x148D2FA8 | 61 | 0x6E225836 |
| 14 | 0x845A68D1 | 30 | 0x7A8F9817 | 46 | 0xB10D83E2 | 62 | 0x0F74E628 |
| 15 | 0x1EA315A4 | 31 | 0x85196862 | 47 | 0x7278DA7D | 63 | 0xD9CE3DCB |

1507

| INDEX | VALUE | INDEX | VALUE | INDEX | VALUE | INDEX | VALUE |
|---|---|---|---|---|---|---|---|
| 0 | 0x12C0972D | 16 | 0xEFB9FB9E | 32 | 0x745329D2 | 48 | 0xB96EC2A5 |
| 1 | 0x4BB64AB1 | 17 | 0x9820A12B | 33 | 0xDE05E084 | 49 | 0x239B0FD8 |
| 2 | 0x215E71E8 | 18 | 0x9407A803 | 34 | 0xDF85978B | 50 | 0x62B0545C |
| 3 | 0x8DCB1F7D | 19 | 0x379D66C6 | 35 | 0x821C4AE1 | 51 | 0xC976913F |
| 4 | 0xA82DEA5A | 20 | 0x35D25460 | 36 | 0x9DFAD6E4 | 52 | 0xE3A1AB09 |
| 5 | 0x145894E7 | 21 | 0xF287089C | 37 | 0x4B337B1E | 53 | 0x9D44C5A3 |
| 6 | 0x5688BF84 | 22 | 0xF97103B9 | 38 | 0xA846E137 | 54 | 0x0E1C3ECA |
| 7 | 0xBAF27918 | 23 | 0x6C44D56F | 39 | 0x158F1C42 | 55 | 0xA0EAA2F5 |
| 8 | 0x4BF640F1 | 24 | 0xD04C3D37 | 40 | 0x272D8F28 | 56 | 0x8C9B689E |
| 9 | 0xD10F3D84 | 25 | 0x2FDACE42 | 41 | 0xE458D6B7 | 57 | 0x5A21B37D |
| 10 | 0x8D358C42 | 26 | 0x6EABD6DC | 42 | 0x41D87AFD | 58 | 0x3B770D63 |
| 11 | 0xE6ACE3DE | 27 | 0x5071B039 | 43 | 0x7862292B | 59 | 0x07BD5EC0 |
| 12 | 0x771A29C6 | 28 | 0x0CEFCEAB | 44 | 0xCAC4B01F | 60 | 0x50021570 |
| 13 | 0xAE63F75A | 29 | 0xC51952F5 | 45 | 0x31AE8D69 | 61 | 0xF6F76806 |
| 14 | 0xBA63121F | 30 | 0xC3946575 | 46 | 0x163F4C41 | 62 | 0xF5E9F3B6 |
| 15 | 0x73352CA3 | 31 | 0x09EE8B00 | 47 | 0x8FD9F79C | 63 | 0x6C00345A |

# FIG. 58

1602

| INDEX | VALUE | INDEX | VALUE | INDEX | VALUE | INDEX | VALUE | INDEX | VALUE |
|---|---|---|---|---|---|---|---|---|---|
| 0 | 0X12C0972D | 16 | 0XEFB9FB9E | 32 | 0X745329D2 | 48 | 0XB96EC2A5 | THE 1ST DATA FOR DISTURBING | 0X1C71C71C71C7 |
| 1 | 0X4BB64AB1 | 17 | 0X9820A12B | 33 | 0XDE05E084 | 49 | 0X239B0FD8 | | |
| 2 | 0X215E71E8 | 18 | 0X9407A803 | 34 | 0XDF85978B | 50 | 0X62B0545C | THE 2ND DATA FOR DISTURBING | 0X55555555 |
| 3 | 0X8DCB1F7D | 19 | 0X379D66C6 | 35 | 0X821C4AE1 | 51 | 0XC976913F | | |
| 4 | 0XA82DEA5A | 20 | 0X35D25460 | 36 | 0X9DFAD6E4 | 52 | 0XE3A1AB09 | | |
| 5 | 0X145894E7 | 21 | 0XF287089C | 37 | 0X4B337B1E | 53 | 0X9D44C5A3 | | |
| 6 | 0X5688BF84 | 22 | 0XF97103B9 | 38 | 0XA846E137 | 54 | 0X0E1C3ECA | | |
| 7 | 0XBAF27918 | 23 | 0X6C44D56F | 39 | 0X158F1C42 | 55 | 0XA0EAA2F5 | | |
| 8 | 0X4BF640F1 | 24 | 0XD04C3D37 | 40 | 0X272D8F28 | 56 | 0X8C9B689E | | |
| 9 | 0XD10F3D84 | 25 | 0X2FDACE42 | 41 | 0XE458D6B7 | 57 | 0X5A21B37D | | |
| 10 | 0X8D358C42 | 26 | 0X6EABD6DC | 42 | 0X41D87AFD | 58 | 0X3B770D63 | | |
| 11 | 0XE6ACE3DE | 27 | 0X5071B039 | 43 | 0X7862292B | 59 | 0X07BD5EC0 | | |
| 12 | 0X771A29C6 | 28 | 0X0CEFCEAB | 44 | 0XCAC4B01F | 60 | 0X50021570 | | |
| 13 | 0XAE63F75A | 29 | 0XC51952F5 | 45 | 0X31AE8D69 | 61 | 0XF6F76806 | | |
| 14 | 0XBA63121F | 30 | 0XC3946575 | 46 | 0X163F4C41 | 62 | 0XF5E9F3B6 | | |
| 15 | 0X73352CA3 | 31 | 0X09EE8B00 | 47 | 0X8FD9F79C | 63 | 0X6C00345A | | |

**EP 1 244 077 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000182012 A
- US 09458018 B
- EP 1011081 A1
- WO 9967919 A
- EP 0981223 A2

**Non-patent literature cited in the description**

- **W. RANKL ; W. EFFING.** Smart Card Handbook. John Wiley and Sons, 1997, 41
- **W. RANKL ; W. EFFING.** Smart Card Handbook. John Wiley and Sons